(19) Europäisches Patentamt
European Patent Office
Office européen des brevets

(11) EP 1 869 541 B1

## (12) EUROPEAN PATENT SPECIFICATION

(45) Date of publication and mention
of the grant of the patent:
**02.07.2014 Bulletin 2014/27**

(21) Application number: **06704393.5**

(22) Date of filing: **30.01.2006**

(51) Int Cl.:
***G06F 3/033*** (2013.01)

(86) International application number:
**PCT/NZ2006/000007**

(87) International publication number:
**WO 2006/080858 (03.08.2006 Gazette 2006/31)**

(54) **Computer mouse peripheral**

Computermaus-peripheriegerät

Peripherique de type souris pour ordinateur

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.01.2005 NZ 53576605**

(43) Date of publication of application:
**26.12.2007 Bulletin 2007/52**

(73) Proprietor: **Swiftpoint Limited**
**Christchurch 8014 (NZ)**

(72) Inventor: **ODGERS, Grant Neville**
**Little River,**
**Canterbury (NZ)**

(74) Representative: **Wallace, Alan Hutchinson et al**
**FRKelly**
**4 Mount Charles**
**Belfast, Northern Ireland BT7 1NZ (GB)**

(56) References cited:
EP-A1- 0 651 315          EP-A2- 0 805 389
EP-A2- 1 063 608          EP-A2- 1 063 608
WO-A1-00/23979            WO-A1-01/84294
WO-A1-01/84294            WO-A1-90/12693
WO-A1-03/042804           WO-A1-2004/012178
GB-A- 2 328 496           GB-A- 2 328 496
GB-A- 2 336 749           US-A- 5 251 163
US-A1- 2004 032 392       US-A1- 2004 032 392
US-A1- 2004 212 587       US-A1- 2005 110 779

• DATABASE WPI Week 200237, Derwent Publications Ltd., London, GB; Class T04, AN 2002-333601, XP008114362 & JP 2002 014767 A (OKAWA) 18 January 2002
• DATABASE WPI Week 199601, Derwent Publications Ltd., London, GB; Class S02, AN 1996-004117, XP008114363 & JP 07 280577 A (SUMITOMO ELECTRIC INDUSTRIAL COMPANY)

**Description**

TECHNICAL FIELD

The present invention relates generally to a computer pointing device. Comparable known representative devices are commonly known as 'mice', trackballs, joysticks, touch screens, touch pads and the like, and are collectively referred to as pointing devices.

BACKGROUND ART

Although the forerunner of the modern computer mouse was devised over 40 years ago by Doug Engelbart, the first major commercial implementation was delayed until 1983 with the advent of the Apple Macintosh™ computer. This was followed several years later by the widespread adoption of the Windows™ computer interface with which the computer mouse became an integral peripheral. Despite this prolonged gestation period and widespread subsequent commercial utilisation, the essential design of the mouse has remained relatively unchanged since its inception.

This design stagnation is all the more striking given the rapid evolution of computer hardware and other peripheral devices in the same period. Many alternative devices have been investigated to provide an interface between the user and the computer and have met with varying degrees of success.

Nevertheless, the overwhelming majority of computers produced today still issue with a keyboard and mouse as the major human/computer interface. One reason for the longevity of the mouse design stems from its success in translating hand to eye coordination, the need for virtually no training and an intuitive interface usable by virtually all age groups.

Nevertheless, the conventional mouse design exhibits numerous disadvantages including;

-  The need for the user to remove a hand from the keyboard to manipulate the mouse, resulting in reduced efficiency and increased physical labour,

-  forcing the user's hand/arm to adopt a strained position, including the repetitive use of a single finger combined with an awkward hand grip,

-  unsuitability for use with laptop and other portable computer devices due to the need for a flat firm surface adjacent the computer,

-  difficulty in replicating the fine free-hand movements easily performed by a user with a pen or brush. Even accomplished computer users have great difficulty reproducing legible handwriting, drawing circles or the like with a mouse,

-  Scrolling over large distances or moving the mouse pointer over large areas often requires a conventional mouse to be lifted off its support surface and moved in the opposite direction to avoid running out of space. Conventional mouse designs are not conducive to being readily lifted from the surface, particularly if one of the mouse buttons is being activated simultaneously, e.g. in selecting portions of text.

Existing examples of prior art attempts to address the aforesaid have resulted in numerous patents for ergonomically shaped pointing devices including US Patent Nos. 5,576,733 and 6,072,471 to Lo (1976 and 2000 respectively) disclosing a mouse structure configured to support the user's hand in a substantially upright position with the fingers in a substantially vertical stack on an opposed side of the mouse to a thumb supporting surface.

*Lo* proposes that a conventional mouse requires constant muscular force to be applied to the hand, wrist and forearm to maintain their positions during use. *Lo* utilises a substantially conventional mouse configuration with the surface supporting the fingers and incorporating the mouse buttons rotated through approximately 80-90° in comparison with a conventional mouse. However, the mouse disclosed by *Lo* constrains the fingers to maintain a substantially extended position, preventing the relaxed, curled position of a hand at repose. Whilst this configuration may possibly address one ergonomic aspect of conventional mouse configurations, it does not address any of the remaining deficiencies outlined above. The device is incapable of controlled positioning movement solely by the thumb or from being grasped in a 'pen-like' grip to facilitate fine movement control of writing. The device dimensions required to provide a contact grip for the user's whole hand also preclude its effective use in restricted workspace environments such as on laptop computers.

US Patent No. 6,300,941 to Segalle, US 6,664,947 to Vinogradov and US 6,362,811 to Edwards et al each detail further attempts to address the ergonomic deficiencies of conventional mouse design by a combination of contoured surfaces and reorientation of the mouse buttons to provide a less stressed operating position of the user's hand during use, and incorporating at least some mouse buttons orientated along a side portion of the mouse. Whilst the ergonomics of the mice disclosed provides an improvement over some deficiencies of conventional mice, each design is still dimensioned and configured for use by the whole of the user's hand above a work surface adjacent the keyboard and as such still require the inefficiencies and ergonomic stresses of keyboard-mouse hand movements.

US Patent Application No. US2002/0101401 to Movahed seeks to overcome these difficulties by a thumb-mounted cursor control device. Cursor movement and button operation for controlling mouse function actions are received from the user's remaining fingers pressing on appropriate portions of the thumb-mounted device. The user is thus able to perform mouse control activities over the keyboard area during typing sessions without the need to displace one hand onto an adjacent mouse/mouse pad. However, accurate cursor control is difficult to achieve when performed in free space without the support of a work surface or the like. Furthermore, the device is designed to be securely attached to the user's thumb and may not be readily removed if the user wishes to undertake non-computing activities without inconvenience.

Prior art attempts to reduce the scale of a computer mouse to be controllable by the user's fingertips include US Patent Application No. US2001/0006381 to Wei, US Patent No. 6795058 to Gordon, and US Patent Application No. US2003/0160766 to Gordon. The reduced bulk of the mouse devices disclosed, together with the increased controllability and a button configuration permitting a more relaxed hand position, again provide advantages over conventional mouse design. Nevertheless, each design still requires the user to remove their hand from the keyboard to acquire the device before performing mouse operations. The orientation of the thumb engagement surface prevents stabilising the device position during operation of the mouse buttons. Moreover, despite the diminutive size of the /o device, its configuration prevents it being held in a pen-like grip with the middle finger curled under the device.

Furthermore, due to the reduced size of the devices, detecting the mouse location with the user's peripheral vision would in fact be more difficult, thus increasing the potential inefficiencies involved. Although the use of a conventional mouse cable between the host computer and the mouse does provide further visual clues to the mouse location, this electrical cable reduces the flexibility of the device in comparison to wireless embodiments. Although wireless embodiments are also disclosed, these mouse embodiments would be even more difficult to locate and may be easily misplaced amidst other user work surface items. Moreover, although it is conceivable the devices may be used over the surface of the keyboard, there is no means of retaining the mouse to the user's hand and thus it would still be necessary to move the device from the keyboard during typing or risk its interference with the typing keystrokes.

Moreover, prior art without a means of stabilizing the pointing device during activation of the mouse buttons increases the likelihood of disturbing the device position during the button 'clicking' action. As mouse buttons are often operated during activities where cursor placement is key (during selection and insertion), this is a further disadvantage.

Further prior art in the field of the present invention includes US Patent No. 5648798 to Hamling disclosing a 'hand-sized' ergonomic mouse with a top-mounted thumb-operable trackball/button and further mouse buttons vertically disposed about a front surface of the housing. The user's whole hand is thus wrapped around the mouse device with the weight of the hand bearing on a support pad projecting from the lower side of the mouse housing. Consequently, it is not possible to operate the mouse in a pen-like grip to achieve fine movement control, nor can the mouse buttons be readily operated by a pinching action between the thumb and fingers. Moreover, movement of the mouse requires the movement of the whole user's hand. US Patent No. 6,853,365 to Reid et al discloses a 'boomerang-shaped' mouse device with numerous protrusions, surfaces and mouse buttons operable in a variety of hand positions. However, the device is incapable of controlled movement solely by the user's thumb and is unsuited to movement over constricted work surfaces due to its relatively large size and modes of operation.

US Patent No 5,880,715 to Garrett discloses a pyramid-shaped mouse device which purports to provide the user with a comfortable and ergonomically advantageous hand operating position. The device configuration however prevents controlled movement of the device solely via the user's thumb, or the stabilising of the device with the thumb during operation of the mouse buttons. A pen-like grip for writing applications is also clearly incompatible with the pyramidally-shaped exterior.

PCT Patent application wo 01/84294 discloses a computer mouse that may be grasped like a pencil.

All references, including any Patents or Patent applications cited in this specification are hereby incorporated by reference. No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

It is an object of the present invention to address the foregoing problems or at least to provide the public with a useful choice. Further aspects and advantages of the present invention will become apparent from the ensuing description which is given by way of example only.

## DISCLOSURE OF INVENTION

According to one aspect of the present invention there is provided a computer pointing device as claimed in Claim 1.

Preferably, said lower surface is substantially planar. Alternative configurations may be employed however, including a surface configured with one or more convex portions. Thus, the lower surface may be formed as a single curved surface, or include a plurality of rounded or curved portions whose lowermost point collectively defining a contact plane for sliding across a work surface. In further embodiments, the device is configured such that the device may rest on said work surface supported on a plurality of contact points collectively lying in said contact plane, said contact points including either:

- one or more portions of said lower surface and distal portions of at least two said projections extending from the device, or
- at least three said projections.

Preferably, said projections include a nib stylus, spike, ridge, leg, knuckle, foot, or any other shape of configuration adapted to support the device.

In a preferred embodiment, the present invention includes:

- at lease one contact sensor;
- a movement sensor system capable of detecting device movement relative to a work surface and generating device movement information;
- a communication means capable of communicating device movement information and contact sensor signals to a computer and associated display screen to respectively provide on-screen pointer movement and input signals for software operating on said computer.

Preferably, the thumb and/or fingertip engaging surfaces are at least slightly recessed. This aids the correct positioning and retention of the user's digits in manipulating and operating the device. However, in alternative embodiments, at least one of the engaging surfaces may protrude and/or be flush with the adjacent portions of the device.

Preferably, at least a portion of said thumb-engaging surface is upward facing enabling a user to apply downward pressure to stabilise the device during activation of a contact sensor. The fingertip pressure applied by a user to operate a contact sensor may readily disturb the position of the device. This may be particularly problematic if the user is attempting to select a small object, position a text insertion point, or the like. This potential movement is aggravated if, as in embodiments of the present invention, the contact sensor axis of operation is not vertical, but at least partially lateral. Thus, by enabling the user to apply a small degree of downward pressure with their thumb, the device may be easily stabilised during such operations.

As used herein, a 'work surface' is to be interpreted broadly and not in a restricted sense and includes, but is not restricted to, a desk or table top, a surface of a computing device including the keyboard or screen, or any other convenient surface. Similarly, the terms computer, host computer, or computing device and associated display, or the like are not limited to any specific implementation and include any desktop PC, portable computer, laptop, notebook, sub-notebook, PDA, palm device, mobile phone, wireless keyboard, touch screen, tablet PC, or any other communication and/or display device and any combination or permutation of same.

The term spine includes any upright structure or features capable of being grasped between a users thumb and index finger and/or middle finger to effect device movement, projecting upwards from the base portion as a distinct feature, in contrast to a conventional mouse pointing device where the entire main body of the device extends upwards from the base perimeter. 'Engagement' as referred to with respect to thumb and fingertip engagement surfaces is used herein to denote a contact capable of moving and/or controlling the device and operating said contact sensors.

According to one aspect, the device is configured and dimensioned such that the spine may be grasped between the user's thumb and one or more fingers in a substantial neutral and unflexed position, without excessive pronation or extension. Preferably, said device is dimensioned to fit substantially within an opening between an opposed thumb and finger of a relaxed hand resting upon a work surface.

According to a further aspect of the present invention, said device is configured with a centre of mass and/or volume located between said thumb and fingertip engaging surfaces.

In one embodiment, said thumb and/or fingertip engaging surfaces are located in a plane substantially parallel to said substantially planar lower surface of the base portion.

According to a further aspect of the present invention, said thumb and/or fingertip engaging surfaces are orientated such that in use, an index fingertip placed on said index fingertip engaging surface at least partially overlaps above a middle fingertip placed on said middle fingertip-engaging surface. The device may thus be held by the user in a grip closely akin to that of grasping a pen, resulting in comfortable and relaxed manipulation of the device.

Thus, according to a further aspect of the present invention, said thumb and index fingertip engaging surface are spatially orientated and separated such that the device may be grasped in a pen-hold grip between the user's thumb and index finger, typically, though not essentially, in combination with the middle finger. Preferably, movement of the device may be controlled in two or three dimensions by a user implementing said pen-hold grip.

It will be appreciated that numerous variations are possible in the placement of the contact sensors and/or the shape and configuration of the exterior surface of the device without departing from the scope of the invention.

In one embodiment, the index finger-engaging surface is positioned above the middle finger-engaging surface.

Although the time and effort required by a user to remove a hand from the keyboard, locate, grasp and manipulate a conventional computer mouse, and return the hand to the keyboard for typing may seem minimal; these actions nevertheless form a significant time component of most computer users. Aside from the physical consequences of operating a conventional mouse as discussed more thoroughly below, the innate actions required in operating a conventional mouse impede the typing and thought process flow whilst the user's attention is at least partially distracted by acquiring the location of the mouse (even with the user's peripheral vision), moving the mouse slightly to identify the mouse cursor position on the screen, performing the mouse-operated task and then returning the user's hand to the correct position on the keyboard. Whilst the time lost by these actions may be mitigated through keyboard shortcuts, this requires the user to memorise numerous key combinations that are often unintuitive.

By retaining the pointing device of the present invention with one of the user's hands during typing, the device is immediately available for operation without any time wasted in visual and physical acquisition of the device. To be effective, an embodiment of the present invention utilised in such a role must be unobtrusive during typing and be attachable to and/or retained by at least a portion of the typing hand without discomfort to the user or being easily dislodged.

Although the device may be attached and/or retained to any individual finger or palm portion of the user's hand, the thumb particularly lends itself to this role for the following reasons:

   a) the thumb is typically used only for depressing the space bar by most keyboard users and not for pressing the remaining '<QWERTY>' keys.
   b) conventional hand positioning during typing results in the thumbs projecting towards each other at the centre of the keyboard, and typically surrounded by a small space between the adjacent fingers and the opposing hands.
   c) The tendons and muscles associated with the thumb are the strongest in the human hand and are thus best suited to withstand repetitive actions and/or additional physical strains.

Thus, according to a further embodiment of the present invention, the device includes a thumb-retaining portion associated with said thumb-engaging surface.

In a preferred embodiment, the thumb-retaining portion may include any one of;

- a lip, ridge, protrusion, or raised edge located on an opposing lateral side of said thumb engaging surface to said spine;

- an elongated (preferably at least partially resilient) ridge located along an upper and/or lower edge of the thumb-engaging surface, configured to at least partially overhang/overlap a portion of a thumb positioned against the thumb-engaging surface;

- a recess for retaining the distal phalange thumb portion, optionally with a strap or the like encompassing the thumb metacarpal region;

- an elongated aperture capable of accommodating an inserted thumb portion, optionally with a clip, strap, or the like, capable of being releasably secured about one or more portions of the thumb phalanges,

- a resilient, elastomeric and/or high friction surface,

- and/or any combination of same.

Although (as described more fully herein) the thumb-retaining portion may form a prominent portion of the device, any configuration, element or structure may be employed capable of providing lateral resistance to the movement of the thumb on the opposing side of the thumb-engagement surface to the spine, thereby causing the device to slide across the work surface in conjunction with the movement of the thumb. Lateral movement by the thumb in the opposing direction acts on the spine also causing the device to slide across the work surface. In the one embodiment, device movement across the work surface forward and rearward may be accomplished simply though the friction of the thumb on the thumb-engaging surface. However, in alternative embodiments, the thumb-engaging portion may extend about a forward and/or rearward portion of the thumb-engaging surface. Such a configuration may easily be provided for example, by a substantially oval-shaped recess.

Thus, in some embodiments, the thumb retaining portion may project from an 'upper' portion of the thumb-engaging surface adjacent, or forming part of, the spine, and overlapping the thumb from above, leaving an entry opening on the opposing non-spine side of the thumb engagement surface.

It will be appreciated the present invention is not necessarily restricted to the above thumb-retaining means and that alternative embodiments may be employed. Additional functions such as biometric security measures may be incorporated, such as a fingerprint reader located in a finger or thumb-retaining portion disabling the use of the device and/or computer unless accessed by the authorised user.

Retaining the device with the thumb provides the user with immediate availability of the mouse pointer functions. The relatively small size of the mouse pointer together with a planar underside (and preferably rounded underside peripheral edges) facilitates use of the mouse pointer directly on the surface of typical keyboard keys. This embodiment still enables the user to perform orthodox typing with the mouse pointer retained in contact with the thumb without hindering the keystrokes of the other four fingers.

It will be further appreciated that in some embodiments (e.g. a high friction surface applied to a thumb-shaped recess), the thumb-retaining portion may be coterminous with the entire thumb-engaging surface or form only a partial portion thereof for thumb retaining portion embodiments such as clips, straps or the like.

In further embodiments, the thumb-retaining portion may be adjustable to adapt to differing thumb sizes and this may be accomplished by a variety of configurations. According to one embodiment, said thumb-retaining portion is:

- a resilient and/or moveable element;

- pivotally attached at a lower end to said thumb engaging surface;

- pliable, capable of being shaped by a user;

- spring biased towards the user's thumb, or

- any combination of the aforesaid.

The adjustable thumb-retaining portion also allows a more customized tight fit of the device on the user's thumb. Moreover, it also enables the device to be effectively 'worn 'by the user. This may be accomplished by several methods including utilizing an enlarged thumb-retaining portion which encircles the user's thumb sufficiently to enable the device to be retained on the thumb when lifted from the work surface.

The thumb is typically only used during conventional typing to press the space bar and consequently an adapted keyboard with an enlarged space bar key may be used in conjunction with the present invention. This optional feature may be incorporated into purpose-designed keyboards intended for use with the present invention; or retro-fitted to a conventional keyboard design by a replacement key or snap-fitting an enlarged extension piece over the existing key. The user may thus depress the enlarged <space> key even while attached to the mouse pointer or simply use the thumb on the opposing hand.

Although numerous variations in the physical configuration of the device are possible, several factors may aid in optimising its ergonomic and performance effectiveness.

Preferably, peripheral edges of the substantially base portion underside are bevelled, rounded or otherwise configured to promote smooth sliding across uneven surfaces.

In plan view, the position of the thumb engagement surface and index fingertip-engaging surface is preferably located towards the forward tip of the device. This provides greater visibility in handwriting modes and less restriction on the index and middle fingers when being removed from the device to continue typing or similar.

The lateral width of the spine between the thumb engagement surface and the index fingertip engagement surface should be sufficiently narrow to facilitate movement and lifting of the device solely by a pinching action between the thumb and index or middle finger. Preferably, said width is substantially equal to or less than the width of a writing instrument, preferably less than 20mm. This enables a comfortable grip without causing impediment to the movement of the other fingers.

The ratio between the height of the spine above the underside of the base portion to the width of the device may affect the stability of the device, particularly when operated over uneven surfaces, e.g. keyboards. In particular, the stability of the device during such movement may be affected by the height of the spine at the points where the device is grasped or where a force is applied by the user to move the device.

Thus, in one embodiment, the perpendicular height of the thumb-engagement surface and/or the index fingertip-engagement surface from said lower surface is less than the maximum separation between said peripheral edges of the substantially planar base portion underside, i.e. the width or length of the device footprint.

Although the mouse device may communicate with the computer via a conventional electrical cable, the cable may pose a hindrance or inconvenience to use over the keyboard keys. Consequently, in one embodiment of the present invention, the mouse device employs a wireless communication means in order to transfer movement signals and commands between the computer and mouse device.

As the mouse may be operated above the keys of the keyboard, conventional roller-ball movement sensing means may be ineffective and consequently, in a further embodiment, an electro-optical sensor may be located on the mouse device's lower surface to sense movement.

While wireless communication between the device and the host computer and electro-optical movement sensing offer advantages in manoeuvrability and reduced overall dimensions, a conventional electrical cable may be used for transmitting communication and a rubber coated weighted mechanical ball for actuating rollers in the device may be used for movement sensing if desired.

In further embodiments, two or more electro-optical sensors may be employed to distinguish movement in areas with varying depths of fields, as likely in the spaces between the keys. Both the wireless data transmission technology and electro-optical movement sensor technology are well known and employed in existing computer 'mice'.

Alternative position sensing technology may also be utilised such as computer tablet pen technology. A sensor pad creates a magnetic field which is distorted by a coil in the pen or mouse device. The pen device location is calculated from the measured distortion of the magnetic field.

Ultrasonic triangulation provides a further sensing position alternative whereby an ultrasonic receiver records the time of flight (TOF) of a signal from two or more transmitters to measure the distance and position of the device(s). Known technology enables the transmission of a unique ultrasonic signal from a given transmitter with specific time and spectrum characteristics assigned to that transmitter device. The Receiver detecting the ultrasonic transmission determines the TOF to determine the distance of the transmitter from the receiver. The TOF measurements may be performed both in the analogue and digital domain. The digitization of acoustic media enables multiple devices to be operated simultaneously. The number of transducers and receivers used depends on the application and the degree of positional information required. Distance can be determined from a single transmitter and receivers, while two-dimension (2D) positional information (e.g. X, Y co-ordinates for a pointing device) may be determined from one transmitter and two receivers, or two transmitters and one receiver by well-known triangulation calculations. Three dimension (3D) positional information may be derived by addition of a further transmitter or receiver.

A further key feature of the present invention is the ability to distinguish between incidental/unintentional movements of the mouse and deliberate movement of the mouse device intended by the user to move the on-screen cursor. This capability provides several advantages, including;

- elimination of potentially distracting and irritating cursor movement resulting from typing with the mouse pointer attached to the user's hand/thumb.

- the capability to perform enhanced cursor movement and scrolling functions without needing to lift the mouse device from the support surface.

In a preferred embodiment, the mouse device includes at least one of:

- an index finger contact sensor located on said index fingertip engaging surface;
- a middle fingertip contact sensor located on said middle fingertip-engaging surface, and/or
- a thumb contact sensor located on said thumb-engaging surface.

Thus, in one preferred embodiment, said on-screen pointer movement corresponding to said device movement is only generated upon placement of an index fingertip and/or middle fingertip in contact with said index fingertip and middle fingertip-engaging surfaces contact sensors respectively.

Thus, although the device may be retained in continual contact with the user's thumb during hand movements including typing, contact with the device by a thumb alone does not activate on-screen pointer movement.

As used herein, the term "contact sensors" includes, but is not limited to sensors capable of detecting contact, buttons, switches, toggle sensors, pressure sensors, rocker switches, buttons requiring a positive force or depression to operate or 'click' to register an input, dual-action sensors capable of detecting and distinguishing between contact by a finger (i.e. touch sensors such as Faraday or capacitance sensors) and an active 'click' or depression and any other means capable of sensing an action from a user's digit and generating an action-detection input signal and any combination or permutation of same.

According to one aspect of the invention, said contact sensors are dual-action sensors including a touch sensor mode and a 'click' activation mode. Click activation is employed by the overwhelming majority of conventional mouse devices and requires a user to depress a spring-biased button through a small distance, overcoming a slight resistance and typically generating a small audible click sound. Such forms of contact sensors may also be utilised in the present invention to indicate an active 'click activation' input from the user. In an alternative embodiment, said 'click activation' and touch contact sensors are formed as separate sensors.

In further embodiments, two or more contact sensors may be located on an individual fingertip and/or thumb-engaging surface. In one embodiment, a finger or thumb touch contact and click activation are detected by separate sensors located in single fingertip or thumb engaging surface. In yet further embodiments, said index or middle finger engaging surface may include two independent contact sensors, a rocker switch or dual-position switch. Thus, the user may input different commands by appropriate adjustment of their individual fingertip position and/or pressure.

The device may thus be produced in numerous contact sensor configurations optimised for differing applications or priorities. A rocker switch or two closely spaced individual contact sensors located in the index fingertip engagement surface for example may enable the input of typical two-button mouse device commands by a single finger with minimal finger movement.

The inclusion of a contact sensor located in the thumb-engaging surface is not essential, but does provide capacity for further features and input signal combinations to the host computing device. Thus, in one embodiment, a thumb contact sensor provides an on/off control of said device according contact/non-contact respectively by the user's thumb with said thumb contact sensor. In a further embodiment, the device is configured such that click activation of a thumb contact sensor inputs a <spacebar> command.

Conventional mouse devices typically utilise two click activation contact sensors or buttons which are operated by a downward pressure from the user's fingers. This axis of operation of the buttons makes it difficult to simultaneously depress a button and lift the device from the work surface. However, in an embodiment of the present invention, at least one contact sensor has an axis of operation substantially non-orthogonal to the planar lower surface of the base portion. Thus, activating the contact sensor about such an axis facilitates pinching type actions. Moreover, by avoiding an axis of operation vertically downwards, the user is free to lift the device while simultaneously operating the contact sensor. Preferably, activating at least said index-finger contact sensor is effected by a pinching action of the spine portion between the user's thumb and index finger. Preferably, said thumb and index finger form a pen-like pincer grip when positioned to activate said index-finger contact sensor.

In a further aspect of the present invention, the device includes at least one nib portion adapted to project from the device. According to one aspect, said nib is located at a foremost point of the device. However, the nib may also be located at alternative positions about the device such as along a perimeter edge or a front of rear apex. Preferably, the nib portion is located at a distal end of a stylus shaft attached to the device. The stylus shaft may take several configurations, ranging from a small protrusion, preferably at the front of the device exterior, to a specialised, fully formed and configured pen-shaped stylus attached to the device.

The stylus shaft attachment may also vary including: attachment to the top of the spine, being formed integrally with the spine, a sliding attachment to the spine, an inclined attachment at the foremost point of the device.

In a yet further embodiment, the stylus shaft forms the device spine. Thus, one or more contact sensors may be located about the exterior of said stylus. Preferably, said stylus shaft is inclined downwards at said foremost end.

In one embodiment, said device is operable in a handwriting/freehand input mode by at least partially removing said lower surface of the base portion from the work surface

Preferably, said device is operable in a handwriting/freehand input mode by tilting the device about said nib portion. According to a preferred embodiment, the position of said stylus portion is user-variable.

According to further aspects, the present invention further includes, or is configured to interact with, a proximity sensing system capable of detecting movement of the device nib within a predetermined proximity to a predetermined work surface and to provide device movement information capable for use in generating on-screen pointer movements.

Preferably, said proximity sensing means is located in the device, the work surface, in a separate device or any combination of the above. Consequently, the proximity sensing means may be located solely in the mouse device or alternatively be used in combination with proximity sensing means in the form of a digitiser pen-type tablet located adjacent a host computer; or under a host computer keyboard, display and/or adjacent surface. Proximity sensing technology is well established, particularly by Wacom Technology Corporation, for use in pen tablets, display screens and the like and provides cordless, battery free devices that may be used with a variety of sensing surfaces. Existing digital pens systems are capable of detecting a pen up to 20mm from the surface and are capable of distinguishing pressure applied by a pen to the contact work surface. Such technologies are readily adaptable for the present invention.

According to a further aspect of the present invention, a path delineated by the nib in contact with or immediately adjacent the predetermined work surface is transcribed into a corresponding on-screen representation of said path. According to different implementations, the nib path on the work surface may also generate a direct track on the work surface either:

- by an ink-type pen fitting located on the stylus nib, optionally with an optical recognition system to interpret the writing; or

- via a work surface in the form of a display screen capable of generating an onscreen record of the nib movement. This enables a user to directly observe the effects of their hand movements in a directly comparable manner to their existing writing skills.

In the former case, the device may include an electro-optical sensor capable of inputting the written image to an optical character recognition (OCR) program for interpretation and display on a host computer display.

In a yet further aspect of the present invention, said base portion may include a middle finger recess or slot, shaped to accommodate a portion of the middle finger when the device is used in said handwriting/freehand input mode.

In one embodiment, said middle finger recess is formed in or through said device base portion extending inwards from a rearward or lateral peripheral base portion edge.

In a further embodiment, an upper surface of the middle finger may be supported against a rearward lateral middle finger recess formed in the spine/base portion during use in said handwriting/freehand input mode. In a yet further embodiment, said rearward middle finger recess is configured to allow the middle finger to at least partially extend below the thumb during handwriting/freehand input mode.

The present invention may be produced in versions optimised for left or right-handed users and/or in ambidextrous embodiments. Preferably, said ambidextrous embodiments are substantially symmetrical about the mid point of the spine about a transverse axis orthogonal to the longitudinal axis of the spine.

In one embodiment, the respective control signals associated with the index fingertip and middle fingertip contact sensors are reversible to permit use of the device in the user's right or left hand.

It will be appreciated the present invention is not restricted solely to mouse device itself, but also to the associated keyboard, display screen and computing device, all of which may be specifically adapted to interface with the mouse device. Furthermore, according to a further aspect, the present invention resides in computer software capable of implementing features of the mouse device.

Thus, according to one aspect, the present invention provides a keyboard, adapted to interface with a mouse device, substantially as described herein. In one embodiment, said keyboard includes a <spacebar> key sufficiently enlarged to be operated by a user's thumb pressing on said device without overlapping any adjacent keyboard keys. In alternative embodiments, the keyboard is configured without a <spacebar> key, with <spacebar> commands being generated solely by activation of a thumb contact sensor located device on said thumb engagement surface.

According to a further aspect, said keyboard includes a truncated (preferably half-width) <spacebar> key, preferably positioned asymmetrically from the keyboard centerline. This allows the user to operate the truncated <spacebar> with one their free hand, while operating the device with the other hand. However, such a design is less adaptable between left and right-handed users.

Consequently, in a further embodiment, said keyboard includes a (preferably full-sized) <spacebar> key with two selectable portions positioned equidistantly about a keyboard centerline. The user may configure one of said selectable portions to be deactivated while the other portion remains operable as a <spacebar> key, thus customizing the keyboard to user's operating the device with either hand.

Known keyboards also provide keys with configurable portions which can be used to display alternative keystrokes than the default QWERTY key symbol marked on the key. Such technology may be readily incorporated into the present invention. In particular, by configuring the host computer to be aware when the user is deliberately holding the mouse device, e.g. by placing the index or middle fingertip in contact with their respective contact sensors, it may be inferred the user has stopped typing conventional text entry.

The configurable keys may utilise several means such as illuminable portions, individual LCD displays, or any other suitable electro-optical technologies.

Thus, the appearance of portions of the keyboard may be altered to display alternative keys or actions appropriate to non-text entry. For example, the standard cursor navigation keys may be eliminated from the keyboard and replaced by any convenient QWERTY text keys with illuminable arrow-shaped portions. When the user stops typing and contacts the index or middle finger contact sensor, the device signals to the computer the change in mode (to a pointer navigation mode) and thus activates the illuminated portions located on certain keys. These keys may represent any desired function likely to be accessed by the user when not typing text, such as navigation keys (line up, down, page up etc), hotkeys to websites, media players, volume controls, web browsers and the like. Placing the illuminated keys on the non-mouse hand side of the keyboard enables efficiencies in operation, while the opposing hand is using the mouse device. Responsive toolbars relevant to the context of the application may also be opened onscreen, when the device is placed in a pointer navigation mode.

In yet further embodiments, a keyboard may be generated virtually on a screen display, preferably a touch screen. Such screen-based virtual-keyboards are particularly suited for use in applications with restricted space for a conventional physical keyboard (PDAs, tablet PC, ultra portables, mobile phones and the like), and/or environments where a user needs to hold the computer/screen with one hand during use.

A virtual keyboard is software generated and may be operated with a mouse device or pointing device to select individual keys. Virtual keyboards displayed on touch screen may also be accessed directly by conventional finger taps. Thus unlike a conventional pen device, a user may type and operate the mouse device without needing to place the device down whilst typing. In one embodiment, the keyboard is displayed a predetermined distance from the location of the device, thus enabling the keyboard to remain within a constant distance from the user's thumb facilitating efficient typing. Alternatively, the keyboard may remain fixed in one location on screen. In a further embodiment, the keyboard size is variable, and may be increased (preferably doubled) to permit a user with two free hands to type with both hands on the enlarged keyboard. According to one aspect, the keyboard is semi-transparent and remains on the screen until the index finger activates the index finger contact sensor.

It will be appreciated that different touch screens types are available, configured to generate an on-screen interaction by either passively detecting direct physical contact with an object (though usually a stylus is used) or via a dedicated active proximity sensing system such as employed in devices from Wacom Technology Corporation. In the former case, passive touch screens may be configured to disable input from screen contact in certain modes of operation such as pointer navigation mode where the device is operated on the screen itself. Similarly, during user typing directly on a touch screen, the portions of the screen outside the keyboard area may be disabled to prevent inputs from the user's hand resting on the screen or the like. According to one aspect, the present invention provides a display screen control method for a computer having inputs from a pointing device substantially as hereinbefore described, said inputs including contact sensor signals and/or device movement information for generating onscreen pointer movement.

Preferably, said contact sensor signals input generated by any one of;

- touch contact;
- touch and held (herein denoted as a *'touch hold'* input);
- touch and released from user contact (herein denoted as a 'soft *click'* input);
- touch and click activated and released from click activation position (herein denoted as a *'click', or 'hard click'* input),
- touch and click activated and held in click activation position (herein denoted as a *'click selection', or hard click selection'* input).

According to one embodiment, said device movement only generates onscreen pointer movement when a user performs a *touch hold* input to the index finger and/or middle finger contact sensor. Preferably, a *soft click* input from one of more contact sensors generate a predetermined QWERTY keyboard key input. Said predetermined QWERTY keyboard input may be user-definable, preferably for high importance and/or frequently accessed command keys such as <TAB>; <BACKSPACE> and/or <ENTER> keyboard inputs.

It will be readily appreciated by one skilled in the art that the present invention keyboard need not necessarily be used solely with a QWERTY key layout and that any keyboard characters and/or layout may be utilised if desired. Furthermore, the keyboard layout may be configurable to change dynamically and so be customized contemporaneously for different applications and/or the context of allowable inputs relating to the user's current activities. For example while in a graphics / painting program the keyboard might show commands (or icons) that allow different brush or colour selections, or if the cursor is in a field that only accepts numbers, only a numeric keypad would be shown.

Preferably, a *soft click* input from one of more contact sensors generate one or more onscreen toolbars, and/or re-maps the one or more keyboard keys to a new function. The new function includes any known computer input command, including, but not limited to navigation keys, website links, search engine links, media players, volume controls, web browsers, and/or screen zoom controls. In a further embodiment of said method, said re-mapping illuminates illuminable portions, or reconfigures configurable display portions of one of more re-mapped keys.

In one embodiment, said method may be implemented such that:

- *a hard click* input from one or more contact sensors generates an onscreen pointer selection mode. and that

- user activation of a thumb contact sensor generates a virtual onscreen keyboard.
- said thumb contact sensor activation is a either a *touch hold* input or a *hard click selection'* input
- said keyboard is displayed a predetermined distance from the position of the device over the display screen surface.
- the keyboard is semi-transparent and remains on screen until the index or middle finger contact sensor is activated

Preferably, said method may be further implemented such that said device operates in a digital ink mode upon activation of a predetermined input from a user including at least one of:

- tilting said device such that said lower surface is non-parallel with the work surface;
- tilting said device about at least one nib portion projecting from the device;
- activating a contact or proximity sensor in a nib portion projecting from the device;
- activation of a dedicated switch on said device or said computer.

After activation of digital ink mode, an onscreen track is produced by application of pressure on the nib by contact with the work surface. Lifting the nib ceases the onscreen track, thereby enabling digital handwriting to be performed replicating conventional writing.

A further aspect of the present invention, includes a display screen control method for a computer having inputs from a mouse device, said inputs including contact sensor signals and/or device movement information for generating onscreen pointer movement wherein said device movement information is generated from both linear and rotational device movements relative to a work surface, producing corresponding linear and rotational on-screen pointer movement. Preferably, said pointer is capable of performing selection and input actions of known conventional onscreen computer pointers.

Preferably, said pointer is elongated with a major longitudinal axis, and wherein in combination with one or more predetermined contact sensor inputs said rotational on-screen movements are capable of selecting onscreen objects and text located co-axially with said major pointer axis and/or in an arc transcribed by the rotation of said elongated pointer. It will be appreciated other pointer shapes may be utilised, though an elongated 'narrow' or stick configuration provides superior visual cues to improve the user's efficiency in selecting portions or objects on the screen.

Preferably, said elongated pointer extends substantially orthogonally from a said device when used on said screen display as a work surface. Such a configuration is ideally adapted for embodiments where the work surface is a touch screen display.

As previously discussed, operating the device directly on a touch screen requires either a passive touch screen, configured to disregard inputs from screen contact except when in the device is in digital ink mode, or to utilise an active proximity sensing (Wacom) type screen which does not react to physical contact, but only the proximity of the dedicated sensor. Alternatively, the mouse device may be located on a conventional work surface, such as a mouse pad or the like. In such embodiments, the onscreen pointer is generated in a conventional manner. Preferably, said pointer is elongated with two ends, having an arrowhead at one distal end, and a substantially circular symbol at the other end.

Activation of the rotational virtual pointer may be achieved by numerous methods, including activation of dedicated device contact sensor, or a combination of inputs from existing contact sensors. Alternatively, the rotational pointer may be used as the permanent or default pointer and thus not require a specific means of activation.

According to a further aspect, the present invention provides a display screen control method for a computer having inputs from a pointing device, said inputs including contact sensor signals and/or device movement information for generating onscreen pointer movement, said device movement information sensed from device movement relative to a work surface, characterised in that said method providing a document scrolling and/or zooming mode including:

- activation of said scrolling or zooming mode by at least one predetermined user input from

  ■ a contact sensor;

  ■ device movement; and/or

  ■ the computer.

- defining a locked scrolling or zooming direction from at least one user input from said device and/or computer;
- performing scrolling or zooming in said locked direction, said scrolling or zooming being proportional to distance travelled by said device relative to the work surface irrespective of direction.

Preferably, said method is configurable such that user activation of the scrolling or zooming mode is by at least one of;

- placing a nib portion located on said device in contact or immediately adjacent the work surface;
- activation of at least one keyboard input to the computer;
- applying pressure to the work surface via a nib portion located on said device;

- activating a dedicated contact sensor on the device;
- tilting said device such that its lower surface is non-parallel with the work surface;
- tilting said device about at least one nib portion projecting from the device;
- performing a predetermined device movement,
- audio or visual activation from a specific sound, or action using audio and/or visual recognition software and hardware on the host computer.

It can thus be seen that a wide variety of triggering actions may be used to instigate the scroll/zoom mode, even including. the performance of a particular device movement, e.g. 'two clockwise circular rotations. In one embodiment, the method steps of said mode activation and defining a locked scrolling or zooming direction are performed by the same user action or input.

Preferably, said device is a device substantially as hereinbefore described. However, it will be appreciated that alternative pointing devices may be used, including known mouse and pen pointing devices. Conventional two-button mice (with or without a nib portion) or digital pen pointing devices may be used, though it has been found that such devices display significant limitations in comparison to the present invention device.

According to one embodiment, locked scrolling in a user-specified direction is defined by device movement performed in said user-specified direction, preferably for at least a predetermined distance.

Although scrolling may be defined by a variety methods, such as a specific contact sensor input, moving the device (initially) in the desired scrolling direction is easier for a user to remember than specific contact sensor inputs and more intuitive.

Thus, if a user wishes to lock scrolling in the downward direction for example, they simply move their device downward after activating the scroll mode. After the device has travelled the predetermined distance (preferably made relatively short, sufficient for the computer to identify the specified direction) in said user-specified direction, any movement of the device is translated into downward scrolling. The user may thus perform the most ergonomic and comfortable movements according to their own personal preferences to scroll the document downward. Performing rotational movements typically provides users with the greatest degree of comfort and control during locked scrolling and is readily accomplished with the present invention.

In a preferred embodiment, said locked scrolling mode is maintained by continual activation of at least one device contact sensor. Thus, for a device provided with a nib point incorporating a contact sensor (such as a pressure sensor), the scroll mode may be activated by contacting the work surface (or otherwise activating the nib point sensor) and thereby initiate the process of defining the direction of locked scrolling by further contact sensor input (or combination of inputs), such as a click activation of the nib point contact sensor for example.

The computer would then remain in locked scrolling until the nib pointer was lifted from the work surface. It will be appreciated there are numerous input variants that may be configured to trigger the scrolling mode and definition of the scrolling direction and the present invention is not limited to any specific configuration.

In a further embodiment, the direction of locked scrolling or zooming may be reversed by at least one predetermined user input from:

- a contact sensor;

- device movement;

- the computer.

- or combination of same.

According to one aspect, said locked scrolling direction is reversed by resolving said device movement into mutually orthogonal axis (herein referred to as X-axis and Y-axis) and reversing said locked scrolling /zooming direction upon detection of a simultaneous reversal of movement in both X and Y axis.

Alternatively, said locked scrolling direction is reversed by detecting a stoppage in device movement followed by device movement along a reciprocal path to that prior to said stoppage.

Thus, the user may for example, initially perform rotational device movements in either clockwise or anti-clockwise directions to perpetually scroll the document without reversing the locked direction. However, by instantaneously reversing the direction of rotation, the movement in both the x and y axis will be reversed, thus triggering a reversal of the locked scrolling direction. Again, other direction reversal triggers may be configured, though the above configuration is suited ergonomically to humans and essentially mimic operating a 'virtual' jog dial or rotary control familiar to many users.

Defining the direction for locked zooming may be considered less intuitive than for scrolling given zooming doesn't possess a physical direction in the plane of the screen which can be used in defining the locked zooming direction. Nevertheless, the above-described techniques may still be utilised; only differing in the need to define more arbitrary device movements to correspond to zooming in, and to zooming out. Thus, in one exemplary embodiment, a locked zooming direction is defined from at least one user input from said device such that a device movement downwards or to the left (and/or in any movement between these directions) defined zooming out and device movement upwards or to the right (and/or in any movement between these directions) defines zooming in.

According to a yet another aspect, said defining a locked scrolling or zooming direction also includes at least one further user input from said device and/or computer including a rapid device movement in a predetermined direction to scroll the document to the full extend allowable in said predetermined direction. Thus, the document may be scrolled to the first or last page by performing a rapid 'flick' action with the device.

The present invention is thus embodied in several forms including a novel pointing device incorporating advantageous handling qualities and ergonomics in operating the device contact sensors, a means of operating over keyboards and other non-standard work surface, together with a virtual rotary pointer and perpetual scrolling/zooming modes that individually and in combination offer distinct advantages over the prior art.

**BRIEF DESCRIPTION OF DRAWINGS**

Further aspects of the present invention will become apparent from the following description which is given by way of example only and with reference to the accompanying drawings in which:

| | |
|---|---|
| Figure 1a | shows a plan view of a first preferred embodiment of the present invention of a computer pointer device; |
| Figure 1 b | shows a left-side elevation of the embodiment shown in Figure 1a; |
| Figure 1 c | shows a right-side elevation of the embodiment shown in Figure 1a; |
| Figure 1 d | shows a frontal elevation of the embodiment shown in Figure 1a; |
| Figure 1 e | shows a rearward elevation of the embodiment shown in Figure 1a; |
| Figure 1 f | shows a front/right view of a further preferred embodiment of the present invention; |
| Figure 1 a | shows a right-side elevation of the embodiment shown in Figure 1f; |
| Figure 1 h | shows a rearward elevation of the embodiment shown in Figure 1f; |
| Figure 1 i | shows a left side elevation of the embodiment shown in Figure 1f; |
| Figure 1 j | shows a frontal elevation of the embodiment shown in Figure 1f; |
| Figure 2 | shows the device shown in Figure 1f with a user's thumb engaged in a thumb engaging surface; |
| Figure 3 | shows the device as shown in Figure 2 also engaged with the user's index finger; |
| Figure 4 | shows the device shown in 1f in use during typing over a keyboard |
| Figure 5a | shows the embodiment as shown in Figure 4 with the user activating the device with thumb, forefinger and middle finger; |
| Figure 5b | shows a further embodiment with a keyboard with a truncated spacebar; |
| Figure 6 a-f | shows a further embodiment of the |

| | |
|---|---|
| | present invention with a shortened nib/stylus, and a middle finger recess in the base; |
| Figure 7a-b | show prior art illustrations of the user holding a conventional pen; |
| Figure 8 a-b | show further embodiments of the present invention held in the user's right hand in handwriting mode; |
| Figure 9 a-c | show further embodiments of the present invention with an extended nib/stylus portion; |
| Figure 10 a | shows a perspective view of the present invention in the form of a symmetrical, ambidextrous device; |
| Figure 10 b | shows a plan view of the embodiment shown in Figure 10a; |
| Figure 10 c | shows the embodiment shown in Figure 10a engaged for use with a user's right thumb; |
| Figure 11a-c | shows the embodiment of Figure 10 in conjunction with a conventional mouse cable; |
| Figure 11d - 12b | shows the embodiment of Figure 11 in use; |
| Figure 13 a-b | shows a further embodiment of the present invention in left and right hand perspective views; |
| Figure 14 a | shows a further embodiment of the present invention; |
| Figure 14 b | shows a further embodiment of the present invention; |
| Figure 15 a | shows a right / rear side perspective elevation of a further preferred embodiment of the present invention; |
| Figure 15 b | shows a left / front side perspective elevation of the embodiment shown in Figure 15a; |
| Figure 16 a-e | show a retractable stylus from the embodiment shown in Figures 15a-b, in successive stages of deployment; |
| Figure 16 f | shows an enlarged scrap view of the button mechanism shown in figures 16 a-e. |
| Figure 17 a-b | show perspective views of the embodiment shown in Figure 15a-b operating in a'pointing' mode; |
| Figure 18 a-b | show perspective views of the embodiment shown in Figure 15a-b operating in a 'digital ink' writing mode; |
| Figure 19 a | shows a rear right side perspective elevation of a further preferred embodiment of the present invention; |
| Figure 19 b | shows a front side perspective elevation of the embodiment shown in Figure 19a; |
| Figure 19 c | shows a front left side perspective elevation of the embodiment shown |
| | in Figure 19a-b; |
| Figure 20 a | shows a front/left view of a further preferred embodiment of the present invention; |
| Figure 20 b | shows a right-side elevation of the embodiment shown in Figure 20 a; |
| Figure 20 c | shows a frontal elevation of the embodiment shown in Figure 20 a; |
| Figure 20 d | shows a top plan view of the embodiment shown in Figure 20 a; |
| Figure 20 e | shows an underside plan view of the embodiment shown in Figure 20 a; |
| Figure 20 f | shows a rearward elevation of the embodiment shown in Figure 20 a; |
| Figure 21 a | shows a perspective rear view of a further preferred embodiment incorporating an adjustable thumb-retaining portion; |
| Figure 21b | shows the embodiment of 21 a in use with a user's thumb engaged in the thumb-engaging portion; |
| Figure 22 a-b | show front and rear perspective views of a further embodiment with an enlarged thumb retaining portion; |
| Figure 22 c | shows the embodiment of figures 22a-b in use with a user's thumb retained by the thumb-retaining portion; |
| Figure 22 d | shows a perspective rear view of a further embodiment with a strap thumb retaining portion; |
| Figure 22 e | shows the embodiment of figure 22d in use with a user's thumb retained by the thumb-retaining portion; |
| Figure 23 a | shows a rear perspective view of a further embodiment incorporating an enlarged fixed thumb retaining portion and a duel position rocker switch; |
| Figure 23 b | shows the device showing 23a in use; |
| Figure 24 a-b | shows a keyboard optimized for use with the present invention with configurable keys e, d, s, f containing illuminable portions; |
| Figure 25 a-c | shows_further embodiments of the present invention including a portable host computer including a folding display and a recess for accommodating the pointing device. |
| Figure 26 a-b | show further embodiments of the present invention incorporating a screen display incorporating a virtual keyboard; |
| Figure 27 a-c | shows further embodiment of a pointing device incorporating a virtual on-screen pointer stick projecting laterally from the device; |

| | |
|---|---|
| Figure 28 a-b | show the on-screen virtual pointer stick shown in figure 27, displayed independently of the pointing device; |
| Figure 28 c-d | show off-set calibrations for the on-screen virtual pointer stick shown in figure 27; |
| Figure 29 | shows a conventional two-button mouse incorporating the scrolling nib pointer; |
| Figure 30 a-b | shows the embodiment of the present invention shown in figure 23, in use in document navigation and perpetual scrolling mode; |
| Figure 31 | shows a cross-hair spiked ring cursor; |
| Figure 32 | shows a flowchart of screen interface control flowchart; |
| Figure 33 | shows a flowchart of a scroll mode according to a further embodiment; |
| Figure 34 | shows a spiked ring cursor; |
| Figure 35 | shows a further view of the spiked ring cursor of figure 34 and exemplary nib point track; |
| Figure 36 | shows a further nib point track and a further view of the spiked wheel cursor in the horizontal scroll position; |
| Figure 37 a | shows a nib point track undergoing a back track movement; |
| Figure 37 b | shows the nib point track undergoing a change of rotation direction without undergoing a back track feature; |
| Figure 38 a-c | shows a web document screen scrolling in accordance with an embodiment of the present invention; |
| Figure 39 | shows a low diagram representing a zoom mode according to the present invention; |
| Figure 40 | shows a zoom mode screen cursor; |
| Figure 41 | shows an exemplary nib point track associated with a zoom mode operation; |
| Figure 42 a-c | shows the screen cursor for figure 40 undergoing successive rotation about a cross-hair axis; |
| Figures 43 a-f | show computer window screen shots, those creating zoom control features according to the present invention, and |
| Figure 44 | shows a tiled document displayed in accordance with zoom mode features of the present invention. |

## BEST MODES FOR CARRYING OUT THE INVENTION

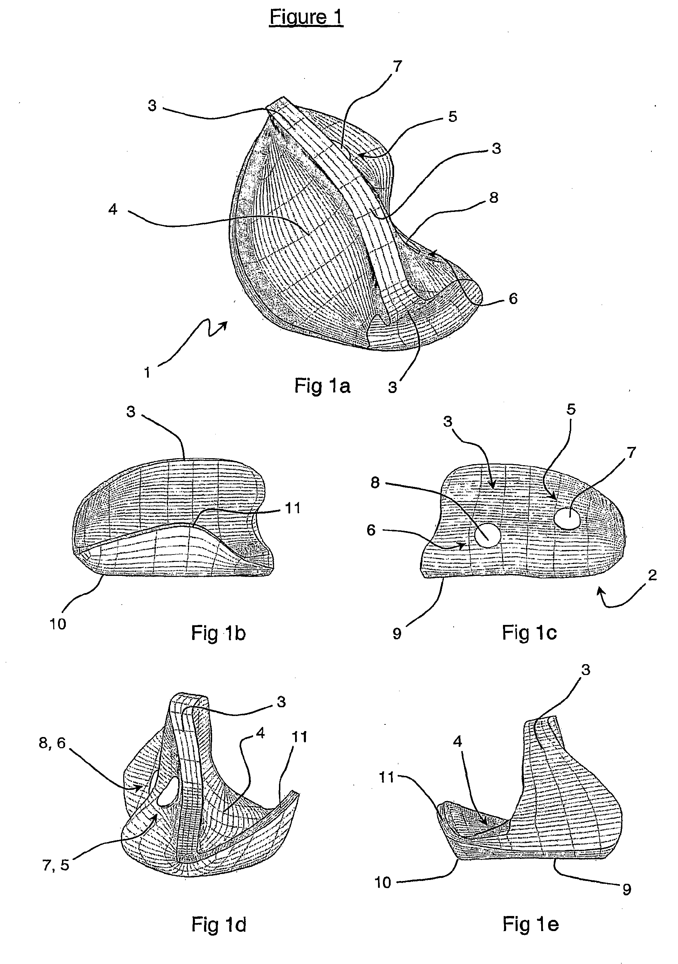

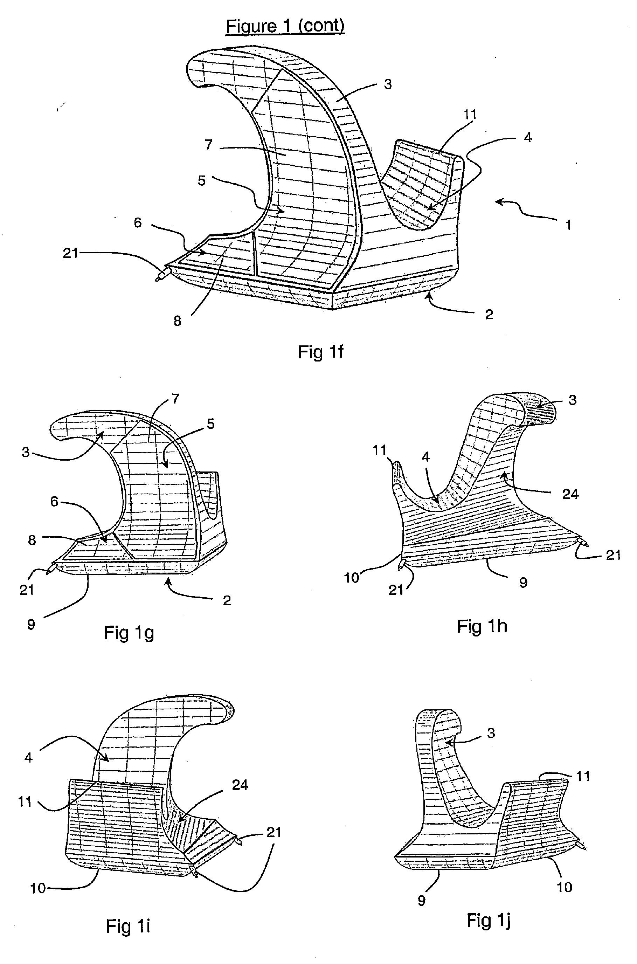

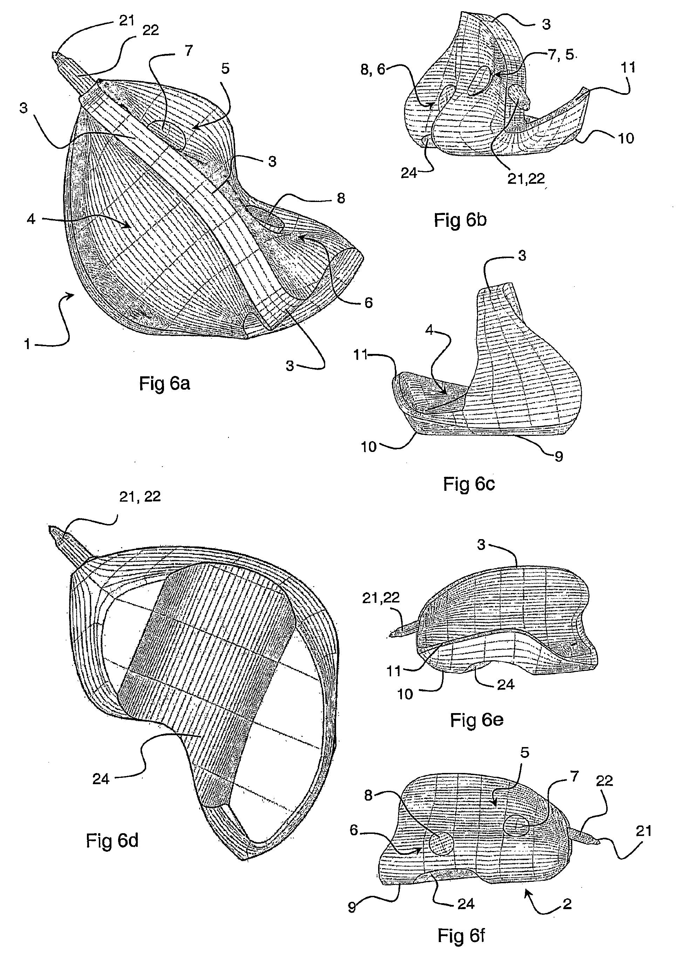

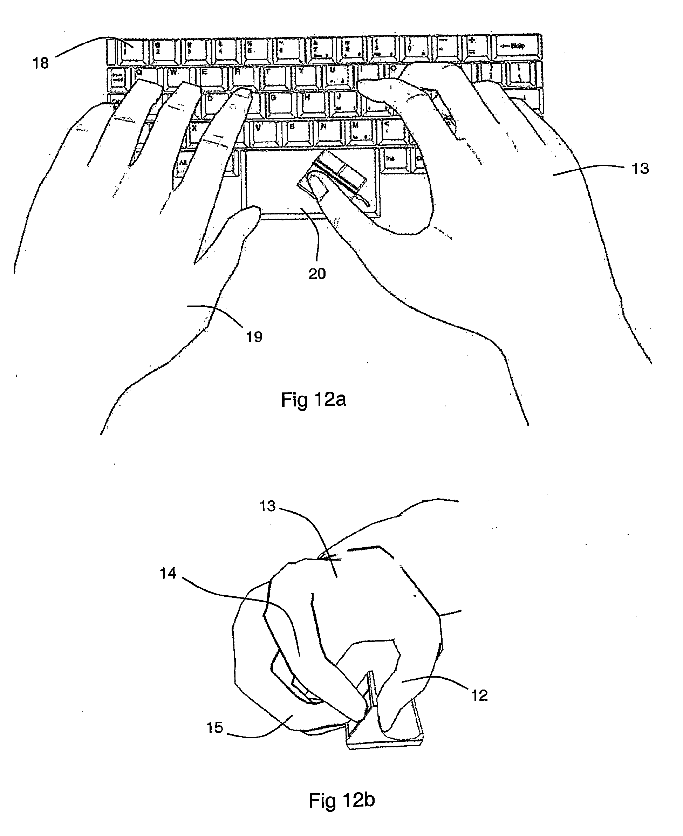

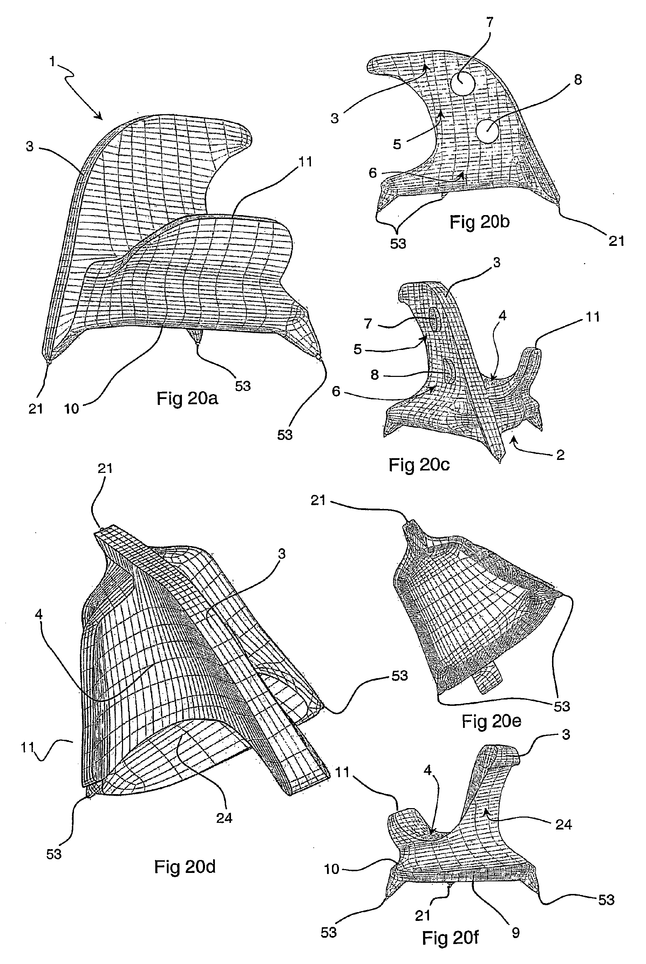

Figures 1-23 show preferred embodiments of the present invention of a computer mouse input device configured with a base portion (2) having a substantially planar lower surface (with the exception of the embodiments shown in figures 6 and 20) and a spine portion (3) projecting substantially upward from the base portion (2). The embodiment demonstrated in figures 1-5 shows a device (1) optimised for use by a right-handed user and includes an elongated thumb-engaging surface (4) on a first lateral side of the spine portion (3) and an index fingertip-engaging surface (5) and a middle fingertip-engaging surface (6) located on an opposing lateral side of spine (3) to the thumb-engaging surface (4). Alternative embodiments configured for left-handed users and ambidextrous embodiments are also possible as described more fully below. Contact sensors (7, 8) are located in the index fingertip-engaging surface (5) and a middle fingertip-engaging surface (6) respectively. In the embodiment shown, the sensors (7, 8) are dual-action sensors capable of detecting and distinguishing between contact by a finger and an 'active' click or depression as per a conventional mouse button. Alternative sensor/button types and configurations are however possible and the invention is not restricted the embodiment shown in the drawings. To aid a comparison of the present invention, with a conventional mouse, the two contact sensors (7, 8) are also referred to as the left and right buttons (7, 8 respectively). It will also be appreciated that the presence of a single separate index fingertip-engaging surface (5) and a middle fingertip-engaging surface (6) on the opposing lateral side of spine (3) is also purely exemplary. As an example, the device may be configured with a single fingertip-engaging surface; contactable by either the index or middle fingertip, or alternatively, the device may contain a plurality of fingertip-engaging surfaces, enabling the user to choose which fingertip to use and its position.

It will be noted the majority of embodiments of the present invention involve a number of highly contoured and/or complicated shapes which do not readily lend themselves to simple line drawings. Thus, the figures accompanying the present invention include a hatching effect to illustrate the device (1) configurations and associated contours and surfaces. The hatching does not form any part of the invention and is purely for illustrative purposes.

The embodiments illustrated in figures 1-20 further includes optical sensors (not shown) on the underside (9) of the base (2) capable of sensing the relative movement of the device (1) across a supporting surface (not explicitly shown). Such optical sensors are known for use with computer mice and are typically used in conjunction with an LED to illuminate the support surface sufficiently for optical detection of mouse movement. Any detection of relative movement over a support surface by the optical sensors and/or activation of the contact sensors (7, 8) may be transmitted to a host computer (such as a personal computer (PC), laptop, notebook computer or the like (not shown)) by any convenient electrical transmission means.

Embodiments of the present invention used over uneven or irregular surfaces (e.g. over the keys of a conventional keyboard) may employ two or more optical sensors with differing focal lengths or a single sensor with a sufficiently deep field may obviate the need for a further sensor. This would ensure the optical tracking mechanism remains operable, receiving continuous movement data despite variations in the sensor-support surface separation. The device (1) may be configured to disable on-screen pointer movement when lifted off the support surface.

In a preferred embodiment, the device (1) includes wireless radio or acoustic transmission data-link with the PC enabling the use of the device (1) over a range of support surfaces without physical interference or any restriction of movement from a conventional mouse cable.

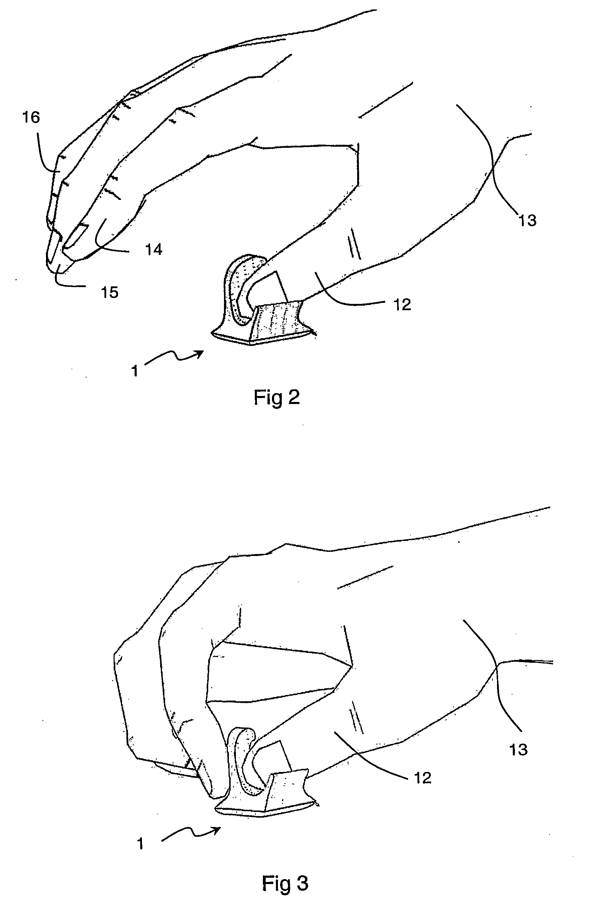

The configuration of the thumb-engaging surface (4) plays an important role in the functioning of the device. A thumb-retaining portion formed from an appropriately tactile and/or shaped surface portion of the thumb-engaging surface (4) permits the user's thumb to be maintained in contact with the device (1) during typing and/or positioning movement of the device (1). This places the device (1) at instant readiness for the user without need to remove the hand from the keyboard, visually locate and physically acquire the mouse before performing any mouse-driven operations. The thumb-retaining portion of the embodiments shown in figures 1-23 differ significantly in visual appearance, though each still provides the common capability of retaining the thumb to the device (1) during positioning movement and/or typing. The embodiments shown in figures 1a-e), 6 a-f), 8a-15b) are at least partly configured as a slight 'cupping' shape of the thumb-engaging surface (4), whereby the longitudinal perimeter (10) of the base (2) forming an edge of the thumb-engaging surface (4) is provided with a raised lip (11) to engage with the left side of the user's right hand thumb (12). The embodiment shown in figures 1 f-j) is configured with a significantly enlarged lip portion (11) with a greater upward projection extension, thereby providing greater retention with the user's thumb (12) (as shown in figures 2 and 3). Thus the spine (3) and the generally opposed lip (11) cause the thumb (12) to be retained in contact with the device (1) during the relatively small movements typically performed by the right hand (13) during typing. Naturally, other configurations of thumb-retaining portions are possible, including an elongated (preferably at least partially resilient or pliable) ridge or lip formed located along an upper edge of the thumb-engaging surface (preferably the uppermost periphery of the spine (3)).

Alternative thumb retaining portion configurations include;

- a recess for retaining the distal phalange thumb portion, optionally with a releasable strap or fastening encompassing the thumb metacarpal region,

- an elongated aperture capable of accommodating an inserted thumb portion,

- a clip, strap, fastening or the like, capable of being releasably secured about one or more portions of the thumb phalanges, and/or

- a resilient, pliable, elastomeric and/or high friction surface.

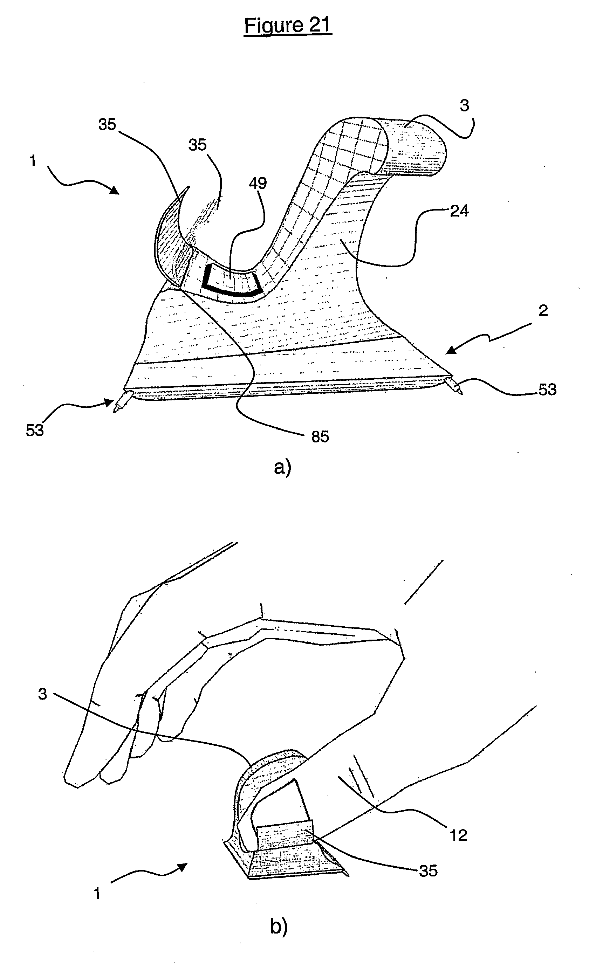

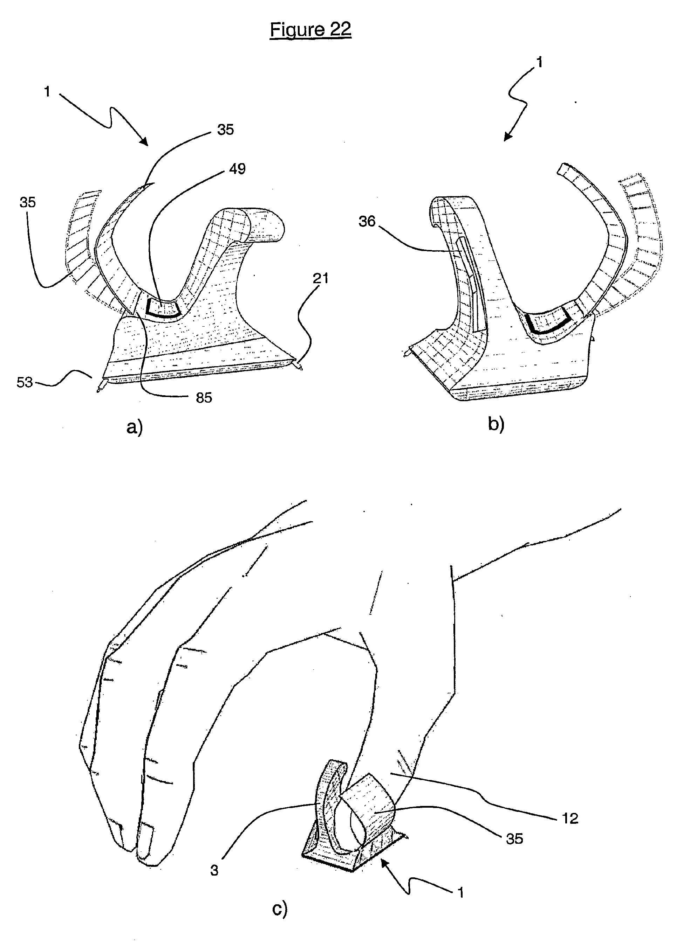

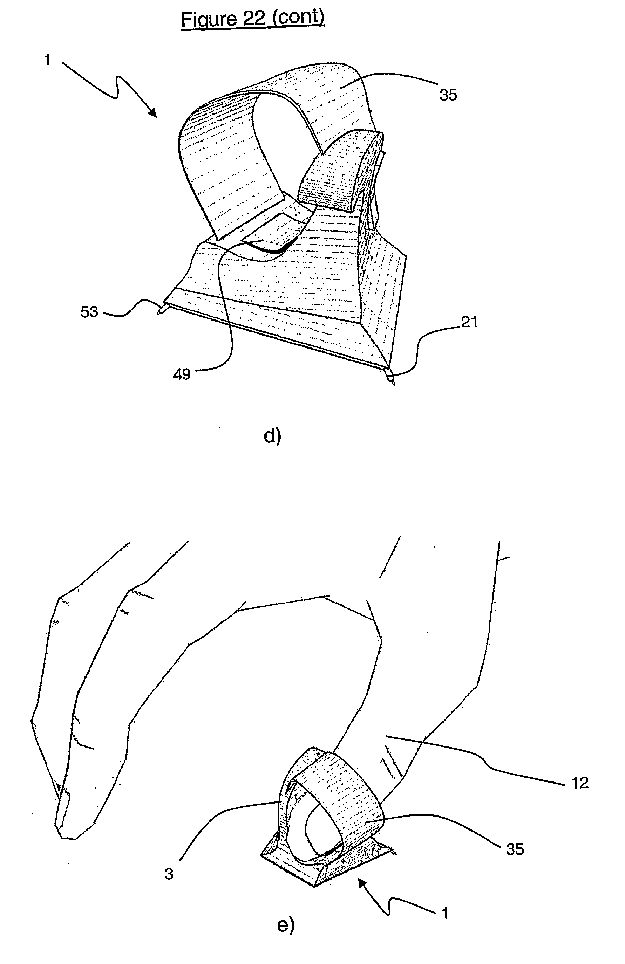

Figure 21 and 22 show a further embodiment of the device (1) with further thumb retaining portion configurations providing a customisable fit for thumbs (12) of differing sizes and personal preference. Figure 21a) shows the device (1) with a thumb retaining portion formed from a semi-elastic curved cuff (35) located on the opposing side of the thumb engaging surface (4) to the spine portion (3). The cuff (35) may be moved (shown in outline in figures 21 a), and figure 22 a-b)) towards or away from the user's thumb (12) to achieve a customised fit to the individual user. In some embodiments, the cuff (35) may be hinged about its attachment point (85) to the thumb engaging surface (4) and (optionally) spring biased towards the spine portion (3). Alternatively, the cuff (35) may be fixed and constructed from a pliable, material. Figure 21b shows the device (1) with a user's thumb (12) partially encompassed by the cuff (35) with the remaining user's fingers (14, 15, 16, 17) free for typing or the like.

Figures 22a) and b) shows a variant in which the adjustable cuff (35) is further enlarged so as to more fully encompass the user's thumb (12) (as shown in figure 22(c)). The enveloping nature of the enlarged cuff (35) extending at least partially over the upper thumb surface permits the device (1) to be retained on the user's thumb (12) even when the hand is removed from the working surface. Thus, the user does not need to visually re-acquire the device (1) and reposition their thumb (12) into the thumb-engaging surface (4) between non-keyboard activities. Figure 22b) also shows an embodiment whereby the function of conventional left and right mouse buttons (7, 8) are replaced by a single rocker switch (36) located on the opposing side of the spine portion (3) to the cuff (35).

Figure 22d shows a further embodiment in which the thumb retaining portion is formed as from a resilient or elastic cuff/strap (35) attached to the device (1) at both the upper edge of the spine (3) and the outer edge of the thumb engagement surface (4). Figure 22e) shows the user's thumb (12) inserted within the cuff (35) thereby retaining the device (1) securely to the user during hand movements.

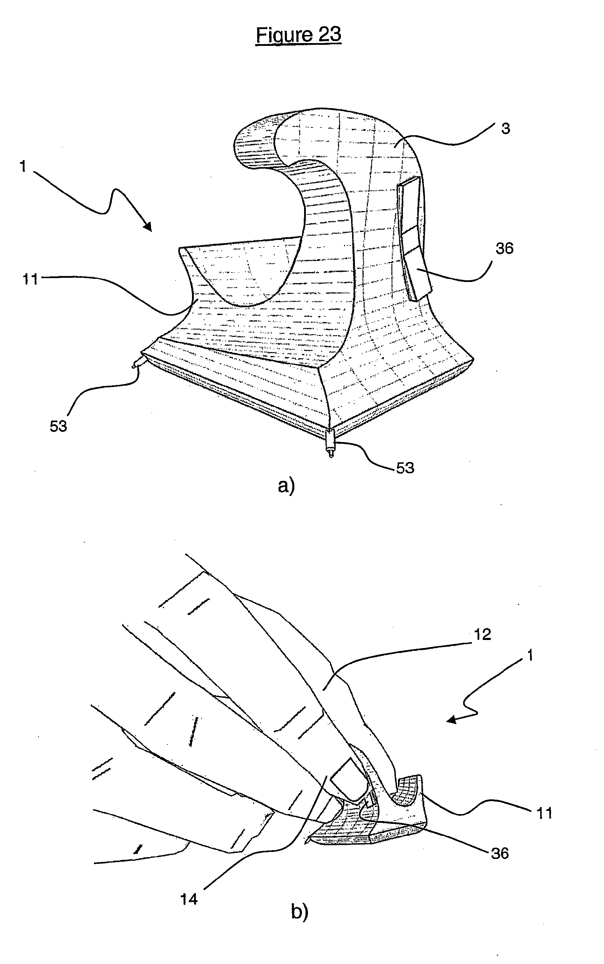

Figure 23 more readily shows the rocker switch (36) mounted on a further embodiment of the device (1) with a fixed thumb-retaining portion in the form of an extended raised lip (11). Figure 23(b) shows a user accessing the higher portion of the rocker switch (36) which may be configured to function in a complimentary manner to the left mouse button (7), whilst the upper portion of the rocker switch (36) fulfils the role of the right mouse button (8). It will thus be appreciated that both left and right button inputs (7, 8) may be operated by a single finger tip, preferably the index finger (14).

Yet further alternative configurations are possible to retain the device (1) to the thumb during typing and as such fall within the scope of the invention. Depending on the configuration used, the degree of retention and ease of engagement/accessibility may be varied from a device (1) that is essentially worn on the user's thumb (12) to a configuration enabling the thumb (12) to be easily engaged and disengaged from the thumb retaining portion.

A combination of;

- compact dimensions,
- the ability to be retained in contact with the user's thumb (12) without interfering with the other fingers (14, 15, 16, 17), and
- an underside (9) conducive to sliding,

enables the device (1) to be operated over the upper surface of a keyboard (18) instead of a dedicated mouse 'pad', table top or other support surface. The device (1) may be further optimised for super-keyboard operation;

- a plan footprint of the underside (9) sized and configured to overlap two or more (preferably four) keys to avoid inadvertent key depression.
- disregarding any movement of the device (1) for on-screen pointer movement unless an additional finger (typically the index finger (14)) activates one of the sensors (7, 8).

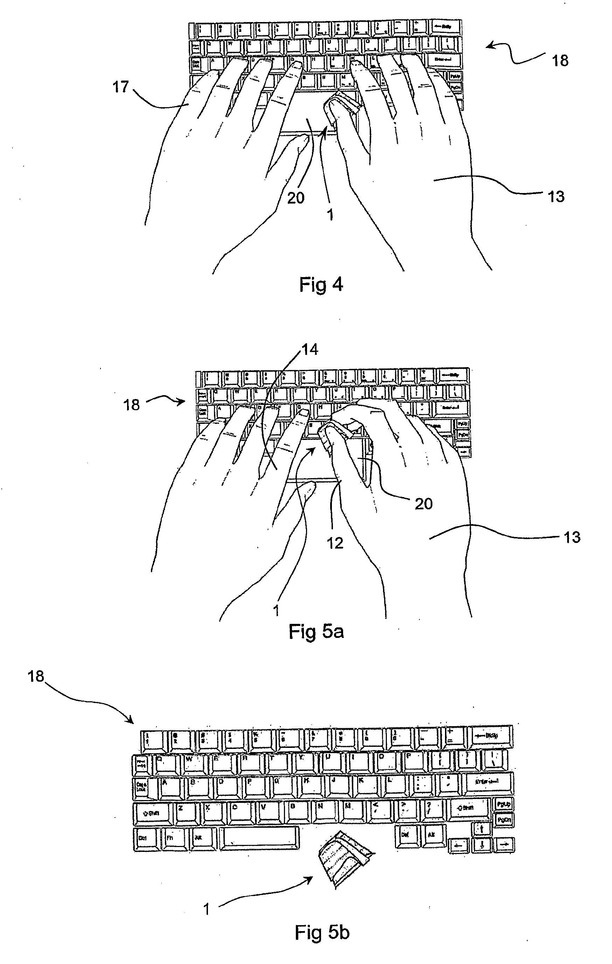

Thus, if only the thumb (12) is in contact with the device (1) (as shown in figure 2 and 4), any movement of the device is not translated into movement of the on-screen computer pointer and the device (1) is essentially in an inactive mode. However, when the device (1) is held between the index finger (14) and thumb (12) (as shown in figure 3 and 5) in the intuitive manner of holding a pen, the device is switched to an 'activated' mode and physical movement of the device (1) is reflected in movement of the on-screen pointer.

The device (1) may be used with a conventional QWERTY keyboard (18) with the <space bar> being depressed either with the left hand thumb or with the right hand thumb (12) via the device (1) resting on the space bar. To avoid also inadvertently depressing any adjacent key, an enlarged <space bar> (20) (as shown in figures 4, 5 a) and 12a)) may be used. This may be part of a purpose-designed keyboard as a retro-fitment over, or as a replacement of the conventional space bar. Alternatively, the <spacebar> (20) may be truncated (as shown in figure 5 b)) positioned towards one side of the keyboard on the opposing side to the user's hand operating the device (1). The user's free hand may thus operate the <spacebar> with their free thumb in a conventional typing manner, whilst more non-keyboard work surface area is freed to operate the device (1).

To provide the user with a visual confirmation the device (1) is activated, the on-screen pointer may be replaced by a symbolic graphic. This may take any convenient form such as an animation indicating the pointer has been 'grabbed' or 'squeezed' in the middle, mimicking the physical action involved in activating the device (1).

The device (1) may be configured to operate in several 'modes' dependent on the actions of the user and/or characteristics of the operating program being interfaced with, including:

- Inactive Mode: - No finger contact, or thumb-only contact, and no other prolonged or deliberate finger contact,

- Pointer Navigation Mode: - Thumb and index finger contact,

- Document Navigation Mode: - Thumb, index finger and middle finger contact,

- Zoom Mode: - Thumb and middle finger contact,

- Digital Ink Mode: - Device tilted or stylus nib extended to activate writing / drawing sensor.

The above exemplary modes are each described in more detail herein, though it will be appreciated numerous alternative configurations are possible and the invention is not restricted to the described examples.

Furthermore, of the above modes, only the 'digital ink' handwriting/drawing mode has a significant effect on the desirable physical characteristics of the device (1) and is thus discussed first.

Devices such as pen tablets offer high levels of manipulation and accuracy, particularly for computer handwriting and free-hand drawing applications. However, the advantages in accuracy are mitigated by the inefficiencies involved in locating and picking up the pen and placing securely after use. This discourages its use as the interface of choice for applications involving numerous typing/pointing mode interchanges. Whilst this is less important for graphic designers and the like, they are nevertheless costly; the tracking technology involved is inherently more expensive than the optical/roller mechanisms used in conventional mice. In contrast, the device (1) offers substantially equivalent accuracy to a pen device but does not suffer from any 'hand-to-device' down time, nor is there any need to visually acquire the device. Consequently, the device (1) provides higher efficiency than either the mouse or digitised pens.

The increased awareness of repetitive strain injuries (RSI), repetitive motion injuries (RMI), and occupational overuse syndrome (OOS) has led to great emphasis on creating an ergonomically efficient mouse shape and method of use. Conventional mouse designs strain the hand by forcing repetitive use of a single finger and are awkward to grasp. Users typically tend to grip mice overly hard with excessive hand pronation and extension as well as ulnar deviation and radial deviation. Whilst prior art mice have been devised to address the issue of pronation, these designs, together with digitised pen tablet devices, still do not provide the following key advantages.

- The device (1) is operated in the more natural and comfortable position in front of the user in contrast to the prior art devices used to the left or right hand side of the keyboard.

- Hand-to-device movement is eliminated. The prior art mice and pen tablet systems require the use of hand, arm and shoulder muscles during movements to and from the keyboard in comparison to the small thumb and index finger movements of the present invention.

- Button clicking / contact sensor operation requires only two opposing muscles in the thumb (12) and index finger (14) or middle finger (15) to perform a click. This is infinitely faster and requires less effort than the traditional index finger downward motion required to 'click' conventional mouse buttons.

The embodiments of the present invention shown in figures 1f-j, 6a-f), 8a-b), 9a-c), 13 a-b),15 a-b, and 20a-f) incorporate a pen/stylus feature into the device (1) to aid in handwriting and/or freehand drawing/manipulation. These embodiments address not only the inherent lack of accuracy in conventional mice in such roles, but also two further drawbacks with using a conventional mouse over a pen-style implement.

A typical mouse cannot be inclined or tilted on a pivot point indicating the effective cursor position. Most conventional mice will not work if they are inclined away from the support surface and must be operated parallel to and directly above the planar support surface. Furthermore, the user's initial focus utilising a conventional mouse and/or digitised pen remains on the screen rather than the user's hand.

The above listed embodiments incorporating the pen/stylus features enables the device (1) to operate in a 'digital ink' mode which addresses the first and optionally the second difficulty outlined above.

In the 'digital ink' mode or 'writing' mode, the device (1) is operated simply by being inclined forward about the nib (21) of a stylus portion (22) extending from the a portion of the device (1). The stylus (22) may take numerous configurations and be available in a range of physical lengths (either fixed or adjustable). In a preferred embodiment, touching a surface with the nib (21) provides a signal that the digital 'ink is flowing'.

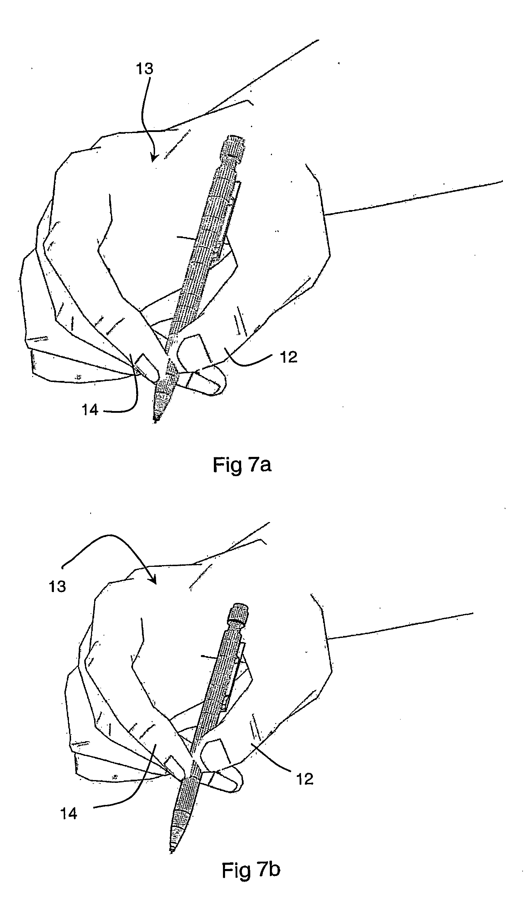

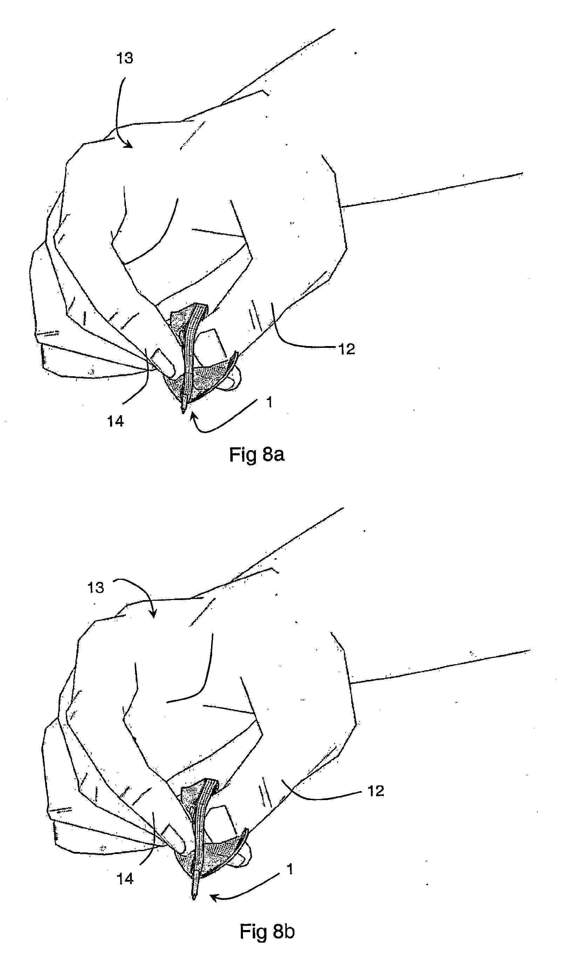

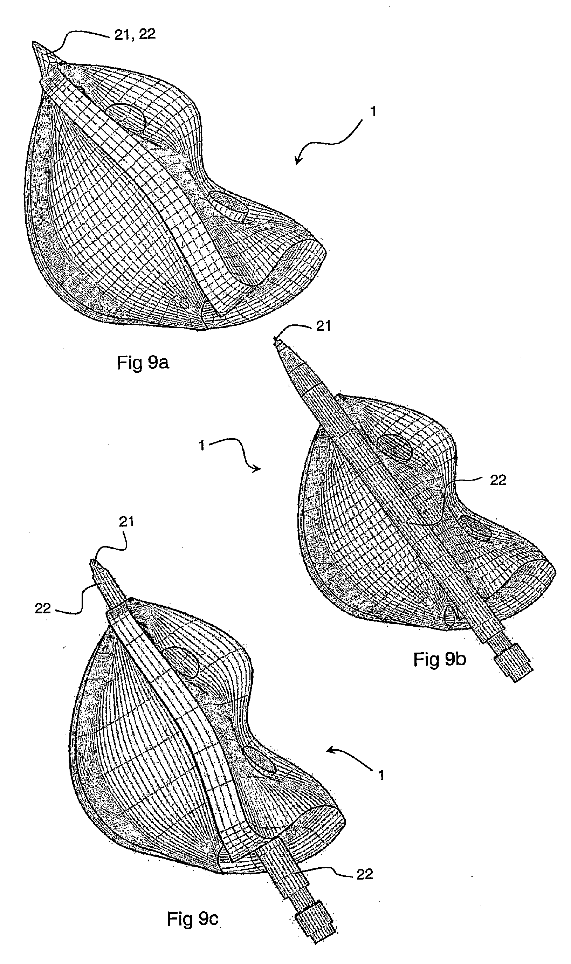

Figure 6 a-f) shows an embodiment corresponding to that shown in figures 1 a-f) with the addition of a nib (21) and a relatively short length stylus portion (22) projecting from the forward-most point of the device (1). This configuration is ergonomically comparable to the position adopted by a user's fingers when holding a conventional pen relatively close to the nib (21), as shown in Figure 7a. In contrast, Figure 7b shows a conventional pen gripped further away from the nib (21) at a point higher along the pen shaft. Figures 8 and 9 respectively show embodiments of the present invention equivalent to the pen grips used in Figures 7a and 7b wherein the user grasps the device (1) between the thumb (12) and forefinger (14) of a short stylus portion embodiment in Figure 8a and a long stylus embodiment in Figure 8b. The embodiment of figure 6 a-f) also includes a middle finger recess (24) formed as a slot or recess extending laterally through the base portion (2). The user is thus able to locate their middle finger (14) under the device (1) in the middle finger recess (24) during use in digital ink mode further mimicking a pen-like grip.

Figures 9a-c) show further variants of the embodiments shown in figures 1a-f) and 6a-f) incorporating alternative nib/stylus portions (21, 22). The embodiment of Figure 9a utilises a simplified pointed stud to combine the features of the nib (21) and stylus portion (22). The embodiment of Figure 9b incorporates an elongated stylus portion (22) akin to a conventional pen mounted atop the spine (3) of the device (1). The embodiment shown in Figure 9c shows a further refinement of that in Figure 9b whereby the stylus portion (22) overlapping the device (1) is moulded within the base portion (2).

It will be apparent numerous other embodiments are possible and the invention is not restricted to those illustrated. It can be seen for example that the nib (21) need not project forward (as described in the above embodiments) and may for example protrude from the rear of the device (1) as per the embodiment in figures 1 f-j). In use, a device equipped with such rearward facing nibs (21) is tilted backwards during use in digital ink mode or any other mode utilising the nib (21).

In the 'digital ink/handwriting' mode, the device (1) may be configured to distinguish between close proximity of the nib (21) to an adjacent surface and contact with same. The means for determining the proximity of the nib (21) may be performed in known manner by sensing elements located in the device (1), or a dedicated surface (e.g. a keyboard of touch pad), or both. Each of these options offers different benefits and drawbacks.

Proximity sensors located solely in the device (1) permit its use with any convenient non-dedicated surface such as table surfaces, conventional keyboards, display screens and the like. However, such a configuration would add complexity, cost, size and weight of the device (1). Conversely, locating the proximity sensing elements solely in a surface of a dedicated object (e.g. purpose designed keyboard, touch pad etc) would reduce the potential expense, size and weight of the device (1), though at the cost of reduced flexibility in where the device (1) may be used.

Combining the proximity sensor system elements into both the device (1) and a dedicated surface offers a cost/performance compromise. Such configurations are utilised in existing position-sensing pen/tablet systems where an inductor and capacitor, located in the pen, cause small localised induced signals in a multitude of over-lapping antenna coils formed in both the x and y directions from the copper tracks of a component-less printed circuit board. Such systems may also detect degrees of pressure in contact with the surface in addition to non-contact position sensing.

Further position sensing technologies (not explicitly shown) suitable for use with the present invention include acoustic transmitter/receiver systems such as that produced by EPOS Technologies Limited. EPOS systems enable distance, 2D, or 3D positional information of a transmitter or receiver to be derived from triangulation calculations based on uniquely encoded ultrasonic signals from one or more small transmitters capable of placement in the device (1).

Thus, each of the above alternative embodiments described above may be configured such that when the nib point (21) is placed within a defined distance of the surface, any movement of the nib (21) parallel to the surface registers as on screen pointer movement. When the nib (21) touches the surface, this signals that digital ink is "flowing". Thus, when in Digital Ink mode the device (1) performs similarly to a conventional pen.

After activating Digital Ink mode, the two contact sensors (7, 8) are still available and operable to access further configurable features, e.g. activating an 'eraser' or changing the colour or ink style, or performing a 'carriage return'/ <ENTER> command.

To address the issue of visual focus, the device (1) may be used to physically write on a non-electrical surface (e.g. paper or writing pad) as well as on the screen. This would be implemented by ink physically drawn from the stylus (22), or from a surface that tracks the path of the device (1), where contact is made. One method of tracking the drawing is via the system employed in magnetic powder etching toy-type devices that enable erasing for repeated use.

Such embodiments of the device (1) used for physically writing or creating a mark on a surface may utilise known optical sensor technology currently employed to digitally interpret the user's drawing or hand writing or utilise an LCD panel or the like built into the keyboard specifically for the user to write on.

The 'Digital ink' mode may be activated by a predetermined prompt before the user starts handwriting thus allowing the computer to react immediately to writing and drawing input. For example, when activated, a blank 'electronic note-pad' could be automatically displayed on the screen for the user to write on.

In digital ink mode the device (1) could also be used to perform command instruction shortcuts, e.g. writing an X could close an application, or a W could open up a word processor.

Again, in Digital ink mode the keyboard may be configured to switch from responding to keystrokes to responding to writing / drawing commands, e.g. numbers 1 through 9 may be assigned to different ink thickness etc.

Although described above with reference to use by the user's right hand, the invention may be produced in both left and right-hand embodiments and even ambidextrous models configurable for use in either hand. The embodiment shown in Figures 1-9, and 14b-23, may be readily adapted for left hand (19) use by production of a mirror-image version with the thumb-retaining surface (4) orientated along the right side of the spine (3) and the index finger and middle finger contact sensors (7,8) orientated on the opposing left hand side of the spine (3). It will be appreciated by those skilled in the art that the highly contoured configuration of the embodiments shown in Figures 1-9 and 14b-23 are not mandatory and that more simplified configurations are possible.

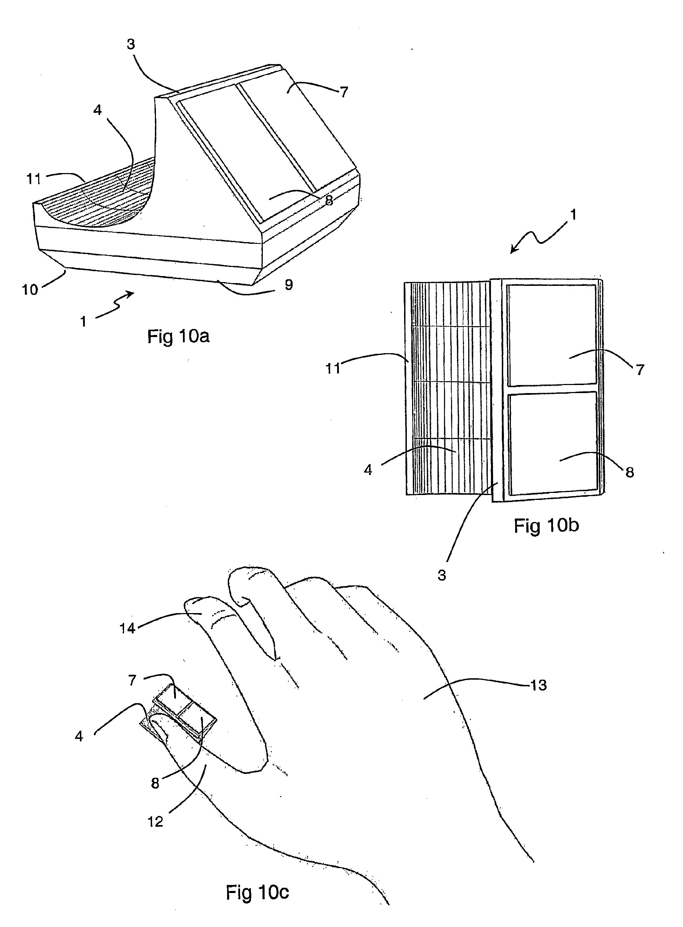

Figures 10a-13b show a simplified ambidextrous device (1) with a symmetrical configuration about a lateral midpoint between the contact sensors (7, 8). Due to the symmetry of the device (1), when used by the user's right hand (13) the contact sensor (7) is still used by the index finger (14) (as shown in Figure 10c). However, when configured for use by the user's left hand (not shown), the role of the contact sensors (7, 8) is reversed.

In an embodiment utilising wireless technology to communicate with the host computer, an alteration between left and right-handed modes may be software-configurable.

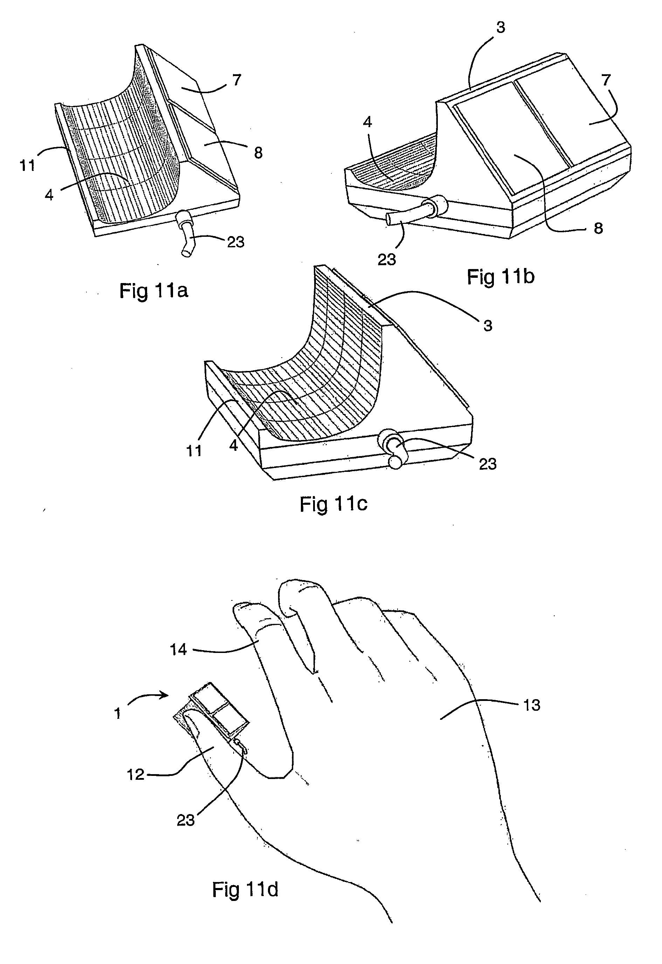

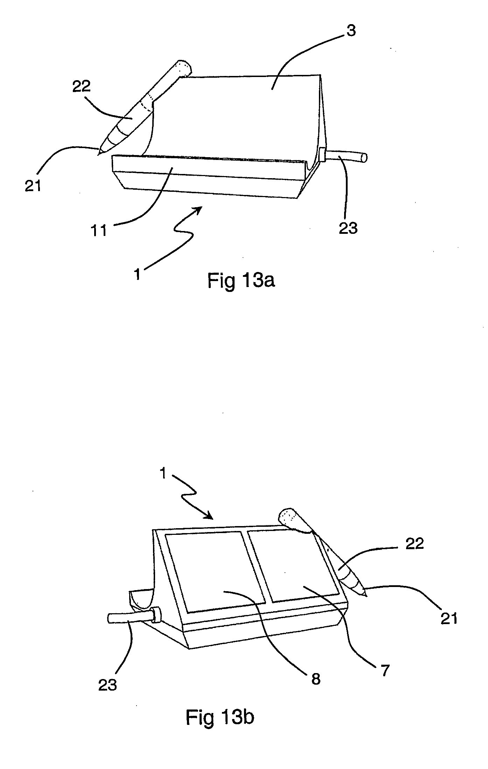

In embodiments utilising a conventional mouse cable (23) (as shown in Figures 11a-11d and in Figures 13a-13b), the cable (23) is orientated to exit the device (1) rearwards towards the user. This avoids obstruction with a keyboard during typing. The cable may be re-routed through convenient exit points at either end of the device (1) according to the intended hand in use for operation, and again may be software-configurable to ensure correct operation with the host computer software. Alternatively, a hardware switch (not shown) on the device (1) may be employed to switch between left and right handed use mode.

In the embodiment shown in Figures 9-13, the thumb retaining portion of the thumb engaging surface (4) is comprised of the raised lip portion (11) and the raised spine (3) to engage with the thumb during the left/right hand lateral movements. It also relies on the degree of resilience/friction with the surface of the thumb engaging surface (4) to retain the device (1) during forward/aft movements.

Figure 12a shows the ambidextrous embodiment in use on a keyboard (18) with an enlarged space bar (20), whilst Figure 12b shows the device (1) being activated by the user operating the contact sensors (7,8) with the index and middle finger (14,15) in a pinching action between the forefingers and the thumb (12).

Figures 13a and 13b show comparable embodiments to those of Figures 9-12 with the addition of a nib and stylus portion (21, 22) for use in operation in the digital/handwriting mode. The embodiment shows a stylus that may be releasably inserted into a portion of the top of the spine (3).

It will be clear to one skilled in the art that the embodiments shown are but a few examples of numerous possible alternatives.

Figure 14 a) shows an embodiment with the contact sensors (7, 8) located in a vertically overlapping configuration with the index finger sensor (7) above the middle finger sensor (8).

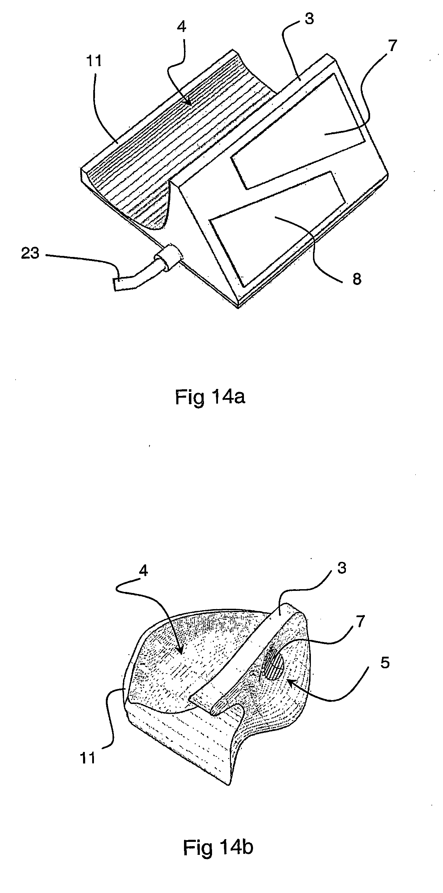

Figure 14 b) shows a compact version of the device (1) utilising a single index finger button (7). This embodiment is suited to applications requiring extreme miniaturisation, and/or operating systems such as the Apple Macintosh™, utilising single button mice.

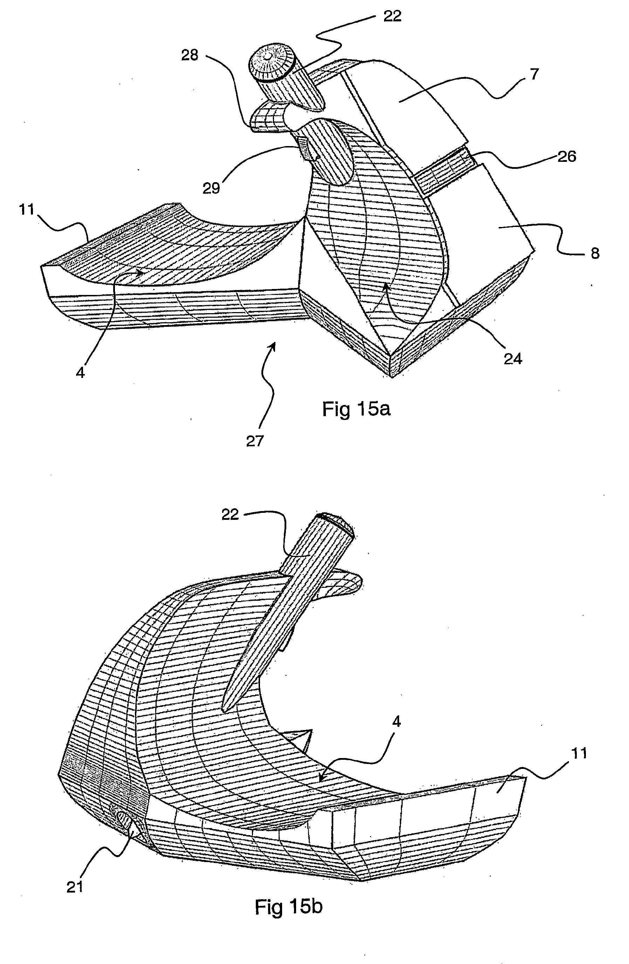

Figures 15 a-c) show a further embodiment of the present invention, differing from the previous embodiments with the incorporation of;

- A repositioned middle finger recess (24),

- a retractable stylus (25),

- vertically positioned individual contact sensors (7, 8),

- a scroll wheel (26).

In the embodiment shown, the lower edge of the 'left' index finger Mouse Button (7) is positioned on the spine (3) approximately 10-25mm above the underside (9) of the device (1), with the 'right' middle finger button (8) positioned directly below. Although the locations of both buttons (7, 8) are not restricted to these positions, it is desirable that the vertical positioning of the buttons (7, 8) should allow sufficient room to allow a user's middle finger (15) to move between the index finger (14) and the work surface (e.g. keyboard (18)) when operating the middle finger button (8).

The index finger button (7) is sufficiently raised relative to the underside (9) of the device (1) to allow the middle, ring, and little fingers (15, 16, 17) to lie comfortably without cramping while in pointing or writing modes as described more fully below. To avoid unnecessary weight and size, the 'unused' region of the base portion (2) at the rear of the device (1) may be cut-away to form a recess (27).

The middle finger recess (24) may be formed in several configurations such as a lateral recess located across the rear of the base/spine portion (2, 3) (as per the embodiment shown in Figures 15 a-b)) or, alternatively extend further downwards extending through a slot or recess formed through the base portion (2). Such a recess in the base (2) may be formed to extend from the side of the base (as shown in the embodiments of figures 6a-f) or from the rear (as per recess (27)), or the like.

Typically, the middle finger recess (24) is only utilised during writing in 'digital ink' mode, and allows positioning of the middle finger (15) in close proximity with both the thumb (12) and index finger (14). This 'grip' simulates that employed by a majority of humans holding and using a pen.

The device (1) also incorporates an overhang portion (28) formed from a small section of the spine (3) overhanging the middle finger recess (24). The overhang portion (28) is shaped to follow the contour of the user's middle finger (15) when used in the digital-ink writing mode. This provides support during the application of pressure on the nib (21) and allows comparable writing stability to a conventional pen, despite the shorter length of the retractable stylus (25).

The Scroll Wheel (26) is located between the index and middle finger buttons (7, 8) in the embodiment shown in figures 15a-c), though it will be appreciated alternative locations are possible, e.g. in the thumb engaging surface (4) towards the spine (3), or above the index finger button (7), or the forward facing portion of the spine or the like.

The retractable stylus (25) is releasable from its retracted position by a stylus release button (29) located in middle finger recess (24), though it may alternatively be located in the thumb engaging surface (4) for example. However, by locating the stylus release button (29) in the middle finger recess (24), it reduces the possibility of inadvertent release. It also provides a natural action for deploying the stylus (25) as the middle finger (15) automatically depresses the stylus release button (29) when grasping the device (1) in the digital ink handwriting mode.

Optionally, the effective length of the nib (21) extension may be adjustable. This may be operable by a button located at the upper distal end of the stylus (25) or operation by the user's thumb (12) for example.

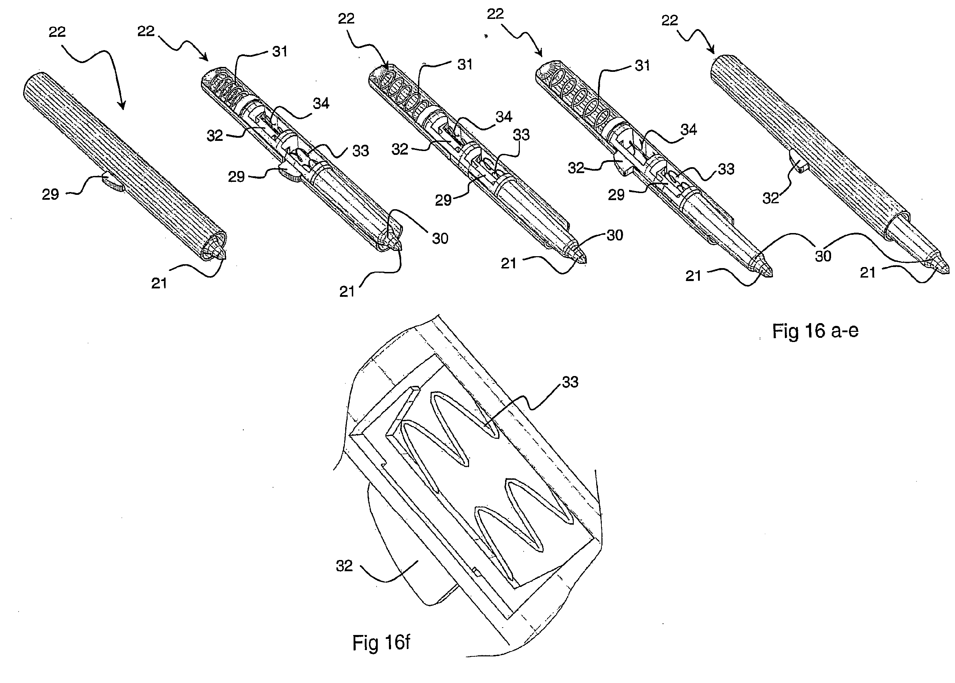

As previously described, the stylus (25) may incorporate known proximity/movement sensing system elements as employed in electronic pen/tablet systems. Figures 16a-e) show such technology employed in a retractable stylus (25). The stylus (25) incorporates a receiving/transmitting antenna coil (30) in the stylus nib (21). In a device (1) configuration such as shown in Figures 15a-b (incorporating the retractable stylus shown in Figures 16a-f), it is possible to use a single antenna coil (30) for use in both the "digital ink" writing and pointing modes as the coil (30) will be sufficiently proximal to the magnetic field sensor (not shown) below the working surface in both modes of operation. As previously discussed, a flat circuit board sensor area (not shown) will be located beneath a keyboard (18) constructed for use with the device (1) and/or located in the region typically present immediately below the keyboard area of portable computers, laptops and the like, i.e. the areas where the device (1) will be most efficiently activated.

The nib (21) of the retractable stylus (25) may be configured to be pressure-sensitive to "write" only when in contact with a writing surface in a comparable manner to known pen/tablet configurations. However, in the present invention, the nib (21) is preferably configured to only "write" in the digital ink writing/drawing mode and not in the 'pointing' mode. It will be appreciated that numerous means of retracting and extending the nib (21) may be implemented, including the following spring-loaded assembly as shown in Figures 16 a-f.

It can be seen the retraction/extension of the nib (21) in Figures 16 a-f) operates in a substantially comparable manner to the extension/retraction mechanism of a typical ballpoint pen. A main spring (31) located at the upper free end of the stylus (25) housing bears on the slideable nib (21) assembly telescopically housed within the stylus (25). The slideable movement of the nib (21) may be latched in, and released from, a retracted and an extended position by separate buttons, i.e. the stylus release button (29) and the stylus retraction button (32) respectively.

The retraction button (32) acts as a lock when the nib (21) is in the extended position, permitting user pressure on the nib (21) whilst writing without inadvertent retraction. It will be appreciated that the stylus release and retraction buttons (29, 32) may use a common aperture through the stylus (25) casing, or be positioned independently, allowing the user to operate each with different finger or thumb. This would, for example permit the nib (21) to be extended by the middle finger (15) whilst the retraction button (32) may be operable by the thumb (12).

Figure 16 a-e) shows a series of increments between the stylus (25) in the retracted position (Figure 16 a-b) to the extended position (Figure 16 d-e). In Figure 16 a-b), the nib (21) is latched in the retracted position and held in place by the stylus release button (29) protruding through the stylus (25) casing. After depressing the stylus release button (29), the main spring (31) pushes the nib (21) assembly downwards, as shown in Figure 16 c). In this intermediate position, both buttons (29, 32) are recessed within the stylus (25).

Figure 16 d-e) shows the nib (21) in the extended position whereby the retraction button (32) is able to project from the aperture in the stylus (25) preventing inadvertent retraction of the nib (21). Lateral movements of both buttons (29, 32) are provided by independent compression springs (33, 34 respectively).

It will be further appreciated that the extension and retraction of the nib portion (21) need not necessarily require the use of a main spring (31) or the like; and in alternative configurations, may use the effects of gravity and/or direct force applied by the user's fingers/thumb.

Alternatively, as described in previous embodiments, the nib (21) may also make contact with the work surface by tilting the device (1). The writing mode may be activated by using any one or a combination of the above methods.

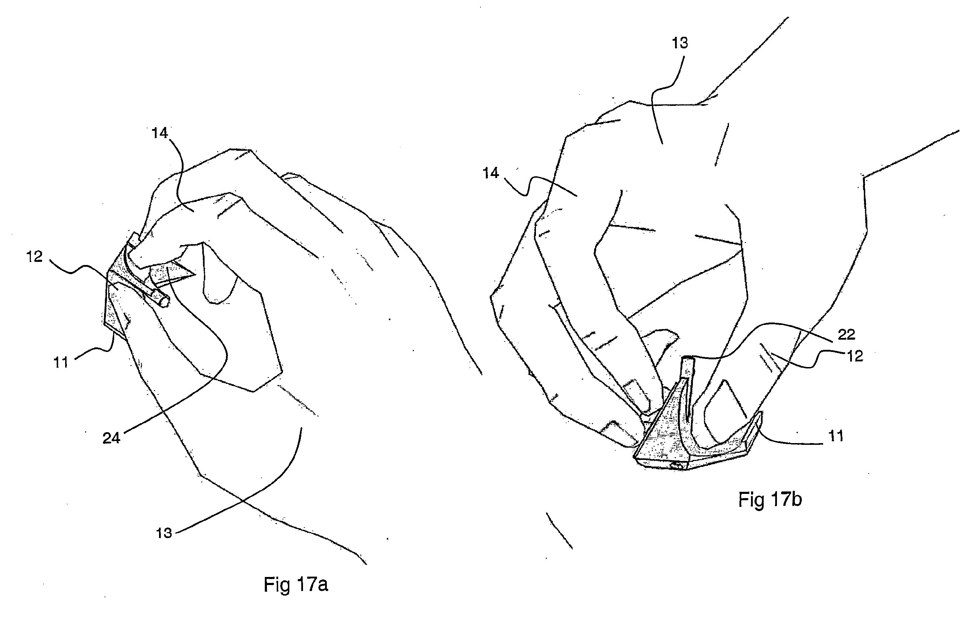

In use, in the embodiment of the device (1) shown in Figures 15 a-b (incorporating the retractable stylus (25) shown in Figures 16 a-e), the device (1) may be held in different positions according to the mode of operation. When operating in the "pointing mode" (as shown in Figure 17 a-b) the user's fingers (14-17) may be positioned in similar configurations to the above-described embodiments with small differences due to the different orientation of the index finger and middle finger buttons (7, 8). More specifically, the tip of the middle finger (15) is placed directly below the tip of the index finger (14) rather than being curled behind and underneath the index finger (14). The position of the user's hand (13) in grasping the device (1) nevertheless retains all the advantages of the above-described embodiments including fingertip control, relaxed hand posture and operability over keyboard surfaces and the like.

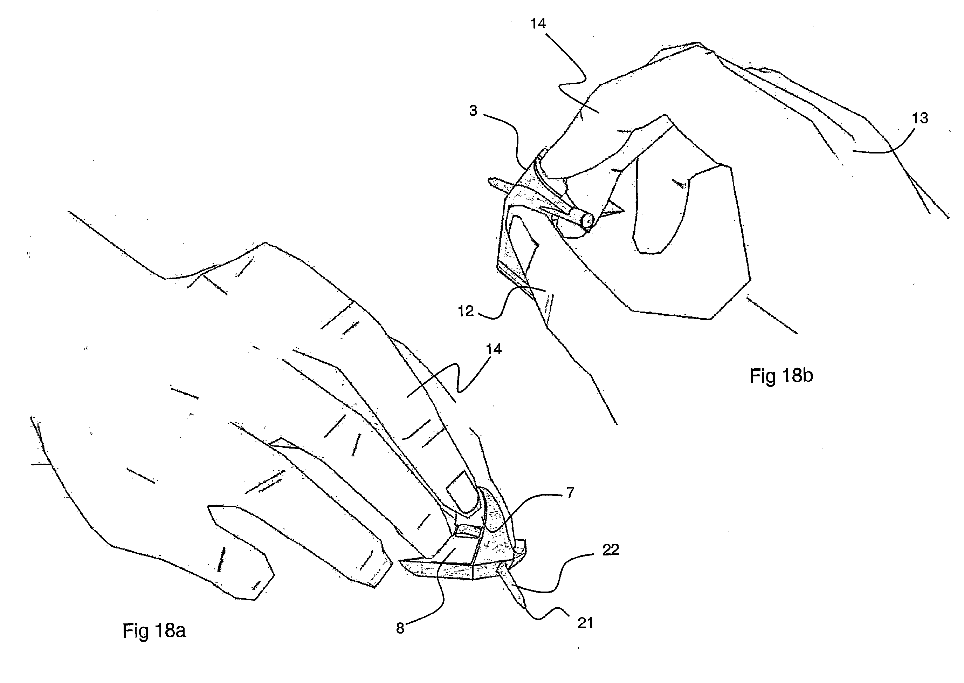

To initiate digital ink writing mode, instead of tilting the device as per previous embodiments, the user moves their middle finger (15) into the middle finger recess (24). This action also depresses the stylus release button (29) to release the nib (21) into its extended position as shown in Figures 18 a-b. Activation of the stylus release button (29) also indicates to the control software associated with the device (1) that the "digital ink mode" has been activated. To de-activate the digital ink in writing mode, the retraction button (32) is depressed and the user pushes down upon the work surface or any convenient object to return the nib (21) to its recess position.

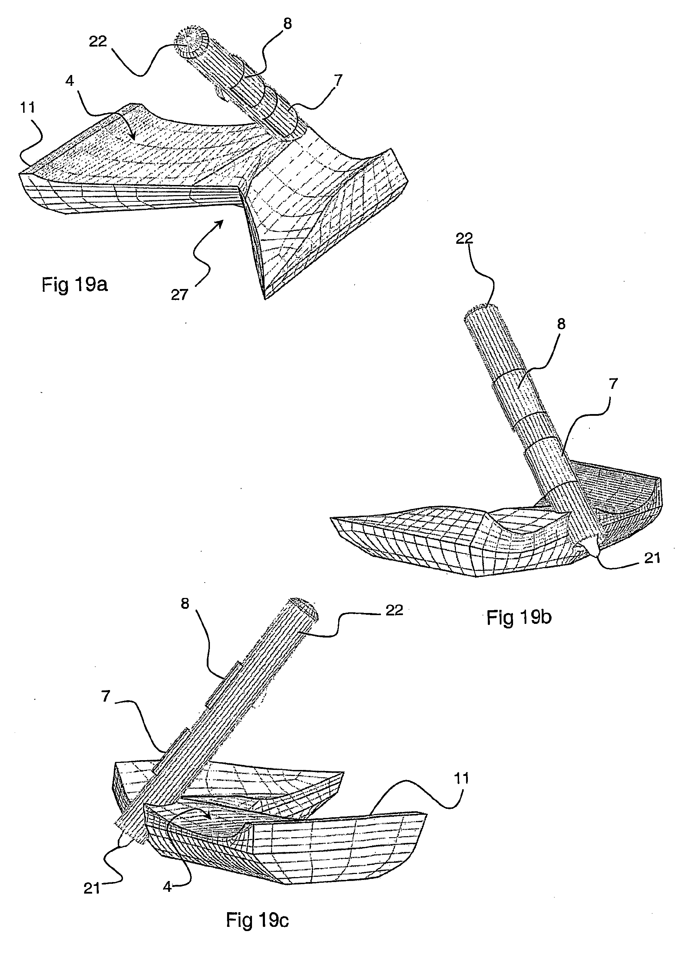

It will be further appreciated that the above embodiments represent a small number of examples of the possible configurations of the device (1). Figures 19 a-c) show a further embodiment in which the spine portion (3) is entirely formed by the stylus (22) on which the index and middle finger buttons (7, 8) are positioned.

As previously discussed, the device (1) need not be configured to rest on a planar lower surface and may in alternative configurations include a lower surface configured with one or more convex portions and/or projections. In such embodiments, the lower surface may be formed as a single curved surface, or include a plurality of rounded or curved portions whose lowermost points collectively define a contact plane for sliding across a work surface. In further embodiments, the device (1) may be configured to rest on the work surface on a plurality of contact points collectively lying in said contact plane. The contact points may take a multitude of forms and include, but are not limited to, either:

- one or more portions of said lower surface and distal portions of at least two said projections extending from the device, or

- at least three said projections.

It will be readily understood that while three contact points are generally required to provide a stable support, any number of further contact points may be configured to lie in the same 'contact plane'. Figure 20 shows an embodiment wherein the contact points of base (2) with the work surface is provided by three projections in the form of three nibs creating a tripod-type arrangement. The types of nibs employed may be varied according to the intended usage of the device (1). In the exemplary embodiment shown in figure 20, the three nibs comprise a digital ink nib (21) at a front apex and two scroll/zoom nibs (53) (described in more detail below in conjunction with further embodiments) at opposing rearward apices. The device (2) may be slid on a suitable work surface with all three nibs (21, 53) in contact with the work surface to provided device movement input as per the previous embodiments. It will be readily understood the types of work surface suitable for movement of such device (1) requires a greater degree of uniformity than a device (1) with a planar underside (2) to ensure effective sliding of the device(1).

The device (1) may also be operated in different modes (as described below) not only by tilting to place a single nib in contact with the work surface to activate a corresponding operational mode (i.e. digital ink, scrolling or zooming), but may also be operated with two nibs contacting the work surface. It can be readily seen that the device (1) may be configured with a plurality of nibs, enabling corresponding operational modes to be defined according to which nib or nibs contact the work surface at a given instance.

Regarding the remaining exemplary modes of operation (inactive Mode, Inactive Mode, Pointer Navigation Mode, Document Navigation Mode, and Zoom Mode) referenced above:

In the 'Inactive Mode', a 'soft click' may be performed on the device (1) whereby either the left or right buttons (i.e. contact sensors (7, 8)) are lightly "touched and released" (i.e. not touched and held, or'clicked') resulting in different actions being performed. Various standard keyboard command strokes may be replaced by 'soft click' operations, e.g., pressing the left button (7) may be equivalent to pressing the <TAB> key. Soft clicking the right button (8) may perform the operation of the <BACKSPACE> key, whilst soft clicking both buttons (7, 8) may perform an <ENTER> operation.

Significant efficiency gains may be achieved by providing access to these frequently performed keystrokes directly via the device (1). Ergonomic advantages are also gained as these keystrokes are traditionally performed by touch typists using the weaker little finger whilst non-touch typists typically move their entire hand to use their stronger middle or index finger. In contrast, no hand movement is required to perform these keystrokes through the device (1).

Examples of where such efficiency gains may be realised include filling out a website form or the response required for a confirmation 'pop-up window'.

Website forms typically require the user to move between numerous fields entering alphanumeric text. With the device (1), the user would click in the first "field" in a form and add their details, after which they would 'soft click' to perform a <TAB> and to move to the next field and so on. When the user has completed the form, they can perform an <ENTER> soft click by using both the index (14) and middle finger (15) on the appropriate buttons/contact sensors (7, 8).

Confirmation 'pop up windows' often present a user with "are you sure?" or similar, after an 'OK' button or selection has been performed. Using the device (1), the user can choose between the'OK' and 'cancel' options by either 'soft clicking' both contact sensors (7,8) to perform an 'OK' or <ENTER> operation, or first perform a <TAB> operation by 'soft clicking' the index finger (14) contact sensor (7) or performing the <ENTER> operation by 'soft clicking' both contact sensors (7,8).

A 'Pointer Navigation' mode enables the user to move the on-screen pointer and access various related context-sensitive features.

Unlike a conventional mouse, the device (1) is "aware" that it is being held by continuous contact with the thumb (12) and the index finger (14). This places the device (1) in "Pointer Navigation Mode" which may be utilised in a variety of modes such as "Responsive Toolbars".

Typically, toolbars are specifically set up as shortcuts for pointing and "clicking" i.e. a button on a tool bar is activated only with the pointing device, and not the keyboard. With a 'responsive toolbar', a toolbar would be invisible on screen when the device (1) is inactive, reducing screen clutter and providing more visible workspace. When the device (1) is active (with the index finger (14) and thumb (12) pinched together, and the device moved), the toolbar would appear on the screen again, ready for clicking.

When the device (1) is active, the entire keyboard may be switched into a different mode. For example pressing the <W> key when in 'Pointer Navigation Mode' may access a favourite website. Holding down another key may slow down the pointer speed if small accurate movement is needed. Some keys may be transformed into interactive navigation keys (arrow keys page up / down etc). The <H> key and <V> key may respectively restrict pointer movement horizontally and vertically to aid in drawing straight lines and aligning objects. This change in keyboard mode, when the device (1) is in 'pointer navigation' mode, is intuitive as the user has clearly stopped typing to activate the device (1).

At times, a user may need to move a cursor or pointer an exact distance of the smallest increment or 'unit' (e.g. one pixel, one line, one character). Pointer device movements are not 'unit' based, for example, it can be difficult to move 'one pixel' or 'three pixels' to the right. For these types of movements the arrow keys are more suited. The 'Pointer Navigation' mode can be employed so that these keys are more conveniently placed, and are only activated when the user wishes to 'navigate'.

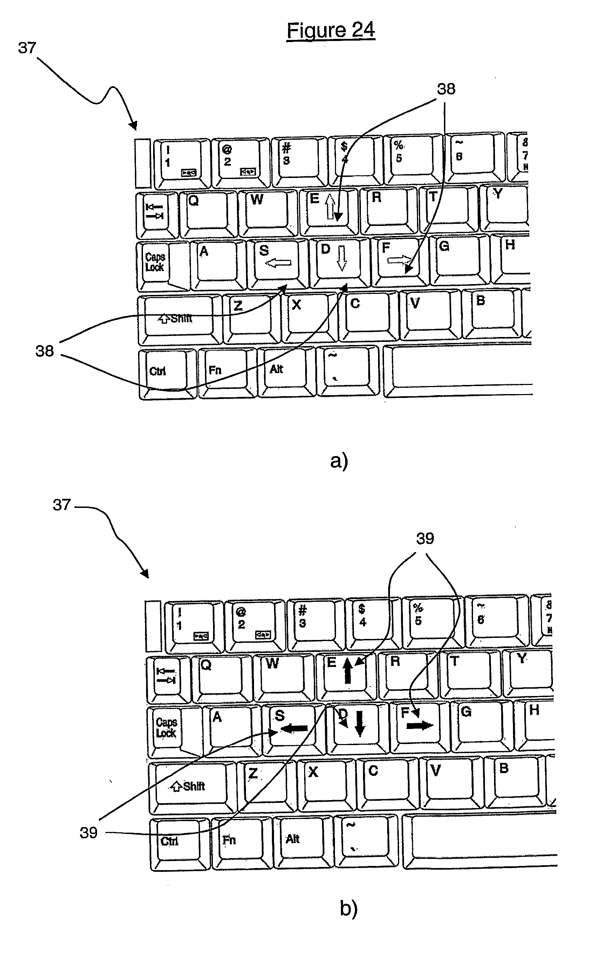

Figure 24 a) shows a standard QWERTY keyboard (37) in which <E, S, D, and F> keys (38) incorporate illuminable arrow portions (39). When, for example, the device (1) is placed in an activated mode (i.e. placed in pointer navigation mode) when the user touches the index finger contact sensor (7), the illuminable portions (39) of the <E, S, D, F> keys are illuminated (as shown in figure 24 b). The function of the <E, S, D, F> keys (38) is also re-mapped to provide navigation key inputs ← ↑ → ↓. The user is thus provided with navigation keys conveniently positioned on the keyboard (37) adjacent the user's free hand, thereby increasing typing efficiency. Moreover, in size sensitive applications, the conventional ← ↑ → ↓ navigation keys may be omitted from the keyboard. Similar techniques may be implemented to replace other keyboard keys and/or provide shortcut keys to other functions.

Other optional features include an on-screen pointer animation which is visible when the device is in the active mode (as previously discussed), and disappears when inactive. This aids location of the pointer when the device (1) is 're-activated'. 'Document Navigation' mode is activated by placing both the index (14) and middle (15) fingers on both buttons (7, 8). As used herein, the term 'document' is defined as including any document, image, animation or the like having a displayed size exceeding the screen or window size.

The mouse 'scroll wheel' gained widespread popularity because of the significant efficiency gains it offers. Orthodox scrolling with a pointing device involves moving the arrow to the scroll slider control, clicking and holding the slider button, and moving up and down (while holding).

There are however, three main inefficiencies with these methods, namely;

- The time required to locate and click the (often small) slider button with the mouse.

- Reaching the edge of the support surface during scrolling. This typically requires the mouse to be lifted from the support surface and re-positioned, while simultaneously depressing one of the mouse buttons.

- Navigating larger documents: When the scroll slider is moved, the document is scrolled a relative "distance". This distance is calculated as a percentage of the size of the entire document. For example if the document is 10 pages, to navigate forward 1 page, the slider would be moved 10% of the scrollbar length, moving the slider 50% would move to the 5th page etc. This method works well for smaller to medium sized documents, but for large documents it becomes difficult to move smaller amounts.

The mouse scroll wheel has proved particularly successful as it enables controllable scrolling for reading on-screen text. When a scroll wheel is 'turned' one increment or notch, the document moves a 'set' amount of lines or pages. Most users have this set at 1 to 4 lines, as this gives the best efficiency for reading and scrolling down a document.

However, the scroll wheel does not perform well in other situations such as scanning or searching a large word document or web page, or documents without large text passages. In these situations the user will often revert to using page up / down keys or, as before, clicking on the scroll bar slider and using 'percentage scrolling' to scroll faster.

In 'Document Navigation' mode, the device (1) overcomes these difficulties by placing two modes of scrolling, i.e. 'absolute scrolling' and 'relative scrolling', at the user's finger tips.

Absolute scrolling is activated (as described above) by placing two fingers (14, 15) on the device buttons (7, 8). After activation, any movement will be reflected as scrolling on the screen, in the appropriate direction. The amount of scrolling is equal to the amount of pointer movement. For example, the device (1) pointer speed may be set so that 10 centimetres of downward movement would move the pointer from the top to the bottom of the screen. If the same action is carried out in Document Navigation Mode, in a maximised word processing document, the first viewable line of the document will become the last viewable line on the screen. Thus, the scrolling distance is equal to the magnitude of the pointer movement. Relative scrolling is activated by pressing (as opposed to 'placing') the two index (14) and middle (15) fingers on their respective buttons (7, 8). In this mode, movement of the device (1) produces the equivalent screen movement that would have occurred had the scrollbar been moved via the mouse pointer.

This dual-mode scrolling gives flexibility for scanning through and reading any size document. It allows the user to perform 'fine' scrolling for continuous reading whilst also allowing scanning through a larger document. A user may first use relative scrolling for positioning within the entire document, and then absolute scrolling to positioning within the current page.

'Document Navigation' mode also provides some important ergonomic advantages. It is recognised that the only interface action repeatedly performed by a user reading a document is 'Absolute Scrolling'. As this mode is activated by 'lightly placing' two fingers on the device buttons (7, 8), there is almost no constant force required to remain in scroll mode. This results in reduced fatigue when reading a large document.

Dropdown boxes and other menu/selection options possessing scroll bars are other areas where 'Document Navigation' mode gives efficiency gains, as these are effectively vertically scrolling "documents" in a small window. When a user is presented with a list of matches in a dropdown box, they may then activate 'Document Navigation' mode. This will select the first item in the dropdown box. Moving the device (1) up and down will select the next / previous items on the list. The amount of movement is based on 'absolute mode'. If the user is presented with a large number of items in the list, they can activate relative scrolling and navigate the entire list quickly. To use the selected item on the list, they simply click and release the left button (7).

As with the 'Pointer Navigation' mode the keyboard may be configured in 'Document Navigation' mode to switch from responding to keystrokes to responding to scroll / document navigation commands. For example the <T> and <G> keys could page up and down, the <E,S,D,F> keys will scroll one 'fundamental unit' (e.g. pixel, character, line etc), holding down the V or H key would restrict scrolling horizontally or vertically, etc.

'Zoom' mode is available by placing a finger on the middle finger (15) contact sensor (8). This mode acts in a similar way to the Document Navigation Mode i.e. when the device is moved down this indicates zooming out, and moving up, zooming in. As with the Document Navigation Mode, there is absolute and relative zooming. Relative zooming is initiated by clicking and holding the middle finger contact sensor (8). In this mode (using the 'Document Navigation' mode example), a 10cm movement will zoom between the greatest zoom, and the full extent of the document i.e. for an image, the display will show from the entire image, down to one pixel level.

As with Document Navigation Mode & Pointer Navigation Mode, the keyboard may switch from responding to keystrokes to responding to zooming commands. For example the 'F' key may show the Full (zoomed out) extent of the document / image, while holding down the 'B' key will allow the user to draw a 'zoom box' which when released will display the boxed area in the full window.

Thus, the device (1) as described above provides several advantages over the prior art including improvements in efficiency, accuracy, functionality and ergonomics.

Contemporary computer interfaces provide the user with numerous means to perform a single specific task. Even a simple requirement such as moving to the next page in a typical word processing document can be performed by any of the following actions;

- Pressing the "down arrow" key repeatedly

- Holding down the "down arrow" key

- Turning the mouse "scroll wheel" repeatedly

- Holding down the "scroll wheel" and moving the mouse down

- Clicking and holding the left mouse button (select / highlight mode), and moving the mouse down

- Clicking the slider button on the scroll bar at the right side, and moving the mouse down

- Clicking (and or holding) the small down arrow button located at the bottom of the scroll bar

- Pressing the "page down" key

While providing a user with choice options can be beneficial, too many options can introduce complexity and confusion. The user must cognitively choose the best method to achieve their task, which is inefficient. In comparison, the device (1) promotes an 'edit / typing mode' when the device is inactive, and 'navigation modes' when the device is in any active state. This simplifies and streamlines the computer/user interface. In contrast to the above, to achieve the 'page down' action using the device (1), the user need only activate the device (1), and then scroll with mouse movement or move a full page using the device (1) 'page down' command (which is also the <G> key).

Accurate manipulation of a conventional mouse to perform drawing or handwriting motions is very difficult.

The finest and most accurate human movements are achieved through the combined control of the index finger and opposing thumb. Thus, a painter uses these 2 digits to hold his brush to paint the finest detail, and an engraver can etch minute detail. Furthermore, such a technique is virtually universal for writing with a pen. Fine, accurate movements using a conventional mouse are difficult for several reasons, i.e.

- The user is forced into holding a mouse with their thumb and ring or little finger (the index finger and middle finger are used to left and right click). This is not as accurate as the more natural way of using thumb and index finger.

- The ring finger and thumb are forced apart to the width of the mouse, thus restricting finger movement, and attenuating accuracy.

- A mouse has weight / friction which can resist movement.

- To activate a mouse to draw or write, the left mouse button has to be held down. This creates a downward force on the mouse which makes it more difficult to lift the mouse and/or control or move laterally across the support surface in an accurate way.

The device (1) resolves these issues, because:

- It is primarily operated with the index finger (14) and thumb (12), and therefore offers enhanced accuracy.

- It weighs approximately 1/10 of a conventional mouse.

- It is small enough so that the thumb (12) and index finger (14) are in close proximity and have free movement.

- When the left mouse button (contact sensor (7)) is clicked and held down, there is no downward pressure, so there is no extra restriction of movement through friction.

The device (1) has a much higher accuracy for pointing and writing than a conventional. mouse, but it is not quite as effective as a pen for writing when in 'Pointer Navigation' mode. This is because the most effective writing / drawing devices have a pivot point to aid in performing curved movements. However, when writing and drawing in the 'Digital Ink' mode, (as described in more detail herein), this drawback is addressed.

When a user is moving a pointer over a larger area, a conventional mouse is required to be lifted and then moved in the opposite direction, and then placed again. This is to prevent the mouse being pushed over the edge of the table. The device (1) provides the user with an additional method to achieve the same result without lifting the device (1). Instead, the device (1) can be inactivated simply by separating index finger (14) from the left button (7), the device(1) can then be repositioned (while still on the surface) without movement of the on-screen pointer. The conventional method, i.e. to simply lift the device (1), as with a conventional mouse may still be used if desired. However, even with this method the device (1) will be significantly faster due to its compact size and the ease at which the device (1) can be activated, lifted and moved. Considering an intuitive standpoint, when a user sees a pointer on screen, a natural reaction to attempt to move the pointer is to physically reach up and "grab it" with index finger (14) and opposing thumb (12). This grabbing action is mimicked almost perfectly when activating the device (1). Also, the device (1) is always in contact with the user's hand (13), therefore the user no longer has to 'find' and physically acquire the device (1) first.

The device (1) also requires no physical desktop space. This is important for desktop computer (office desk) users, and especially important for laptop computer users. A laptop computer typically has a specifically built-in pointing interface, for precisely this reason. However, as previously discussed, these interfaces have not proved as effective as a conventional mouse, and often a laptop user will still use a conventional mouse, despite the additional inconvenience. The device (1) needs no additional desktop space, is small and portable, and more effective than a conventional mouse.

'Click and hold' or 'drag and drop' is a widely used and intuitive means to perform a 'cut and paste' or 'copy and paste' in a single action. It is a notable efficiency tool in text, image and file manipulations and making selections e.g. selecting text in a text document. It is also a convenient means of moving a 'slider button', e.g. a scroll bar on the right hand side of a web browser.
'Click and hold' works well with a conventional mouse when the amount of movement is relatively small. A problem arises however when the object has to be dragged a longer distance. When the user is "dragging", the mouse button must be clicked down and held down. If, while moving the mouse, the physical edge of the mouse movement is reached (e.g. the edge of the table or the edge of the keyboard) - the user is forced into trying to lift the mouse while holding the mouse button down. This is an inconvenient and very inefficient manoeuvre. The device (1) performs the 'click and hold' action with the index finger (14) and thumb (12) in a substantially pinching action rather than in the downward direction of a conventional mouse. This allows easy lifting of the device (1), while performing a 'drag and drop' action, permitting objects to be effortlessly dragged over any screen distance.

When a selection needs to be made that exceeds the viewable screen or window size, the document needs to scroll. In typical programs this issue is addressed by automatically scrolling the document when the pointer moves off the edge of the window. However, the speed of the scrolling is not accurately controllable. Often a user will scroll past the end of the desired selection point, and will over-correct when trying to scroll back in an oscillating manner.

The device (1) solves this problem by allowing the user to easily make a selection, and then (while remaining in Selection mode) activating and deactivating Document Navigation mode (as described above). This action is intuitive and is likely to be performed by the user subconsciously. By way of example, the steps a user would perform in a typical word processing document are:

- Activate the device (1) and click and hold at the start of the selection.

- Make contact with middle finger, (contact sensor (8)) (to activate documentation navigation).

- Navigate to the desired page / place in the document, and then release the contact sensor (8).

Yet further features and advantages may be realised by using two devices (1) simultaneously, i.e. one for each hand. Although the use of two conventional computer mice has been technically possible since their inception, a second conventional mouse would still require the location and acquisition down-time associated with a single mouse, together with the even greater reduction in dexterity associated with trying to control a typical non-ergonomic design mouse with the user's non-dominant hand. Both these difficulties are overcome with the present invention and provide a basis for numerous implementations including the following:

- Dual monitor configurations are becoming more commonplace in computing applications, particularly for 'power users'. An individual device (1) may be configured to be individually associated with each screen.

- One device (1) may be configured with unrestricted on-screen pointer movement whereas the pointer of a second device (1) could be restricted to specific screen areas or features, e.g. toolbars, text areas, and the like.

- The contact sensors (7, 8) on the two devices (1) may be used simultaneously to provide further combinations accessing specified features/functions.

- Two devices (1) may be used to control a single on-screen pointer. As described above, the on-screen pointer is only moved when the user deliberately activates the device (1) and thus the user is free to use the most appropriate hand to control the pointer movements at any given time. This would reduce movement fatigue (as both hands are used) and may be used to permit access to other keyboard keys (e.g. <CONTROL>, <SHIFT>, <ALT> keys) with the appropriate hand while simultaneously moving the screen pointer.

- Computer games may utilise several features from the use of two devices (1). In a 'first-person' shooting game for example where a player typically controls a single onscreen character, one device (1) may control the character's movement while the other controls the weapon sighting. In driving/vehicle control games, one device (1) may control vertical movement while the other controls horizontal, or two separate vehicles may be controlled by the respective devices (1). One device (1) may control the speed of the vehicle while the other controls its rotational movement, simulating the action of a steering wheel. In simulated human fighting games, separate devices (1) could control the left or right hand/leg of the player's character or the like. The separate devices (1) could, for example, be used to bring the character's two hands together to catch a ball in a sports game.

- Two separate objects (e.g. files, images, or the like) may be simultaneously 'cut and pasted' / 'dragged and dropped'.

In further embodiments, the device (1) may be used independently from a keyboard or even a monitor. For example, the device (1) may provide a form of advanced 'remote control' whereby commands or symbols could be physically drawn/written (in the 'Digital ink' mode) to operate appliances/home theatre devices. Drawing an 'X', for example, may turn the device off, writing the number '1' may change the television to Channel One, music track one, or the like. The device (1) could sit on a mouse pad-type tray or similar containing a list of relevant commands.

In a further mode, the device (1) may be utilised as a remote control for various onscreen menus such as satellite television, interactive services such as e-mail, gambling, home shopping and banking, and the like. When used in conjunction with handwriting recognition, the user may for example search for a movie title by writing the name, or play a particular song track by writing a song name.

Further embodiments (not shown) include the incorporation of fingerprint reading technology into one or more of the contact sensors (7, 8) and/or the thumb-engaging surface (4). This may be used for security and/or as a means of differentiating between users having their own respective configuration preferences.

In further embodiments, sensing the physical position of the device (1) on the keyboard (in a comparable manner to sensing the device (1) position in the Digital ink/handwriting mode discussed above) can result in context-relevant functions being accessed. For example, double clicking on particular areas of the keyboard would access different functions or menus, e.g. moving the device (1) to the right hand side may lower the speed of the onscreen pointer to temporarily provide fine movements.

Many laptop computer keyboards and other devices utilising restricted-size keyboards incorporate multiple functions associated with the standard 'QWERTY keys. These functions may become accessible when the device (1) is placed in the 'active' mode. The keyboard may also include some visual indicator of the mode of the device (1), e.g. active, document navigation mode, zoom, digital ink/handwriting etc.

It can be thus seen the present invention offers numerous advantages over prior art devices such as pen/tablet systems, touch pads, embedded keyboard track pointers and tracker balls.

As an example, 'Clicking' with known electronic pen devices is achieved with a button on the pen itself, or by pressing the nib into a surface. Both of these operations are not as effective, as the corresponding action using a conventional mouse or the present invention. This is at least partly due to the nib point of the pen device being the only portion in contact with the surface, thus reducing stability during the 'clicking' action. This instability hinders steady holding of the pen (and on-screen pointer) during 'clicking'.

It is also impractical to locate two (or more) buttons on a pen. In contrast, the present invention may have two or more buttons (as per a conventional mouse) combined with high stability, as the user can apply downward pressure with their thumb to hold the device in place while clicking. Furthermore, a button on a pen device can be difficult to easily locate, as the device itself can be rotated between the user's fingers during use and/or fidgeting. Consequently, adjustment is often needed to locate a finger or thumb on the button before it can be clicked.

The touch pads, embedded keyboard track pointers and tracker balls are further examples of input devices that have been successful though not as ubiquitous as the mouse. These three devices each offer an advantage over a conventional mouse in that the device itself is stationary, and therefore requires less desktop space to operate, accounting for their primary area of success on laptop computers.

It has been found however that static input control devices that do not use movement of the entire device to indicate on-screen pointer movement lose an appreciable degree of control in comparison to a conventional computer mouse or the present invention. As these devices restrict movement solely to the fingers, only small movements can be performed causing inefficiencies when the pointer needs to be moved over large distances. If this is compensated for by configuring pointer movement such that movements of the fingers produce proportionally larger movements of the pointer, this inevitably causes a reduction in accuracy.

The present invention also allows the finer movements of these devices (using the fingers), but also allows bigger "sweeping" movements that can be achieved with a conventional mouse by using the hand/wrist and arm. Moreover, this may be performed while utilising the keyboard area as the movement surface - i.e. not using up any further desktop space and not requiring the hand to be moved between the keyboard and device.

Another disadvantage of stationary (or semi-stationary) devices is that the speed of the on-screen pointer movement can be more difficult, and less intuitive, to control. For example, with embedded keyboard track pointer devices, pointer movement relates to the amount of 'pressure' applied, and does not relate directly to (a distance of) movement of the fingers. However, a finer and more intuitive control is achievable by users when applying a 'distance' of movement, in contrast to applying a varying amount of 'force' to a device.

Touch pads are a common interface device on laptop computers despite exhibiting the following disadvantages:

- pointer movement achieved by movement of the thumb or finger directly over the touch pad surface applies friction to the user's skin. Over a period of prolonged use this can cause discomfort, and calluses.
- different states of the user's skin may be applied to the touch pad (e.g. moisture, dirt or sweat) producing a sticky or slippery surface or the like, providing an interface that is inconsistent and potentially difficult or unpleasant to use.
- touchpad mouse buttons are typically fixed in position. Small hand movement are required to operate a touch pad, often misaligning the users fingers or thumb with the mouse buttons. This introduces a further inefficiency, where hand movement is required to achieve a mouse click.

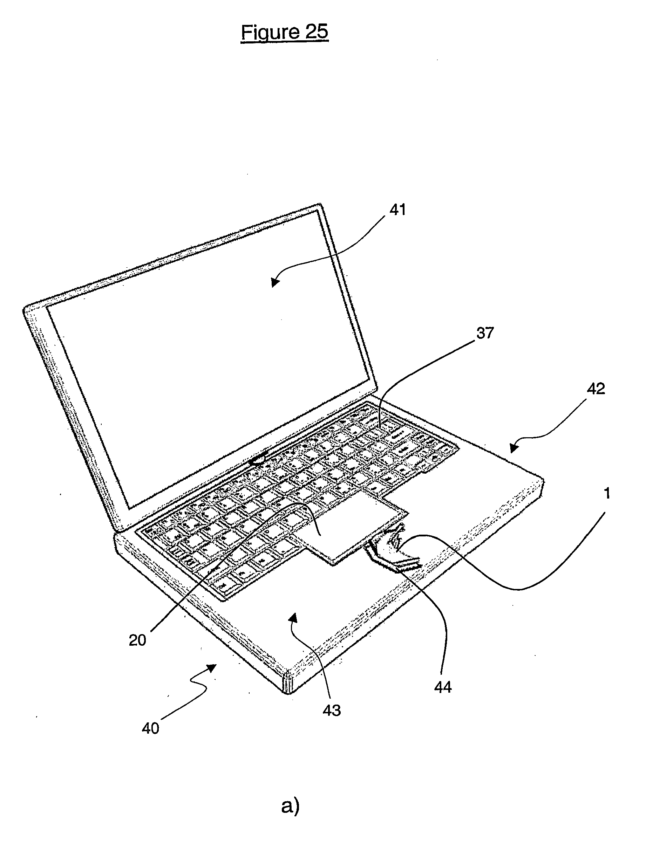

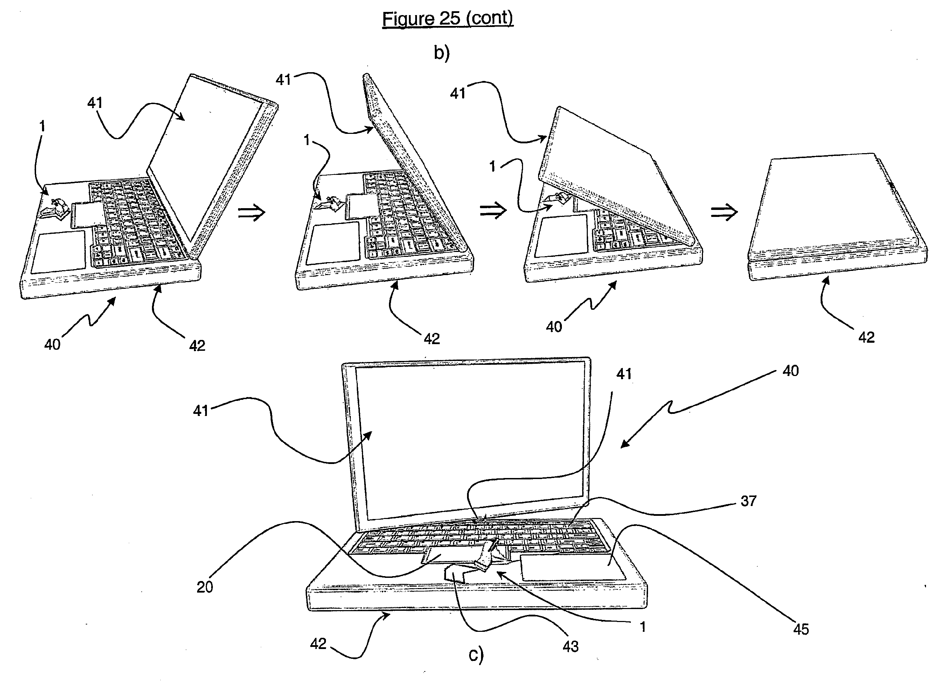

Figure 25 shows a computer (40) in the form of a laptop PC with a display screen (41) hinged to the computer main body housing (42). The computer is equipped with position sensing means located under the keyboard (37) and adjacent area (43) co-planar with the keyboard (1). The position sensing means may utilise any appropriate technology including means described herein such as electromagnetic, acoustic, or capacitive sensing and the like. The position of the device (1) may thus be sensed when used over any of the upper surface of the housing (42). The main housing (42) is further equipped with a device docking port recess (44) with a spring biased floor portion enabling the device (1) to be recessed into the housing (42) by one of two methods.

1. The device (1) may simply be inserted manually into the recess (43), wherein the floor portion may be latched between a depressed or raised fully raised position flush with the work surface (43).
2. Alternatively (as shown in figure 25 b), the recess (43) floor portion may be configured to automatically raise and lower in conjunction with the opening and closing (respectively) of the hinged display screen (41).

Figure 25 c) shows a further variant of the computer (shown in figure 25 a) - b)) also known as convertible tablet PC. The convertible tablet PC computer (40) is also equipped with a secondary writing/screen surface (45) and a pivotally hinged main screen (41) which may be rotated through 180 degrees about a central pivot point (46) as well as being folded flush with the computer housing/keyboard (42, 37). The keyboard (37) is also provided with the enlarged space bar key (20) as previously described with respect to the earlier embodiments. The secondary display area (45) may be configured to provide a range of features including:

- an enlarged "zoomed" portion of the main display screen (41) optionally configured to display the screen portion adjacent to the mouse pointer.
- act as a writing/slash drawing area for the device (1) operating in the digital ink mode
- display prompts/cue card information for user presentations whilst the main screen (41) is rotated to face the audience

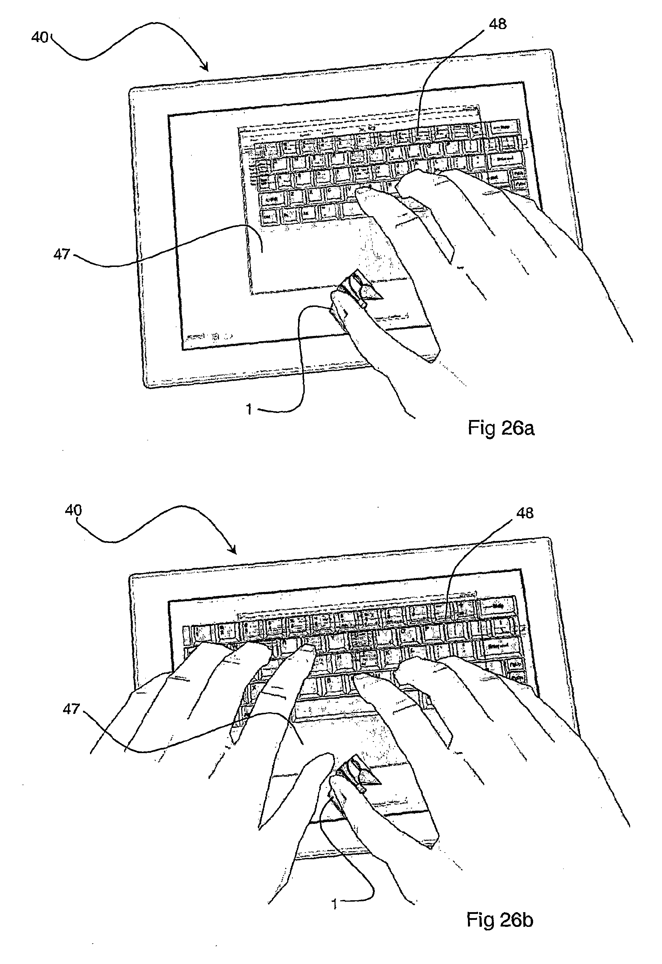

Figure 26(a) and (b) show a computer tablet PC (40) with a touch screen display (47) which preferably includes both passive (i.e. pressure activated) and active (proximity sensing) touch sensing means. Figure 26 a) shows a virtual keyboard (48) displayed semi-transparently on an upper portion of the screen (47). In embodiments with non-touch screen displays (41), the keys of the virtual keyboard (48) may be operated by a mouse device (1) or other pointing device. Preferably, the use of a touch screen (47) enables the keyboard to be operated via the user's fingers (14, 15, 16, 17) whilst the user's thumb (12) is retained in the thumb engagement surface (4) of the device (1).

The keyboard (48) may be configured to be "tethered" a defined distance from the physical position of the device (1) over the screen (47) so as to be readily accessible to the user's fingers for typing. In one embodiment, the keyboard (48) is displayed only when the device (1) is inactive. When the device (1) is placed in pointer navigation mode by touching the index finger tip contact sensor (7) the user is signalling their intention to perform some non-typing activity and thus removing the keyboard (48) eliminates excessive screen clutter. The keyboard (48) may be configured to be displayed when the device (1) is activated by thumb contact of the thumb contact sensor (49) (visible in figure 21a), though obscured in figures Figure 26a) and b)). Applying further pressure to actively click the thumb contact sensor (49) may be configured to input a <spacebar> keyboard command.

The keyboard shown in figure 26 a) shows a 'half size' keyboard, suitable for single handed input where the user is standing, or in sitting position without a desk, and thus holding the tablet (40) with one hand, and typing and operating the device (1) with the other hand. If the user is in a desktop environment, or able to support the tablet computer (40) on their lap, the keyboard (48) may be enlarged to permit two-handed typing. Figure 26 b) shows a user typing with both hands on a keyboard (48) extending for the full screen width.

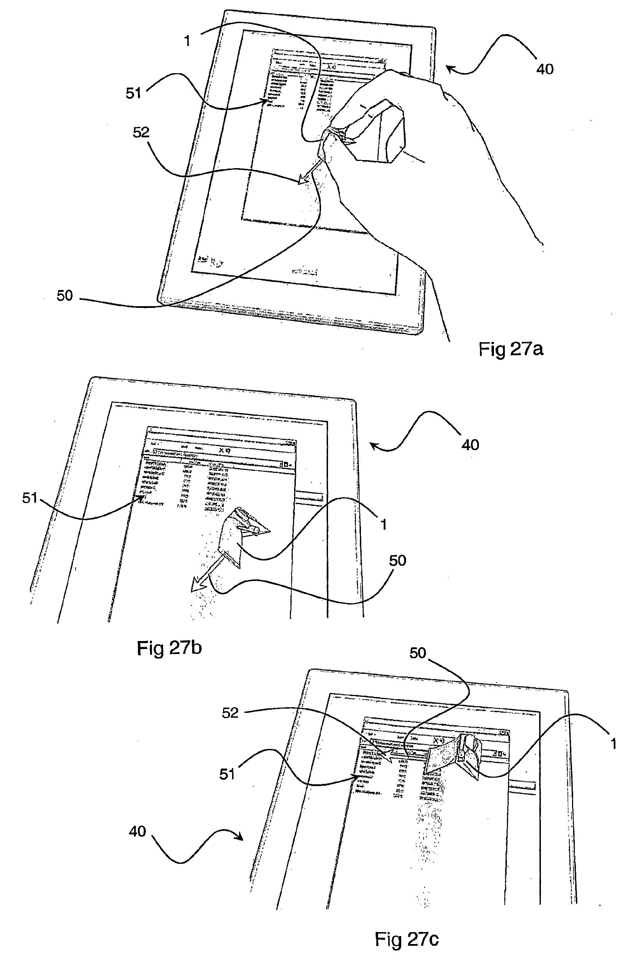

Figures 27 - 28, show a further aspect of the present invention in the form of a virtual 'stick' pointer preferably applicable for use with the mouse device (1) described herein. However, it will be appreciated that the virtual stick pointer may readily be utilised with other mouse or pen input devices.

The virtual pointer stick technology is a display screen control method and associated software that allows a user finer, more dynamic control using a pointing device (1). This is achieved by not only interpreting movement in an x and y plane (as per conventional pointing devices) but also sensing rotation of the device (1). This rotation is reflected on the screen as pointer movement analogous to using a physical pointing stick, e.g. a teacher using a blackboard and pointer.

In the embodiment shown in figure 27 a-c), the pointer (50) is elongated about a major longitudinal axis, with an arrowhead (52) at a distal end though it will be clear that alternative pointer shapes may be used. The proximal end of the pointer (50) projects orthogonally from the thumb-side of the device (1) and moves in conjunction with the device (1). In one embodiment, the control software is configurable such that the pointer (50) is capable of selecting (in conjunction with one or more con-

tact sensors inputs designated to activate 'selection' mode) on-screen objects (e.g. files (51)) and text located co-axially with said major pointer axis and/or in an arc transcribed by the rotation of said elongated pointer. Thus, the user is able to select several objects (51) with a small angular rotation rather than large linear movements.

In a further embodiment, the control software is configurable such that pointer is capable of performing the functions of a conventional computer mouse pointer, including;

- Positioning the distal end of the pointer (50) over a target on screen, such that a contact sensor input (or combination of inputs) performs an action, e.g. Clicking on a URL web page link, on an on-screen button, in a field in an on-screen form and so forth;

- Positioning the distal end of the pointer (50) over a target on screen, and inputting a 'touch hold' input.(i.e. clicking and holding) to at least one contact sensor such that any further movement performs an action, e.g. moving an object on screen, or marking an area of the screen such as a selection of text or drawing an onscreen path.

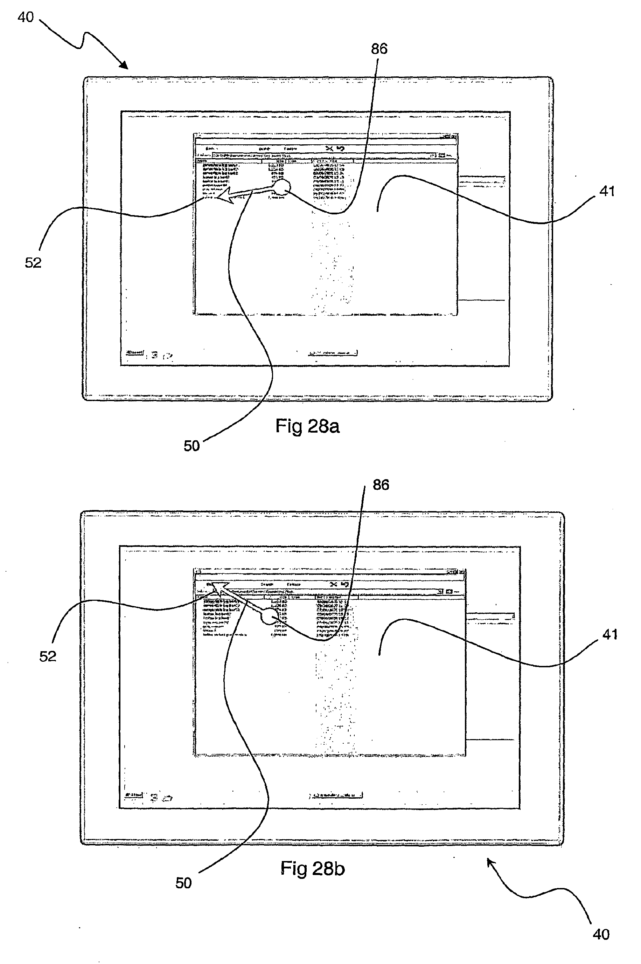

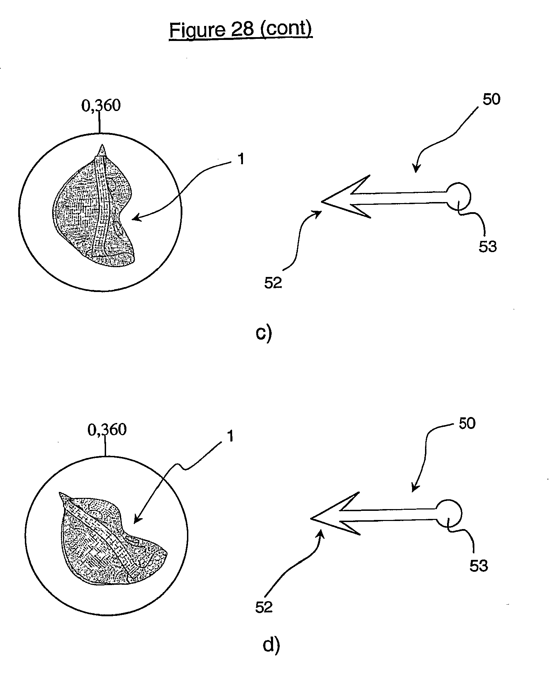

Figure 28 a) and b) show an alternative embodiment whereby the mouse device (1) (not shown) is located on a conventional work surface adjacent the computer display (41), such as a mouse pad or the like. In such embodiments, the onscreen pointer (50) is generated in the conventional manner, with the additional feature of pointer input and control from said rotational movement. Preferably, said pointer (50) is elongated with two ends, having an arrowhead at one distal end (52), and a substantially circular 'pivot point' symbol at the other end (53). The pointer (50) may be user configured to vary the shape or length of the pointer shaft; or, to adjust the scaling between pointer (50) rotation and the corresponding physical rotation of the device (1) to facilitate controlled, accurate selections.

Activation of the rotational virtual pointer may be achieved by numerous methods, including activation of dedicated device contact sensor, or a combination of inputs from existing contact sensors. Alternatively, the rotational pointer may be used continuously as the default pointer and thus not require any user activation. The device (1) rotation generating the onscreen pointer (50) rotation may be sensed using any convenient technology such as optical technology, or commercially available electromagnetic sensor or electronic compass technology. Two optical sensors located in the base portion (2) generating device movement information transmitted to, and processed by, the computer (40) may be used to calculate the rotation as described more fully below. Alternatively, an available technology electromagnetic sensor from Wacom Technology Corporation provides a pen device capable of detecting 'tilt' and the direction of tilt.

Consequently, fitting a coil in the device (1) at a known tilt angle permits the degree of rotation and direction of the device (1) to be sensed. Further Wacom Technology Corporation products incorporate two coils built in to a pen device to detect rotation and may be adapted for implementation in the device (1) to detect rotational movement to generate pointer (50) onscreen rotation. Yet further embodiments may utilise two acoustic transmitters to determine rotation.

As discussed above, both rotational pointer embodiments as shown in figures 27-28 may interpret rotational movement of the pointer (50) in any convenient manner, including the following methods described with reference to figures 28 c -d).

In an embodiment with an electronic compass or electromagnetic sensors (not explicitly shown) located in the device (1), the compass outputs a direction (e.g. a bearing from 0 to 360°) to the pointer control software via a software driver (not shown) together with positional x and y axis data.

The screen control software is capable of drawing an onscreen pointer (50) with a rotation orientation corresponding to physical rotational orientation of the device (1), plus any defined offset. Thus, in one embodiment, the control software allows the 0° orientation to be calibrated such that with the device orientated at 0° or 360°, the positional data value received from the device (1) is interpreted to display a pointer (50) orientated horizontally, pointing to the left or at 270° (as shown in figure 28 c)) denoting a neutral or rest position. Thus, the embodiment of figure 28 c) shows an offset of 270° or - 90° between the device (1) orientation and the onscreen pointer (50) orientation. Figure 28 d) shows an alternative embodiment with an offset of 315° or -45°. It can thus be seen, the neutral position (and associated offset) may be configured to be any desired angle.

Thus in use, the x and y positional data from the device (1) is used to position the onscreen centre of the pivot point (53) while the rotational data is used to draw the pointer shaft and tip (52) at the correct angle. Considering a numerical example where the control software designates the pointer (50) length as 30 units and the positional data from the device (1) gives an onscreen position of x=400, y=200, a measure rotational angle of 270° and an offset of -90°.

Using this data, the virtual pointer stick software would draw an arrow that has a pivot point starting at position x=400, y=200, the arrow would then be drawn at an angle of 180 degrees (270 - 90) (i.e. pointing straight down)

The control software may be configured to take account of the required offsets for the x and y positional data to ensure the arrow tip (52) does not move past the edge of the screen, although it may allow the pivot point (53) to move off the screen edge.

Note that if the device (1) is operated directly on the screen surface (as shown in figure 27) then the pivot point (53) will be 'under' the device (1) and not directly visible.

In a further embodiment, the device (1) may be equipped with two optical sensors (not shown), one located substantially at the device centre (sensor 1) with the other (sensor 2) located towards an extremity of the device (1).

Conventional optical movement sensing technology used in mouse pointers records relative displacement in any direction, not absolute position. Consequently, if the device (1) is moved in any direction without any rotation, the x and y displacement values for the two sensors remains the same despite the device (1) movement to a new position.

The screen control software uses the sensor 1 positional data to determine the onscreen position of the pivot point (53) (as described above) and calculates the rotational angle offset of the pointer (50) when it detects any discrepancy in the displacement values of the two sensors.

There are many ways of interpreting the data to obtain the corresponding on screen pointer (50) rotation, of which the following is one example:

> 1. Assuming an on-screen pointer (50) length of 40mm and a separation between optical sensors 1 and sensor 2 is 20mm, the device is rotated and moved, and the displacement values for both sensors are received by the screen control software.
> 2. Sensor 1 indicates displacement of x=+10 and y=+0 (i.e. a move of 10 units to the right), and sensor 2 indicates x=+14, y=-1.
> 3. Thus, the pivot point (53) of the pointer (50) will be moved on screen 10 units to the right.
> 4. The corresponding position of the pointer tip (52) is determined as follows:
>
>> a. The difference in displacement between the two sensors is calculated, i.e., x = +4 (14-10), and y = -1 (0-1).
>> b. The ratio of the distance between the two sensors and the on-screen length of the pointer (50) is calculated i.e. Pointer stick length = 40mm, Sensor gap distance = 20mm, therefore ratio is '2' (40/20).
>> c. Multiply the sensor displacement differences by the ratio i.e. x = 8 (4*2), y = -2 (-1*2)
>> d. The updated position for the pointer tip (52) is determined when the displacement values for sensor 1 (x=10, y=0) are added to the 'scaled' displacements from step c, i.e. x =18 (10 + 8), y = -3 (-2 + -1).
>> e. Thus, the position of the pointer tip (52) will be moved 18 units to the right and 3 units down and a line will be drawn between the tip (52) and the rotation point (53).
>
> 5. If moving the pointer tip (52) results in a change of length of the pointer (50) (due to one of the sensors missing some displacement data, or due to rounding issues) then the pointer tip (52) will be moved to the nearest location that would maintain the pointer (50) length as close as possible to the configured length.

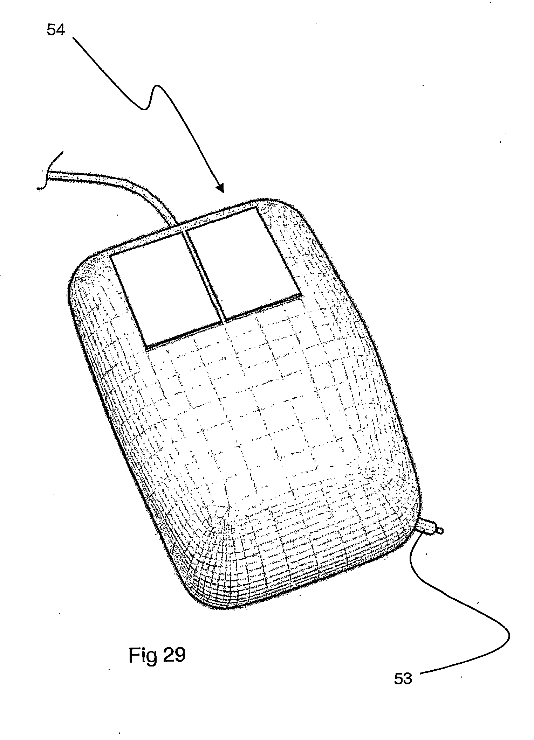

Figures 29-44 show a further embodiment of the present invention in the form of document navigation, scrolling, and zoom control methods applicable for implementation with a device (1) substantially as described herein, or with other known pointing devices.

Although the method may be performed by unmodified conventional pen/mouse pointer devices or the device (1) described herein, preferably the device (1) incorporates a dedicated nib (53). Figure 29 shows a conventional two button mouse (54) with a scroll nib (53) projecting from a rearward corner, while figures 22 a) - b), 22 d), 23 a) and 30 show a device (1) also equipped with both a scroll nib (53) and a digital ink writing nib (21) on opposing rear corners of the base portion (2). In each device (1, 54), the scroll nib is positioned and orientated such that the distal portion of the nib (53) is raised from the lower surface of the device (1, 54) to prevent contact with the work surface during use with the underside of the device (1, 54) placed flush on the work surface.

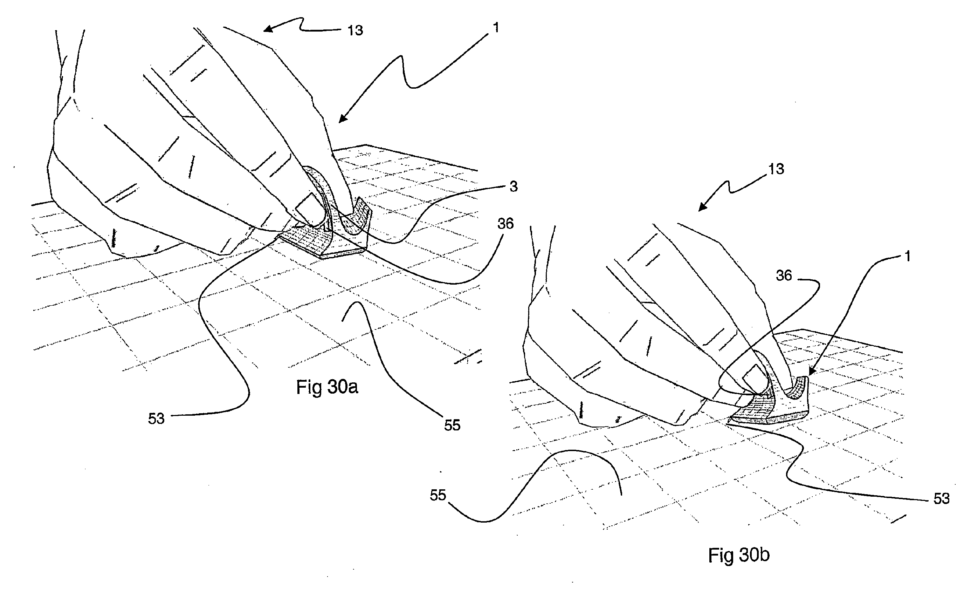

The device may be placed into 'Document Navigation Mode' by several means including a dedicated contact sensor, initiating contact (or close proximity) of the nib (53) with a work surface, a combination of inputs to existing contact sensors and/or tilting the device (1, 54). Thus, the nib (53) itself may be a contact sensor capable of distinguishing between touch contact and 'click activation'. Thus, considering device (1), two states' touched' and 'clicked' are provided, corresponding respectively to or 'hovering' over or touching the work surface and a 'click' activation from pressing the nib (53) onto the work surface. Figure 30 a) shows a device (1) in pointer navigation mode with the base portion flush with the work surface (55). The tip of the scroll nib (53) at the rear of the device (1) remains clear of the work surface (55). Figure 30 b) shows the same device (1) being operated in 'Document Navigation Mode', instigated by tilting the device (1) rearward, with the tip of the scroll nib (53) contacting (or closely adjacent) the work surface (55).

It will be appreciated the method could also be readily implemented with a pen pointing device (not shown), where document navigation mode may be invoked by pressing a contact sensor on the barrel of the pen, or on the keyboard, or a button on a separate device (e.g. on a mobile device). Such a pen device used with a tablet PC (or other portable device with a stylus) configured to implement nib point scrolling would offer users a significantly more effective means of navigating a document than the currently available 'scroll bar' scrolling method.

Considering the method in more detail:

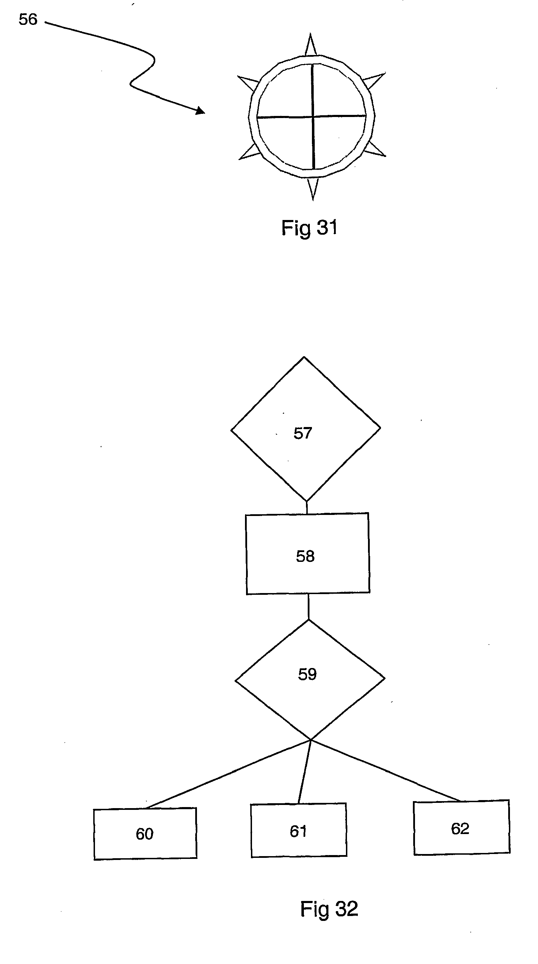

When the nib point (53) is placed in contact or close to the work surface, the host computer (not shown) enters 'Document Navigation Mode' and the on-screen pointer changes to a cross-hairs target (56) with a spiked outer annular ring (shown in Figure 31), centered in the middle of the document window. It will be appreciated numerous alternative graphical representations are possible and the invention is not limited to the exemplary embodiment described herein.

The flow chart shown in Figure 32 illustrates one embodiment of a control process associated with the method in which:

Initially (step 57), a determination is performed whether the nib point (53) is contacting or sufficiently proximate the work surface (55) to signify the user's intention to enter Document Navigation Mode. If positive, Document Navigation Mode is instigated (step 58) and the onscreen pointer changes to the spiked cross-hair symbol (56), preferably located in the centre of the document. In one embodiment of the method, the next stage (step 59) determines the type of activation input by the user via the nib tip (53) contact sensor. The nib tip (53) may be either:

- Double or single clicked and released (step 60); or
- Double clicked and held (step 61); or
- Single clicked and held (step 62).

In one embodiment, if the user performs a double or single click (step 60) and release and moves the cross hairs (56) from the centre point, the viewed document would be centre-based on the new cross-hairs cursor (56) position; a double click and hold (step 61) instigates 'zoom' mode, as described in more detail subsequently, while a single click and hold (step 62) enters 'scroll mode' as expanded on below.

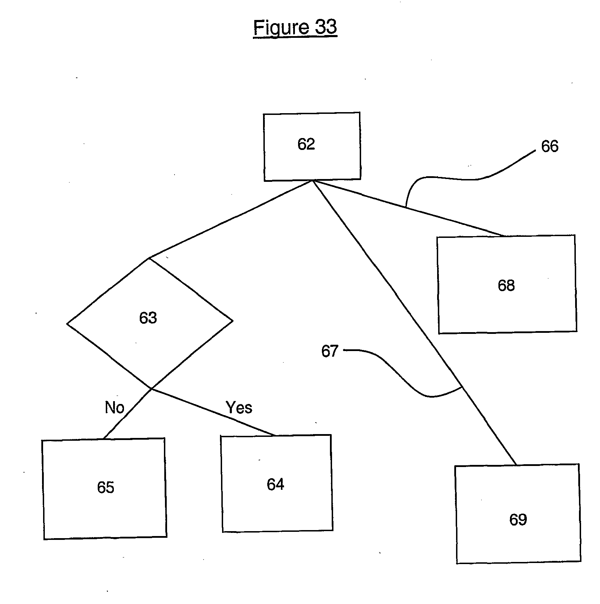

After instigation, the scroll mode (step 62) is implemented differently dependant on the type user input via the nib tip (53) sensor (as shown in figure 33). After a single click and hold (62), a determination is made (step 63) whether the click was performed with the cross-hairs pointer (56) still centred, or whether the user had moved the cursor. If the outcome of step 63 is YES (i.e., the cross-hairs pointer (56) is still centred), the program enters a 'free form scrolling' (step 64) where the document will be centered based on the target position, wherein any movement in any subsequent direction results in unlocked scrolling in that direction. If the outcome of step 63 is NO, the program enters 'Perpetual scrolling Mode' (step 65) as described more fully below.

Two further alternative inputs are possible after entering scroll mode (62). The user may perform either a single click together with a substantially up or down 'fling', (66) or alternatively a single click and a substantially left or right 'flick' (67). The terminology 'flick' and 'fling' are purely suggestive labels to denote essentially the same action, but in different directions. A 'fling' (66) is a brief rapid movement of up or down following the single click (symbolising spinning the spiked ring of the pointer (56)) and can be defined (preferably by the user) to rapidly scroll the document (step 68) to the start/end of the document. Correspondingly, a left/right 'flick' (67) moves the document (step 69) by a user-defined amount, which may include moving a page up/down symbolising the act of flicking the pages of a book.

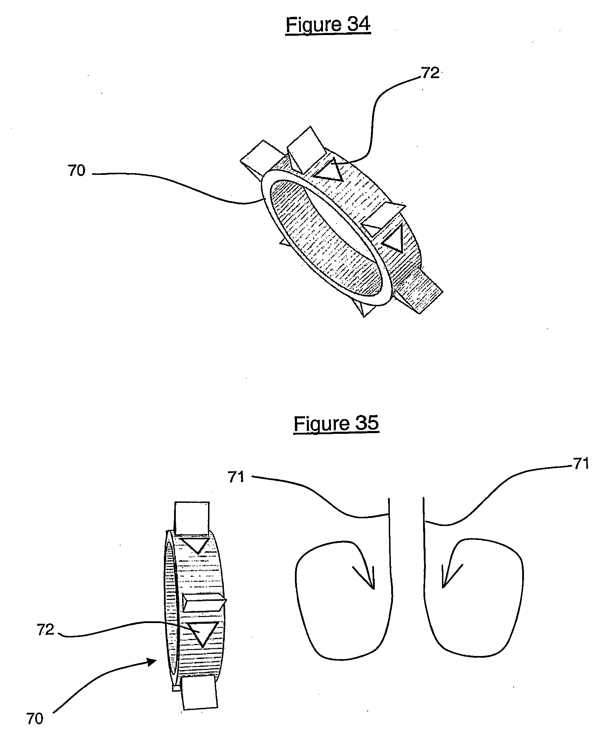

In perpetual scrolling mode (step 65) after the nib point (53) is pressed down on to the work surface (55) and held, the spiked ring cross-hairs cursor (56) is replaced by a three dimensional (3D) representation (70) (shown in figures 34 -36, and 38). As the user moves the nib point (53) in any direction, to indicate the direction of the scrolling, the spiked ring (70) will briefly rotate about an axis in the plane of the screen to align the plane of the ring (70) to the new 'defined' direction of perpetual scrolling. In some applications e.g. spreadsheets or word processing, it is preferable to restrict the allowable direction of perpetual scrolling to the vertical or horizontal planes.

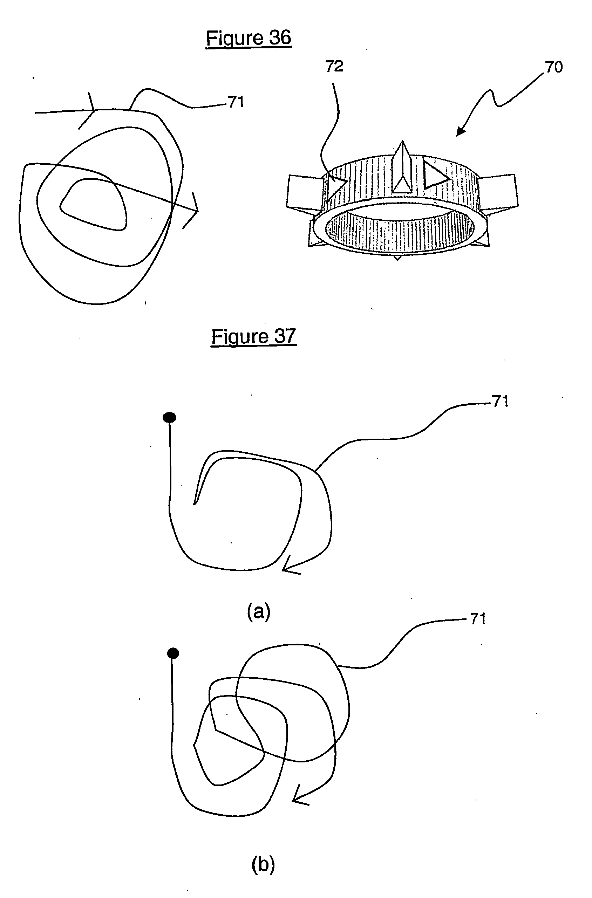

Alternatively, the perpetual scrolling may be locked to any direction the user moves the nib pointer during the initial defining phase. Figure 34 shows the spiked ring locked to a direction approximately upwards and to the left at 45 ° from the vertical, while figure 35 shows scrolling locked vertically downwards and figure 36 shows scrolling locked in the horizontal plane to the right. After the initial movement which sets the scrolling direction, the ring (70) will then 'spin' (animated on screen), about an axis through its geometric centre, to indicate the amount of scrolling in the locked direction. The scrolling direction is now locked in the same direction as the initial rotation and will remain locked until:

- the nip point (53) is lifted from the work surface, or
- the user 'backtracks' (as described below).

It will be appreciated however that alternative means of cancelling, pausing and/or reversing the direction of perpetual scrolling is possible. Locking the direction of scrolling is a powerful aspect of perpetual scrolling and enables the user to input a variety of ergonomically efficient device (1) movements (particularly rotational movements) to scroll through a document.

For example, to scroll down, the user will 'plant' the nib point (53) on the work surface (55) and move it down before commencing (preferably) circular movements which will result in perpetual downward scrolling at rate determined by the speed of the device (1) movement. The user can start the circular movement in either an anti-clockwise or clockwise direction according to their personal preference (whichever feels more comfortable), but the scrolling will still be locked in the down position. Figure 35 also shows two alternative paths (71) of the nib point (53) to achieve a small amount of downward scrolling together with the spiked ring (70) further rotated in the plane of the screen to depict the downward scrolling. Arrow markings (72) on the spiked ring (70) indicate the scrolling direction.

The actual scrolling distance may either correspond directly to the distance travelled by the nib point (53) or be modified by a multiplier e.g.

Scrolling distance = Nib point (53) distance * constant.

To scroll horizontally, e.g. right, the user would press down on the nib point (53) and move the device (1) to the right followed by a circular movement as shown in figure 36.

Several different means may be employed to reverse or change a locked direction of perpetual scrolling and the present invention is not restricted to any one method. In one embodiment, any nib point (53) movement, irrespective of its direction, may contribute to scrolling movement in the locked direction. Such a configuration would require an external means of exiting or reversing the locked scrolling such as a specific contact sensor input or combination of inputs from the device (1). In an alternative embodiment, the user can reverse the scrolling direction (i.e., a 180 degrees direction change) while still in the 'locked scrolling mode' by 'back tracking' the motion (most likely circular) using the device (1). If the locked scrolling motion is visualised of as a virtual 'jog dial', backtracking may be considered as 'turning the dial' the other way. Figure 37 a) shows an example of backtracking where the nib point track (71) reverses direction both in the X and Y plane simultaneously. In contrast, figure 37 b) shows a nib track (71) which although the direction of rotation changes from anti-clockwise to clockwise, the directional reversals only occur in either the X or the Y axis at any given instant, not both. Thus, the track (71) shown in figure 37 b) would only generated locked scrolling in one direction with no reversal. Although the host computer (not shown) may also be programmed to recognise and categorise rotational nib point (53) to determine a 'backtracking' movement, it is computationally easier to resolve the issue into the X and Y-axis movements.

In a yet further embodiment, a reversal of the scrolling direction or 'back track' may be defined as any movement where the user reverses the nib track (71) and follows a reciprocal path. This enables the user to follow any pattern or motion they desire and allow a back track with an intuitive movement. Such an embodiment may be configured to incorporate a definable tolerance for the accuracy of the user in re-tracing the nib track (71) in a reversal for the action to be considered a valid back track.

A typical sequence for scrolling a document consisting of an 'image' would start with pressing the nib point (53) on the work surface (55) such as a desktop, followed by moving the device (1) in one direction. As the device (1) runs out of desktop space, the user would start a rotation movement, but the document will continue scrolling in the initial scrolling direction. When the scrolling 'target' (i.e. the scrolling 'destination', or point of user interest) is on the screen the user would lift the nib point (53) - and hover the nib point over the surface which would show the 'cross hairs' sight on the screen. The user then moves the nib point (53) (above the surface), and presses down on the nib point (53) when the on-screen target is under the cross-hairs (56) - this would align the target on the document with the centre of the screen/window.

During perpetual scrolling (in which the nib point (53) is 'held down'), the user may also perform a left/right 'Flick' (next / previous page) or a 'Fling' as described above. An up or down fling for example will in this case 'fling' the document to the edge in the current locked scrolling direction.

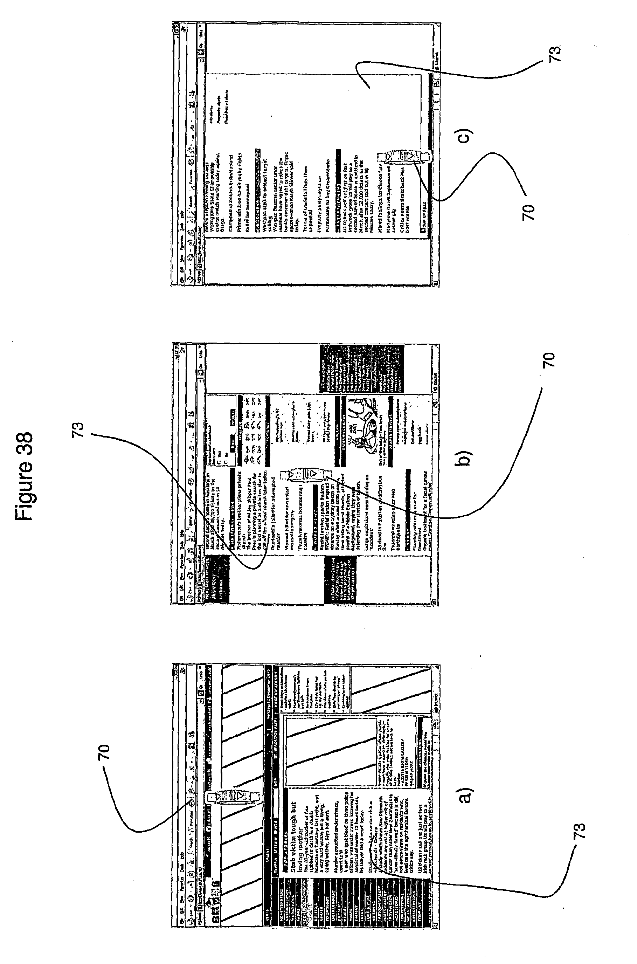

As shown in figure 38, the screen position of the scrolling cursor (i.e., spiked ring (70)) within the screen window (73) may also be used to represent the current position of the screen window (73) with respect to the whole document. In the example shown in figure 38, a web browser that has just loaded a web page that is three times 'taller' than the view window (73). Figures 38 a) - c) show the sequence of a user scrolling down the document from the top figure 38 a) to the bottom (figure 38 c)) in locked perpetual scroll mode.

The spiked ring (70) is aligned along the y-axis at the top of the window (73), and is also aligned in the center of the x-axis. This x and y-axis alignment indicates the viewed screen is at the uppermost portion of the document, and is centred across the x-axis as the window (73) is displaying 100% of the document width.

As the user scrolls down, the spiked scroll wheel (70) 'rolls down', such that at the half way point (figure 38 b)) of the web document, the cursor (70) is centred in the y-axis. Correspondingly, as the user reaches the end of the document (figure 38 c)) the ring cursor (70) has rolled to the lowermost portion of the window (73). Thus, the movement of the cursor (70) over the screen window (73) not only provides the Y-axis visual location of common scroll bar slider buttons, but also in the X-axis. The window (73) may thus be displayed without conventional scroll bars, thus liberating screen area which is particularly beneficial for small screen displays on mobile computing devices.

If the user stops scrolling in a given direction (typically by stopping a rotational movement), while still holding down the nib point (53), the Spiked Ring cursor (70) will fade/disappear and will re-appear as soon as movement is detected again. Scrolling will then continue in the previously locked scrolling direction. In one embodiment, any back-track movements generated shortly after a re-start are ignored. This avoids users being confused by the effects of unintended scrolling direction reversals after periods of screen inactivity.

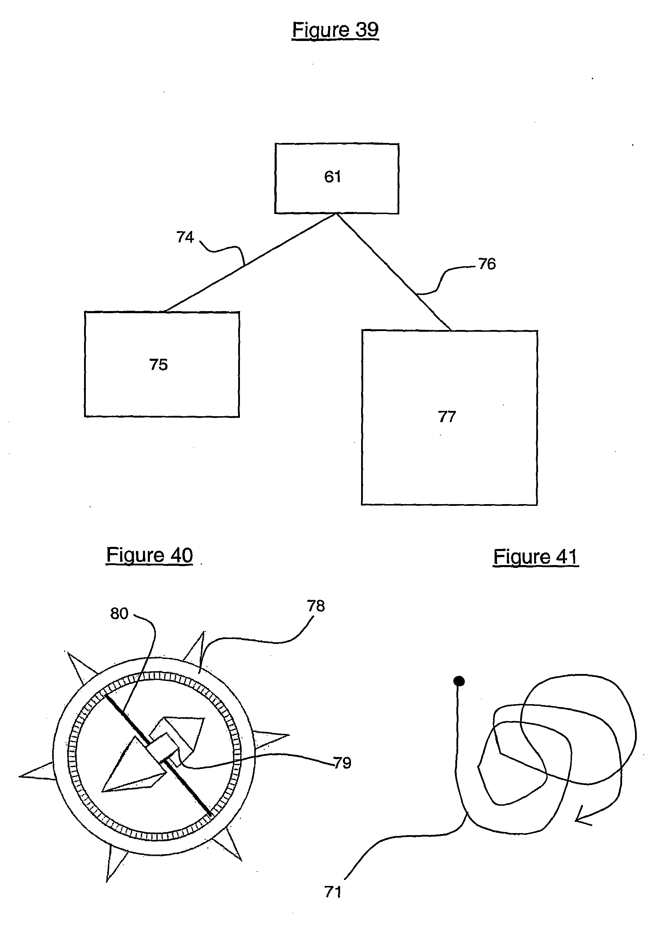

Figure 39 shows a flowchart for the zoom mode (step 61) introduced in figure 33 which may be instigated (for example) by a double click and hold activation of the nib point (53) sensor or alternatively, by activation of a second nib point (53). Different options may be obtained by either a double click and hold (74) which instigates a perpetual zooming mode (step 75), or a double click and 'fling' movement (76) which instigates a block zoom function (step 77).

In the perpetual zooming mode (75) the screen cursor is replaced by a spiked ring (78) in figure 40, similar to the scrolling cross-hairs cursor (56) though with the cross-hairs replaced by a double arrow headed element (79) in the centre of the cursor (78) located on a single diagonal cross hair (80). The zoom cursor (78) replaces the cross hair cursor (56) which appears when the nib point (53) hovers above the work surface. If the user had moved the cross hairs (56) from the centre point, the viewed document would be centred on the new cross hair cursor (56) position as per step 60 of the flowchart in figure 32.

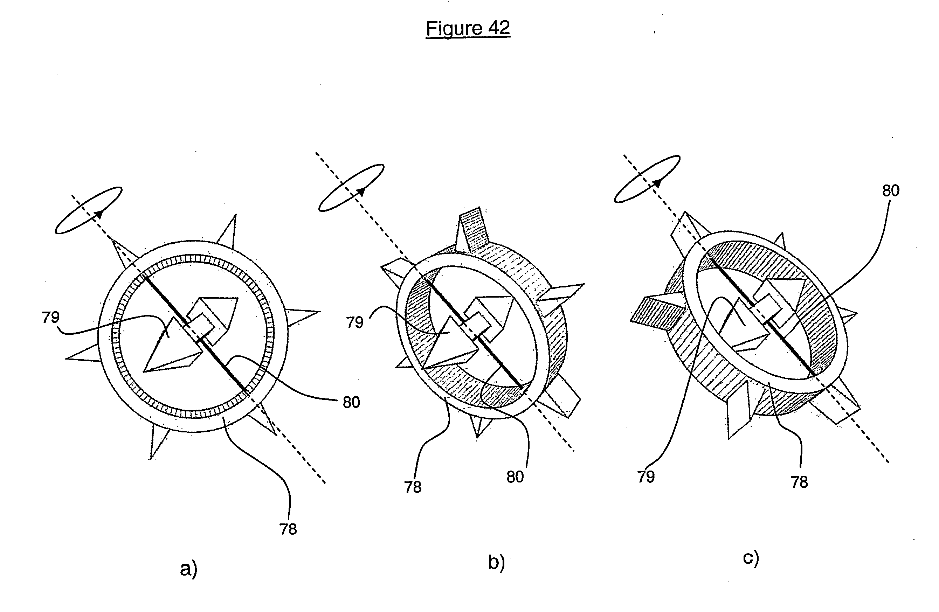

To instigate zooming in the embodiment shown, the user performs an initial movement in either the up or right direction, and to zoom out, the user begins with a downward or left direction movement. It will be readily appreciated that alternative movements may be defined to trigger zooming in or out. The classification of a movement that constitutes an upwards, or downwards or left or right may be preset or defined by the user. Thus for example, a movement between 135° - 315° (where 0° is straight upwards) may be defined as an upward movement. As per perpetual scrolling, the perpetual zoom direction (in or out) is locked by the initial classifying movement of the nib pointer (53). Thus, the track (71) in figure 41 would generate a perpetual zoom-out action due to the initial downward component of the nib path (71) before the circular/ arcuate movements quantifying the zooming out. During zooming, the spiked ring (78) displays a 3D rotation animation, rotating about the single cross wire axis (80) as shown in the sequence of illustrations in figure 42 a-c). A back-tracking input via the device (1) will again reverse the direction of zoom in a comparable manner to the perpetual scroll mode.

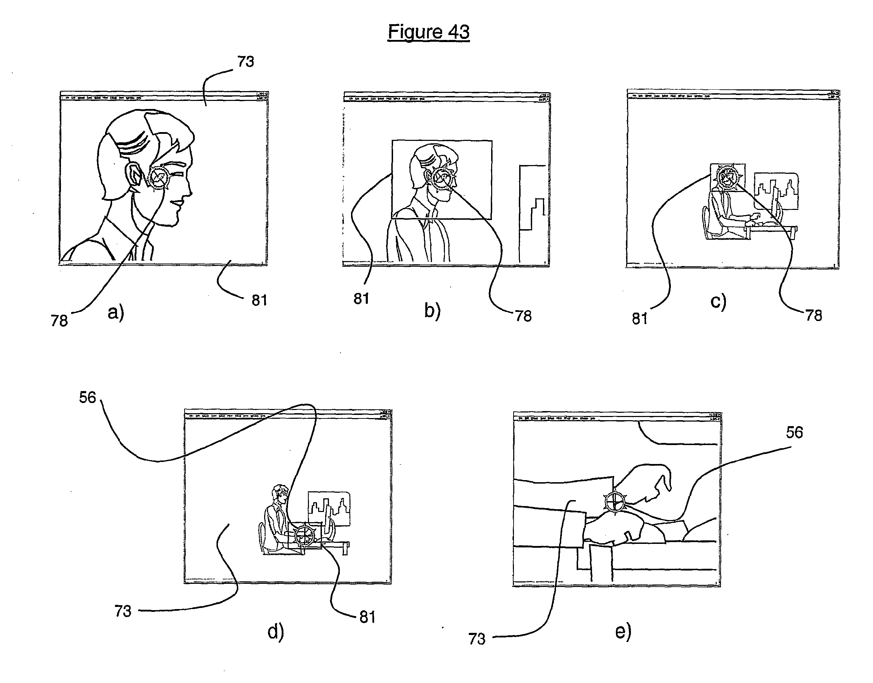

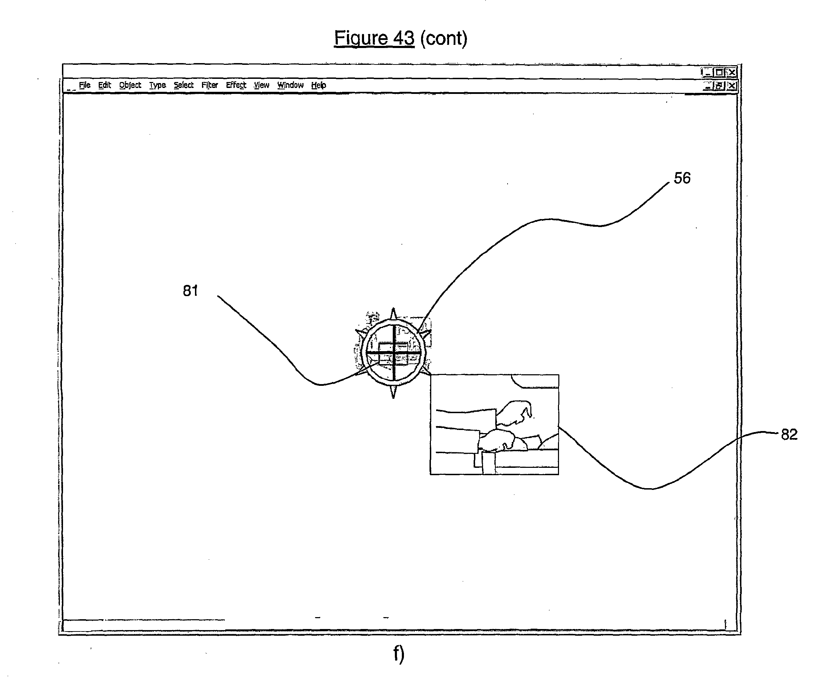

In a further embodiment, (illustrated with figure 43) a zooming out operation generates and displays a 'locked border' (81), i.e., a portion (typically a square) of the screen window (73) coterminous with the window (73) before the user performs a zoom out. As the user zooms out (shown successively in figures 43 a) - c)), the locked border (81) remains on the screen image decreasing in size commensurately with the remainder of the screen image during the zooming out process.

Once the desired zoom out level is achieved, the user can release (lift) the nib point (53), at which point the cursor reverts to a cross-hair (56). However, the scaled locked border (81) also becomes a part of the cursor (56) and moves in conjunction with the cursor (53) movements. The user then has the option of returning to normal pointing or clicking, or moving the locked border (while hovering) to a new screen position (shown in figure d) before pushing down on the nib point (figure 43 e)). This zooms in on the area bounded by the locked border (81) to the same zoom level existing at the initial creation of the locked border (81).

If the locked border (81) diminishes during zooming to the point that the image (or text) in the window (73) becomes indistinguishable or difficult to discern, the locked border (81) become a 'magnifying glass' when the nib point (53) is lifted from the work surface. Thus, two borders are present, the 'locked border' (81) which remains at the previous zoom level, and another border that surrounds the edge (82) of the magnified image. As the box is moved over the image it will show an enlarged image inside the magnified image box, as pictured in figure 43 f).

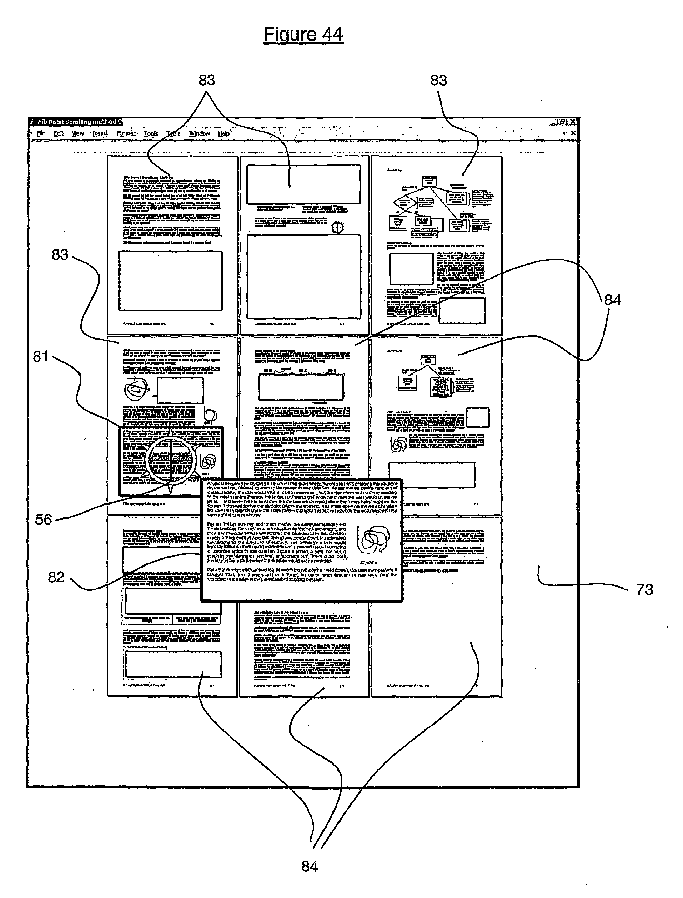

Figure 44 shows a yet further embodiment, for auto tiling. Documents that are proportionally 'Wide and short', or 'Skinny and Tall' tend to create a larger amount of unused screen area or 'white space' when zooming out. This space is typically located at each side, or above/below the document, depending on the document proportion. The nib point scrolling / zooming method can automatically tile the image to make full use of this unused screen area. For a very wide panoramic photo for example (not shown), the image will be split in two if there is enough blank space above / below the image. The left hand side of the image will be at the top, and the right hand at the bottom.

Documents that are 'text based' are typically very 'skinny and tall'. Thus, as the user zooms out from a document (83), the parts of the document above (83) and below (84) the current position will be laid out from left to right, top to bottom. For a document that contains paging information, borders can be placed around the pages.

In one embodiment, the tiling layout is determined and defined only when the document is first opened or the size of the full document is changed. The document is then laid out according to the most effective use of the available space while in the full (zoomed out) document view. If insufficient pages are available to split the document for tiling, the user may be prompted for confirmation before tiling occurs and the single available 'page' is split in two. For example a panoramic photo is effectively 'one page', and therefore the user will be first asked if they want the image split before tiling occurs.

As per the perpetual scrolling and zoom modes, during tiling the user may perform a 'fling out' (as described above) which will zoom to the maximum available extent, or a 'fling in' -to cancel the previous zooming and return to the original position. The above described scrolling, zooming and tiling embodiments possess several advantages over the prior art.

Having the 'locked scrolling mode' activated by an independent nib point (53) as opposed to a dedicated button provides enhanced ergonomics, particularly as this mode would typically be maintained over long periods of time (e.g. reading and scrolling a long document or web page) and it is therefore desirable to use the least sustained force necessary. Perpetual scrolling avoids the user having to perform a 'pick-up, put-down' action when the device (1) reaches the end of its physical movement (e.g. the edge of a mouse-pad). As the size of the 'circle' the user physically 'draws' is variable, they are able to have a large degree of control of the amount of the scrolling, i.e. to scroll faster, larger circular movements can be made. Although scroll wheels are very popular for reading documents, they are only well suited to one type of scrolling, i.e., document reading. Scroll wheels also only possess 50% efficiency in converting device (1) movement into device movement information as half of the index finger movement is wasted in 'repositioning' (moving the finger back to the top). In contrast the nib point method has 100% efficiency i.e. all device (1) movement is translated into scrolling movement, as well as possessing a much greater range of scrolling speeds, and directions.

Having a dedicated contact sensor (and finger or thumb) that permits a conventional left mouse click to remain in a 'click and hold' position, allows the user to make very efficient 'large selections' that require scrolling. This is due to the selection process (by clicking and holding the left mouse button (7) or equivalent) and the scrolling / zooming process (using the nib point (53)) being independent. Making selections larger than the visible window are therefore greatly enhanced. Applications such as spreadsheets also benefit due to the effective scrolling in X-axis as well as the Y-axis. Similarly, a 'large selection' operation extending beyond the currently viewed document is readily performed.

The above scrolling method is also particularly useful with a pen device (not shown) on portable computing devices such as a pocket PC, or phone that has a stylus. As the screen size is intrinsically small, there is an unavoidable requirement for scrolling when, for example, browsing typical web pages, where a high degree of vertical and horizontal scrolling is often needed. In such embodiments, the device would be provided a 'scroll button' which has a touch sensor, where touch would indicate 'hover mode' on the pen, and 'click' would be the nib pressed mode.

The scrolling/zoom methods may be applied to many other GUI controls which have a requirement of increasing / decreasing values such as:

- volume slider controls or the like.
- standard menu selections (e.g. click 'File' and then 'scroll' down to 'Save As'), and to
- choices in a 'drop down list' (e.g. the list of recent URLs shown in the 'Address' field in a Web browser).
- Navigation and examination of file management folders, particularly those incorporating thumb nail images and the like.

Aspects of the present invention have been described by way of example only and it should be appreciated that modifications and additions may be made thereto without departing from the scope thereof.

**Claims**

1. A computer pointing device (1) including:

    - a base portion (2) with a lower surface adapted for sliding across a work surface;
    - a spine portion (3), comprising an upright structure capable of being grasped between a user's thumb (12) and Index finger (14) and/or middle finger (15) to effect device movement, said spine (3) projecting substantially upward from said base portion (2);
    - a thumb-engaging surface (4) on a first lateral side of the spine (3);
    - a thumb-retaining portion (11) associated with said thumb-engaging surface (4);
    - a middle fingertip-engaging surface (6) on a second lateral side of the spine (3) opposing said first lateral side,
    - an index fingertip engaging surface (5) positioned on the spine (3) above the middle fingertip-engaging surface (6), and

    **characterized In that** the thumb-retaining portion (11) includes a lip, ridge, protrusion, or raised edge located on an opposing lateral side (10) of said thumb engaging surface (4) to said spine (3) for retaining a user's thumb (12) during downward and/or lateral thumb movements, the thumb-retaining portion (11) capable of providing lateral resistance to the movement of the thumb (12) on the opposing side of the thumb-engaging surface (4) such that the computer pointing device (1) is capable of being moved by solely lateral movement of the thumb (12) against said lip, ridge, protrusion or raised edge (11) in a direction away from the spine (3), and
    the computer pointing device (1) includes at least two contact sensors (7, 8, 36), both located on an individual fingertip engaging surface (5) on said spine (3), wherein one of said contact sensors (7, 8, 36) is rearward and elevated with respect to of the other contact sensor (7, 8, 36).

2. A computer pointing device (1) as claimed in claim 1, including:

    - a movement sensor system capable of detecting device movement relative to a work surface and generating device movement information, and
    - a communication means capable of communicating device movement information and contact sensor signals to a computer and associated display screen to respectively provide on-screen pointer movement and input command signals to said computer.

3. A computer pointing device (1) as claimed in claim 1 or claim 2, wherein said lower surface is substantially planar or configured with one or more convex portions.

4. A computer pointing device (1) as claimed in claim 1 or claim 2, configured such that the computer pointing device (1) is capable of resting on said work surface supported on a plurality of contact points collectively defining a contact plane, said contact points including either:

    - one or more portions of said lower surface and distal portions of at least two projections (21, 53) extending from the computer pointing device (1), or
    - at least three projections (21, 53).

5. A computer pointing device (1) as claimed in any one of claims 1-4, wherein at least a portion of said thumb-engaging surface (4) is upward facing enabling a user to apply downward pressure to stabilise the computer pointing device (1) during activation of a contact sensor (7, 8, 36).

6. A computer pointing device (1) as claimed in claim 2, wherein said communication means is selected from the group including:

    - wireless radio transmitter;
    - infrared transmitter;
    - conductive lead;
    - acoustic transmitter;
    - magnetic field.

7. A computer pointing device (1) as claimed in claim 2 wherein said movement sensor system includes at least one of;

    - electro-optical sensor;
    - electro-mechanical roller sensors;
    - moving coil and magnetic filed disturbance sensors;
    - ultrasonic triangulation.

8. A computer pointing device (1) as claimed in claim 2 **characterised in that** the computer pointing device includes a nib (21, 53) projecting from the base (2), the nib (21, 53) including a contact sensor and wherein the computer pointing device (1) is configured to operate in:

    - a pointer navigation mode when the base portion lower surface is substantially parallel with the work surface, the computer providing on-screen pointer movement corresponding to said device movement information, and

- a different mode activated by tilting the device about said nib (21, 53) such that the lower surface is non-parallel with the work surface such that the nib (21, 53) contacts the work surface to activate the nib contact sensor.

9. A computer pointing device (1) as claimed in claim 8, wherein said nib (21, 53) is located on or adjacent a perimeter edge of the base portion (2).

10. A computer pointing device (1) as claimed in claim 8 or claim 9, wherein the nib (21, 53) is positioned and oriented such that the distal portion of the nib (21, 53) is raised from the lower surface of the computer pointing device (1) to prevent contact with the work surface in said pointer navigation mode.

11. A computer pointing device (1) as claimed in any one of claims 8-10, wherein the different mode is a digital Ink mode, wherein the computer provides a corresponding on-screen representation of said device movement from the received device movement information.

12. A computer pointing device (1) as claimed in any one of claims 8-10, wherein the different mode is a scroll mode, wherein the computer provides corresponding on-screen scroll movement from the received device movement information.

13. A computer pointing device (1) as claimed in claim 12, wherein device movement information in said scroll mode corresponding to an up or down 'fling' is represented by the computer as a scroll up or down respectively.

14. A computer pointing device (1) as claimed in claim 12 or claim 13, wherein device movement information in said scroll mode corresponding to a left or right 'flick' is represented by the computer as a scroll left or right respectively.

15. A computer pointing device (1) as claimed in claim 14, wherein said left or right scroll moves a document displayed on-screen by a user-defined amount, including moving a page symbolising the act of flicking the pages of a book.

**Patentansprüche**

1. Computerzeigevorrichtung (1), die Folgendes umfasst:

- einen Basisabschnitt (2) mit einer unteren Fläche, die dafür ausgelegt ist, über eine Arbeitsfläche zu gleiten;
- ein Rückenteil (3), das eine aufrechte Struktur umfasst, die zwischen dem Daumen (12) und dem Zeigefinger (14) und/oder dem Mittelfinger (15) eines Benutzers gegriffen werden kann, um eine Bewegung der Vorrichtung zu bewirken, wobei der Rücken (3) im Wesentlichen aufwärts von dem Basisabschnitt (2) hervorsteht;
- eine Daumeneingriffsfläche (4) an einer ersten lateralen Seite des Rückens (3);
- einen Daumenhalteabschnitt (11), der der Daumeneingriffsfläche (4) zugeordnet ist;
- eine Mittelfingerspitzeneingriffsfläche (6) auf einer zweiten lateralen Seite des Rückens (3) gegenüber der ersten lateralen Seite,
- eine Zeigefingerspitzeneingriffsfläche (5), die auf dem Rücken (3) oberhalb der Mittelfingerspitzeneingriffsfläche (6) angeordnet ist, und

**dadurch gekennzeichnet, dass** der Daumenhalteabschnitt (11) eine Lippe, einen Grat, einen Vorsprung oder eine erhöhte Kante aufweist, der bzw. die an einer gegenüberliegenden lateralen Seite (10) der Daumeneingriffsfläche (4) an dem Rücken (3) angeordnet ist, um den Daumen (12) eines Benutzers während der abwärtsgerichteten und/oder seitlichen Daumenbewegungen zu halten, wobei der Daumenhalteabschnitt (11) seitlichen Widerstand gegen die Bewegung des Daumens (12) auf der gegenüberliegenden Seite der Daumeneingriffsfläche (4) bereitstellen kann, so dass die Computerzeigevorrichtung (1) lediglich durch eine seitliche Bewegung des Daumens (12) gegen die Lippe, den Grat, den Vorsprung oder die erhöhte Kante (11) in einer Richtung weg von dem Rücken (3) bewegt werden kann und
die Computerzeigevorrichtung (1) mindestens zwei Kontaktsensoren (7, 8, 36) umfasst, die beide auf einer einzelnen Fingerspitzeneingriffsfläche (5) auf dem Rücken (3) angeordnet sind, wobei einer der Kontaktsensoren (7, 8, 36) rückwärts und bezüglich des anderen Kontaktsensors (7, 8, 36) erhöht angeordnet ist.

2. Computerzeigevorrichtung (1) nach Anspruch 1, die Folgendes umfasst:

- ein Bewegungssensorsystem, das eine Bewegung der Vorrichtung relativ zu einer Arbeitsfläche erfassen und Bewegungsinformationen der Vorrichtung erzeugen kann, und
- ein Kommunikationsmittel, das Bewegungsinformationen der Vorrichtung und Kontaktsensorsignale zu einem Computer und einem zugehörigen Bildschirm senden kann, um dem Computer jeweils Bildschirmzeigerbewegungs- und Eingabebefehlssignale bereitzustellen.

**3.** Computerzeigevorrichtung (1) nach Anspruch 1 oder Anspruch 2, wobei die untere Fläche im Wesentlichen eben oder mit einem oder mehreren konvexen Abschnitten ausgebildet ist.

**4.** Computerzeigevorrichtung (1) nach Anspruch 1 oder Anspruch 2, die so konfiguriert ist, dass die Computerzeigevorrichtung (1) auf der Arbeitsfläche ruhen kann, die auf einer Vielzahl von Kontaktstellen gestützt wird, die gemeinsam eine Kontaktebene definieren, wobei die Kontaktstellen Folgendes umfassen:

- einen oder mehrere Abschnitte der unteren Fläche und distale Abschnitte von mindestens zwei Vorsprüngen (21, 53), die sich von der Computerzeigevorrichtung (1) erstrecken, oder
- mindestens drei Vorsprünge (21, 53).

**5.** Computerzeigevorrichtung (1) nach einem der Ansprüche 1-4, wobei mindestens ein Teil der Daumeneingriffsfläche (4) aufwärts weist und einem Benutzer ermöglicht, einen abwärts gerichteten Druck auszuüben, um die Computerzeigevorrichtung (1) während der Aktivierung eines Kontaktsensors (7, 8, 36) zu stabilisieren.

**6.** Computerzeigevorrichtung (1) nach Anspruch 2, wobei das Kommunikationsmittel aus der Gruppe ausgewählt ist, die Folgendes umfasst:

- drahtloser Funksender;
- Infrarot-Sender;
- leitendes Kabel;
- akustischer Sender;
- Magnetfeld.

**7.** Computerzeigevorrichtung (1) nach Anspruch 2, wobei das Bewegungssensorsystem mindestens eines von Folgendem umfasst:

- elektro-optischer Sensor:
- elektromechanische Rollensensoren;
- bewegliche Spule und Magnetfeldstörungssensoren;
- Ultraschall-Triangulation.

**8.** Computerzeigevorrichtung (1) nach Anspruch 2, die **dadurch gekennzeichnet ist, dass** die Computerzeigevorrichtung eine Spitze (21, 53) umfasst, die von der Basis (2) hervorsteht, wobei die Spitze (21, 53) einen Kontaktsensor umfasst und wobei die Computerzeigevorrichtung (1) für folgende Betriebsarten konfiguriert ist:

- einen Zeigernavigationsmodus, wenn die untere Fläche des Basisabschnitts im Wesentlichen parallel zu der Arbeitsfläche angeordnet ist, wobei der Computer eine Bildschirmzeigerbewegung entsprechend den Bewegungsinformationen der Vorrichtung bereitstellt, und
- einen anderen Modus, der durch Kippen der Vorrichtung um die Spitze (21, 53) aktiviert wird, so dass die untere Fläche nicht-parallel zu der Arbeitsfläche angeordnet ist, so dass die Spitze (21, 53) die Arbeitsfläche berührt, um den Kontaktsensor der Spitze zu aktivieren.

**9.** Computerzeigevorrichtung (1) nach Anspruch 8, wobei die Spitze (21, 53) an oder benachbart zu einem Umfangsrand des Basisabschnitts (2) angeordnet ist.

**10.** Computerzeigevorrichtung (1) nach Anspruch 8 oder Anspruch 9, wobei die Spitze (21, 53) so positioniert und ausgerichtet ist, dass der distale Abschnitt der Spitze (21, 53) von der unteren Fläche der Computerzeigevorrichtung (1) angehoben ist, um den Kontakt mit der Arbeitsfläche im Zeigernavigationsmodus zu verhindern.

**11.** Computerzeigevorrichtung (1) nach einem der Ansprüche 8 bis 10, wobei der andere Modus ein Digitaltintenmodus ist, wobei der Computer eine entsprechende Bildschirmdarstellung der Bewegung der Vorrichtung ausgehend von den empfangenen Bewegungsinformationen der Vorrichtung bereitstellt.

**12.** Computerzeigevorrichtung (1) nach einem der Ansprüche 8 bis 10, wobei der andere Modus ein Bildlaufmodus ist, wobei der Computer eine entsprechende Bildschirm-Bildlaufbewegung ausgehend von den empfangenen Bewegungsinformationen der Vorrichtung bereitstellt.

**13.** Computerzeigevorrichtung (1) nach Anspruch 12, wobei die Bewegungsinformationen der Vorrichtung im Bildlaufmodus, die einer auf- oder abwärts gerichteten kurzen und schnellen Bewegung entsprechen, von dem Computer jeweils als Auf- oder Abwärtsbildlauf dargestellt werden.

**14.** Computerzeigevorrichtung (1) nach Anspruch 12 oder Anspruch 13, wobei die Bewegungsinformationen der Vorrichtung im Bildlaufmodus, die einem links oder rechts gerichteten Umblättern entsprechen, von dem Computer jeweils als Links- oder Rechtsbildlauf dargestellt werden.

**15.** Computerzeigevorrichtung (1) nach Anspruch 14, wobei durch den Links- oder Rechtsbildlauf ein Dokument, das auf dem Bildschirm angezeigt wird, um ein vom Benutzer definiertes Ausmaß bewegt wird, einschließlich des Bewegens einer Seite, welches den Vorgang des Blätterns der Seiten eines Buches symbolisiert.

## Revendications

1. Un dispositif de pointage informatique (1) comprenant :

    - une partie base (2) avec une surface inférieure adaptée de façon à glisser sur une surface de travail,
    - une partie arête (3), comprenant une structure verticale capable d'être saisie entre un pouce (12), un index (14) et/ou un majeur (15) d'un utilisateur de façon à effectuer un déplacement du dispositif, ladite arête (3) se projetant sensiblement vers le haut à partir de ladite partie base (2),
    - une surface de mise en prise du pouce (4) sur un premier côté latéral de l'arête (3),
    - une partie de retenue du pouce (11) associée à ladite surface de mise en prise du pouce (4),
    - une surface de mise en prise de la pointe du majeur (6) sur un deuxième côté latéral de l'arête (3) à l'opposé dudit premier côté latéral,
    - une surface de mise en prise de la pointe de l'index (5) positionnée sur l'arête (3) au-dessus de la surface de mise en prise de la pointe du majeur (6), et

    **caractérisé en ce que** la partie de retenue du pouce (11) comprend une lèvre, bordure, saillie ou bord élevé situé sur un côté latéral opposé (10) de ladite surface de mise en prise du pouce (4) à ladite arête (3) de façon à retenir un pouce (12) d'utilisateur au cours de déplacements du pouce latéraux et/ou vers le bas, la partie de retenue du pouce (11) étant capable de fournir une résistance latérale au déplacement du pouce (12) sur le côté opposé de la surface de mise en prise du pouce (4) de sorte que le dispositif de pointage informatique (1) soit capable d'être déplacé uniquement par un déplacement latéral du pouce (12) contre ladite lèvre, bordure, saillie ou bord élevé (11) dans une direction à l'écart de l'arête (3), et
    le dispositif de pointage informatique (1) comprend au moins deux capteurs de contact (7, 8, 36), les deux étant situés sur une surface de mise en prise de pointe de doigt individuelle (5) sur ladite arête (3), où l'un desdits capteurs de contact (7, 8, 36) est orienté vers l'arrière et en hauteur par rapport à l'autre capteur de contact (7, 8, 36).

2. Un dispositif de pointage informatique (1) selon la Revendication 1, comprenant :

    - un système de capteur de déplacement capable de détecter un déplacement du dispositif par rapport à une surface de travail et de générer des informations de déplacement de dispositif, et
    - un moyen de communication capable de communiquer des informations de déplacement de dispositif et des signaux de capteur de contact à un ordinateur et un écran d'affichage associé de façon à fournir respectivement des signaux de déplacement de pointeur à l'écran et des signaux de commande d'entrée audit ordinateur.

3. Un dispositif de pointage informatique (1) selon la Revendication 1 ou 2, où ladite surface inférieure est sensiblement plane ou configurée avec une ou plusieurs parties convexes.

4. Un dispositif de pointage informatique (1) selon la Revendication 1 ou 2, configuré de sorte que le dispositif de pointage informatique (1) soit capable de reposer sur ladite surface de travail soutenu sur une pluralité de points de contact définissant collectivement un plan de contact, lesdits points de contact comprenant soit :

    - une ou plusieurs parties de ladite surface inférieure et des parties distales d'au moins deux saillies (21, 53) s'étendant à partir du dispositif de pointage informatique (1), ou
    - au moins trois saillies (21, 53).

5. Un dispositif de pointage informatique (1) selon l'une quelconque des Revendications 1 à 4, où au moins une partie de ladite surface de mise en prise du pouce (4) est orientée vers le haut, permettant à un utilisateur d'appliquer une pression vers le bas de façon à stabiliser le dispositif de pointage informatique (1) au cours d'une activation d'un capteur de contact (7, 8, 36).

6. Un dispositif de pointage informatique (1) selon la Revendication 2, où ledit moyen de communication est sélectionné dans le groupe comprenant :

    - émetteur radio sans fil,
    - émetteur infrarouge,
    - fil conducteur,
    - émetteur acoustique,
    - champ magnétique.

7. Un dispositif de pointage informatique (1) selon la Revendication 2 où ledit système de capteur de déplacement comprend au moins un élément parmi :

    - capteur électro-optique,
    - capteurs à rouleau électromécaniques,
    - bobine de déplacement et capteurs de perturbation de champ magnétique,
    - triangulation ultrasonique.

**8.** Un dispositif de pointage informatique (1) selon la Revendication 2 **caractérisé en ce que** le dispositif de pointage informatique comprend une pointe (21, 53) faisant saillie à partir de la base (2), la pointe (21, 53) comprenant un capteur de contact et où le dispositif de pointage informatique (1) est configuré de façon à fonctionner dans :

  - un mode de navigation de pointeur lorsque la surface inférieure de la partie base est sensiblement parallèle à la surface de travail, l'ordinateur fournissant un déplacement de pointeur à l'écran correspondant auxdites informations de déplacement de dispositif, et
  - un mode différent activé par une inclinaison du dispositif à partir de ladite pointe (21, 53) de sorte que la surface inférieure soit non parallèle à la surface de travail de sorte que la pointe (21, 53) entre en contact avec la surface de travail de façon à activer le capteur de contact de la pointe.

**9.** Un dispositif de pointage informatique (1) selon la Revendication 8, où ladite pointe (21, 53) se situe sur ou adjacente à un bord périmétrique de la partie base (2).

**10.** Un dispositif de pointage informatique (1) selon la Revendication 8 ou 9, où la pointe (21, 53) est positionnée et orientée de sorte que la partie distale de la pointe (21, 53) soit soulevée à partir de la surface inférieure du dispositif de pointage informatique (1) de façon à empêcher un contact avec la surface de travail dans ledit mode de navigation de pointeur.

**11.** Un dispositif de pointage informatique (1) selon l'une quelconque des Revendications 8 à 10, où le mode différent est un mode à encre numérique, où l'ordinateur fournit une représentation à l'écran correspondante dudit déplacement de dispositif à partir des informations de déplacement de dispositif reçues.

**12.** Un dispositif de pointage informatique (1) selon l'une quelconque des Revendications 8 à 10, où le mode différent est un mode de défilement, où l'ordinateur fournit un déplacement de défilement à l'écran correspondant à partir des informations de déplacement de dispositif reçues.

**13.** Un dispositif de pointage informatique (1) selon la Revendication 12, où des informations de déplacement de dispositif dans ledit mode de défilement correspondant à une "pichenette" vers le haut ou vers le bas sont représentées par l'ordinateur sous la forme d'un défilement vers le haut ou vers le bas respectivement.

**14.** Un dispositif de pointage informatique (1) selon la Revendication 12 ou 13, où des informations de déplacement de dispositif dans ledit mode de défilement correspondant à une "chiquenaude" vers la droite ou vers la gauche sont représentées par l'ordinateur sous la forme d'un défilement vers la droite ou vers la gauche respectivement.

**15.** Un dispositif de pointage informatique (1) selon la Revendication 14, où ledit défilement vers la droite ou vers la gauche déplace un document affiché à l'écran d'une quantité définie par l'utilisateur, comprenant le déplacement d'une page symbolisant l'acte de feuilletage des pages d'un livre.

EP 1 869 541 B1

## Figure 1

Fig 1a

Fig 1b

Fig 1c

Fig 1d

Fig 1e

38

## Figure 1 (cont)

Fig 1f

Fig 1g

Fig 1h

Fig 1i

Fig 1j

Fig 2

Fig 3

Fig 4

Fig 5a

Fig 5b

Fig 6a

Fig 6b

Fig 6c

Fig 6d

Fig 6e

Fig 6f

EP 1 869 541 B1

Fig 7a

Fig 7b

43

Fig 8a

Fig 8b

21, 22

1

Fig 9a

21

1

22

Fig 9b

21

22

1

22

Fig 9c

Fig 10a

Fig 10b

Fig 10c

Fig 11a

Fig 11b

Fig 11c

Fig 11d

18

13

20

19

Fig 12a

13

14

15

12

Fig 12b

Fig 13a

Fig 13b

Fig 14a

Fig 14b

Fig 15a

Fig 15b

EP 1 869 541 B1

Fig 16 a-e

Fig 16f

52

EP 1 869 541 B1

Fig 17b

Fig 17a

53

Fig 18b

Fig 18a

Fig 19a

Fig 19b

Fig 19c

Fig 20a

Fig 20b

Fig 20c

Fig 20d

Fig 20e

Fig 20f

# Figure 21

a)

b)

## Figure 22

a)

b)

c)

## Figure 22 (cont)

d)

e)

# Figure 23

a)

b)

# Figure 24

a)

b)

## Figure 25

a)

## Figure 25 (cont)

b)

c)

63

EP 1 869 541 B1

Fig 26a

Fig 26b

Fig 27a

Fig 27b

Fig 27c

40

86

52

41

50

Fig 28a

86

52

41

50

Fig 28b

40

## Figure 28 (cont)

0,360

1

50

52

53

c)

0,360

1

50

52

53

d)

54

Fig 29

53

Fig 30a

Fig 30b

EP 1 869 541 B1

56

Fig 31

Fig 32

Figure 33

## Figure 34

70

72

## Figure 35

71

71

72

70

## Figure 36

## Figure 37

(a)

(b)

Figure 38

## Figure 39

## Figure 40

## Figure 41

Figure 42

a)

b)

c)

Figure 43

## Figure 43 (cont)

f)

EP 1 869 541 B1

EP 1 869 541 B1

Figure 44

79

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5576733 A
- US 6072471 A, Lo
- US 2000 A
- US 6300941 B, Segalle
- US 6664947 B, Vinogradov
- US 6362811 B, Edwards
- US 20020101401 A, Movahed
- US 20010006381 A, Wei
- US 6795058 B, Gordon
- US 20030160766 A, Gordon
- US 5648798 A, Hamling
- US 6853365 B, Reid
- US 5880715 A, Garrett
- WO 0184294 A